(19) Europäisches Patentamt
European Patent Office
Office européen des brevets

(11)  EP 4 213 404 A1

(12)  EUROPEAN PATENT APPLICATION
published in accordance with Art. 153(4) EPC

(43) Date of publication:
19.07.2023  Bulletin 2023/29

(51) International Patent Classification (IPC):
$H04B\ 7/06^{(2006.01)}$    $H04B\ 7/0417^{(2017.01)}$
$H04B\ 17/318^{(2015.01)}$    $H04B\ 17/391^{(2015.01)}$
$H04W\ 48/10^{(2009.01)}$    $H04W\ 4/42^{(2018.01)}$
$H04W\ 16/22^{(2009.01)}$    $H04J\ 11/00^{(2006.01)}$
$H04L\ 5/00^{(2006.01)}$    $H04L\ 27/26^{(2006.01)}$

(21) Application number: 21877946.0

(22) Date of filing: 05.10.2021

(52) Cooperative Patent Classification (CPC):
H04B 7/0417; H04B 7/06; H04B 17/318;
H04B 17/391; H04J 11/00; H04L 5/00; H04L 27/26;
H04W 4/42; H04W 16/22; H04W 48/10

(86) International application number:
PCT/KR2021/013609

(87) International publication number:
WO 2022/075695 (14.04.2022 Gazette 2022/15)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 06.10.2020  KR 20200129040
06.10.2020  KR 20200129041
11.05.2021  KR 20210060562

(71) Applicant: LG Electronics Inc.
Yeongdeungpo-gu
Seoul, 07336 (KR)

(72) Inventors:
• KIM, Kyuseok
Seoul 06772 (KR)
• KIM, Hyungtae
Seoul 06772 (KR)
• KANG, Jiwon
Seoul 06772 (KR)
• PARK, Haewook
Seoul 06772 (KR)

(74) Representative: Plasseraud IP
66, rue de la Chaussée d'Antin
75440 Paris Cedex 09 (FR)

(54)  **METHOD FOR TRANSMITTING AND RECEIVING CHANNEL STATE INFORMATION AND DEVICE FOR SAME IN WIRELESS COMMUNICATION SYSTEM**

(57)  Proposed are a method for transmitting and receiving channel state information and a device for same in a wireless communication system.

The method may comprise the steps of: receiving Channel State Information (CSI)-related configuration information from a base station, wherein the CSI-related configuration information includes CSI report configuration-related information and/or CSI resource configuration-related information, the CSI report configuration-related information includes usage information for a Doppler shift, and the CSI resource configuration-related information includes information about at least one CSI resource set corresponding to at least one downlink signal; and transmitting CSI including at least one Doppler shift-related value to the base station on the basis of the CSI-related configuration information.

[FIG. 15]

Start

Receive CSI-related configuration information from BS — S1501

Receive at least one downlink signal from BS based on CSI-related configuration information — S1502

Select at least one Doppler shift-related value based on at least one downlink signal — S1503

Transmit CSI including at least one Doppler shift-related value to BS — S1504

End

EP 4 213 404 A1

**Description**

[TECHNICAL FIELD]

The present disclosure relates to a wireless communication system, and more particularly to a method for transmitting and receiving channel state information in wireless communication system, and apparatus therefor.

[Background Art]

Mobile communication systems have been developed to provide a voice service while ensuring the activity of a user. However, in the mobile communication system, not only a voice, but also a data service is extended. At present, there is a shortage of resources due to an explosive increase in traffic, and users demand a higher speed service. As a result, a more advanced mobile communication system is required.
Requirements for a next-generation mobile communication system should be able to support the acceptance of explosive data traffic, a dramatic increase in the per-user data rate, the acceptance of a significant increase in the number of connected devices, very low end-to-end latency, and high-energy efficiency. To this end, various technologies are researched, which include dual connectivity, massive multiple input multiple output (MIMO), in-band full duplex, non-orthogonal multiple access (NOMA), super wideband support, device networking, and the like.

[Disclosure]

[Technical Problem]

The present disclosure proposes a method of pre-compensating a Doppler shift for downlink in a plurality of transmission and reception point (TRP) environments, and a device for the same.
In addition, the present disclosure proposes a method of reporting a Doppler shift through CSI reporting based on a downlink signal, and a device for the same.
Technical objects to be achieved by the present disclosure are not limited to the aforementioned technical objects, and other technical objects not described above may be evidently understood by a person having ordinary skill in the art to which the present disclosure pertains from the following description.

[Technical Solution]

The present disclosure proposes a method of transmitting and receiving channel state information (CSI) and a device for the same in a wireless communication system. The method performed by a UE may include: receiving Channel State Information (CSI)-related configuration information from a base station (BS), in which the CSI-related configuration information includes CSI report configuration-related information and/or CSI resource configuration-related information, the CSI report configuration-related information includes usage information for a Doppler shift, and the CSI resource configuration-related information includes information about at least one CSI resource set corresponding to at least one downlink signal; receiving, from the BS, the at least one downlink signal based on the CSI-related configuration information; determining at least one Doppler shift-related value based on the at least one downlink signal; and transmitting CSI including at least one Doppler shift-related value to the BS.
In addition, in the method of the present disclosure, the downlink signal may be a tracking reference signal (TRS) or a synchronization block (SSB).
In addition, in the method of the present disclosure, the at least one Doppler shift-related value may include a Doppler shift value normalized based on a subcarrier spacing corresponding to the TRS or the SSB.
In addition, in the method of the present disclosure, a range of the normalized Doppler shift value may be determined based on at least one of a carrier frequency, a numerology, and/or a maximum velocity.
In addition, in the method of the present disclosure, the CSI resource configuration-related information may include one CSI resource set.
In addition, the method of the present disclosure may further include receiving information on a correspondence relationship between CSI resource sets from the BS, and the other CSI resource set may be determined based on the correspondence relationship, and the at least one Doppler shift-related value may be an offset value between a Doppler shift value of a downlink signal corresponding to the one CSI resource set and a Doppler shift value of a downlink signal corresponding to the other CSI resource set.
In addition, the method of the present disclosure may further include receiving information on a reference downlink signal from the BS, and the at least one Doppler shift-related value may be an offset value between the Doppler shift value of the downlink signal corresponding to the one CSI resource set and the Doppler shift value of the reference downlink signal.

In addition, in the method of the present disclosure, the CSI resource configuration-related information may include two CSI resource sets, and the at least one Doppler shift-related value may be an offset value between a Doppler shift value of a downlink signal corresponding to one of the two CSI resource sets and a Doppler shift value of a downlink signal corresponding to the other one of the two CSI resource sets.

In addition, the method of the present disclosure may further include, in which, the CSI resource configuration-related information may include a plurality of CSI resource sets, receiving, from the BS, information for two CSI resource sets among the plurality of CSI resource sets, and the at least one Doppler shift-related value may be the offset value between the Doppler shift value of the downlink signal corresponding to one of the two CSI resource sets and the Doppler shift value of the downlink signal corresponding to the other one of the two CSI resource sets.

In addition, in the method of the present disclosure, the CSI including the at least one Doppler shift-related value may have a higher priority than CSI constituted by at least one of a channel quality indicator (CQI), a precoding matrix indicator (PMI), a channel state information-reference signal (CSI-RS) resource indicator (CRI), a synchronization signal/physical broadcast channel block (SS/PBCH block) resource indicator (SSBRI), a layer indicator (LI), a rank indicator (RI), and/or a layer 1-reference signal received power (L1-RSRP).

In addition, in the method of the present disclosure, the at least one Doppler shift-related value may include a Doppler shift value or an offset value of Doppler shift values for each receiving panel or each receiving beam.

In addition, a UE configured to transmit channel state information (CSI) in a wireless communication system may include: at least one transceiver; at least one processor; and at least one memory operatively connected to the at least one processor and storing instructions for performing operations based on being executed by the at least one processor, and the operations may include receiving Channel State Information (CSI)-related configuration information from a BS, wherein the CSI-related configuration information includes CSI report configuration-related information and/or CSI resource configuration-related information, the CSI report configuration-related information includes usage information for a Doppler shift, and the CSI resource configuration-related information includes information about at least one CSI resource set corresponding to at least one downlink signal; receiving, from the BS, the at least one downlink signal based on the CSI-related configuration information; determining at least one Doppler shift-related value based on the at least one downlink signal; and transmitting CSI including at least one Doppler shift-related value to the BS.

In addition, in the UE of the present disclosure, the downlink signal may be a tracking reference signal (TRS) or a synchronization block (SSB).

In addition, in the UE of the present disclosure, the at least one Doppler shift-related value may include a Doppler shift value normalized based on a subcarrier spacing corresponding to the TRS or the SSB.

In addition, in the UE of the present disclosure, a range of the normalized Doppler shift value may be determined based on at least one of a carrier frequency, a numerology, and/or a maximum velocity.

In addition, in the UE of the present disclosure, the CSI resource configuration-related information may include two CSI resource sets, and the at least one Doppler shift-related value may be an offset value between a Doppler shift value of a downlink signal corresponding to one of the two CSI resource sets and a Doppler shift value of a downlink signal corresponding to the other one of the two CSI resource sets.

In addition, the present disclosure proposes a method of receiving channel state information (CSI) and a device for the same in a wireless communication system. The method performed by a BS may include: transmitting Channel State Information (CSI)-related configuration information to a UE, in which the CSI-related configuration information includes CSI report configuration-related information and/or CSI resource configuration-related information, the CSI report configuration-related information includes usage information for a Doppler shift, and the CSI resource configuration-related information includes information about at least one CSI resource set corresponding to at least one downlink signal; transmitting, to the UE, the at least one downlink signal based on the CSI-related configuration information, wherein at least one Doppler shift-related value is determined based on the at least one downlink signal; and receiving, from the UE, CSI including the at least one Doppler shift-related value.

In addition, a BS configured to receive channel state information (CSI) in a wireless communication system may include: at least one transceiver; at least one processor; and at least one memory operatively connected to the at least one processor and storing instructions for performing operations based on being executed by the at least one processor, and the operations may include transmitting Channel State Information (CSI)-related configuration information to a UE, in which the CSI-related configuration information includes CSI report configuration-related information and/or CSI resource configuration-related information, the CSI report configuration-related information includes usage information for a Doppler shift, and the CSI resource configuration-related information includes information about at least one CSI resource set corresponding to at least one downlink signal; transmitting, to the UE, the at least one downlink signal based on the CSI-related configuration information, wherein at least one Doppler shift-related value is determined based on the at least one downlink signal; and receiving, from the UE, CSI including the at least one Doppler shift-related value.

In addition, a processing apparatus configured to control a UE to transmit channel state information (CSI) in a wireless communication system may include: at least one processor; and at least one memory operatively connected to the at least one processor and storing instructions for performing operations based on being executed by the at least one processor, and the operations may include receiving Channel State Information (CSI)-related configuration information from a BS, in which the CSI-related configuration information includes CSI report configuration-related information and/or CSI resource configuration-related information, the CSI report configuration-related information includes usage information for a Doppler shift, and the CSI resource configuration-related information includes information about at least one CSI resource set corresponding to at least one downlink signal; receiving, from the BS, the at least one downlink signal based on the CSI-related configuration information; determining at least one Doppler shift-related value based on the at least one downlink signal; and transmitting CSI including at least one Doppler shift-related value to the BS.

In addition, in a computer-readable storage medium storing at least one instruction which, when executed by at least one processor, causes the at least one processor to control operations according to the present disclosure, the operations may include: receiving Channel State Information (CSI)-related configuration information from a BS, in which the CSI-related configuration information includes CSI report configuration-related information and/or CSI resource configuration-related information, the CSI report configuration-related information includes usage information for a Doppler shift, and the CSI resource configuration-related information includes information about at least one CSI resource set corresponding to at least one downlink signal; transmitting Channel State Information (CSI)-related configuration information to a UE, wherein the CSI-related configuration information includes CSI report configuration-related information and/or CSI resource configuration-related information, the CSI report configuration-related information includes usage information for a Doppler shift, and the CSI resource configuration-related information includes information about at least one CSI resource set corresponding to at least one downlink signal; receiving, from the BS, the at least one downlink signal based on the CSI-related configuration information; determining at least one Doppler shift-related value based on the at least one downlink signal; and transmitting CSI including at least one Doppler shift-related value to the BS.

[Advantageous Effects]

According to the present disclosure, there is an effect that downlink performance can be enhanced by pre-compensating a Doppler shift for downlink in a plurality of TRP environments.

In addition, according to the present disclosure, there is an effect that by clarifying a Doppler shift reporting operation by CSI, ambiguity of an operation can be removed and at the same time, a low-latency high-reliability communication system can be implemented.

Effects which may be obtained by the present disclosure are not limited to the aforementioned effects, and other technical effects not described above may be evidently understood by a person having ordinary skill in the art to which the present disclosure pertains from the following description.

[Description of Drawings]

The accompany drawings, which are included to provide a further understanding of the present disclosure and are incorporated on and constitute a part of the present disclosure illustrate embodiments of the present disclosure and together with the description serve to explain the principles of the present disclosure.

FIG. 1 illustrates an example of an overall system structure of NR to which a method proposed by the present disclosure may be applied.

FIG. 2 illustrates a relationship between an uplink frame and a downlink frame in a wireless communication system to which the method proposed by the present disclosure may be applied.

FIG. 3 illustrates an example of a frame structure in an NR system.

FIG. 4 illustrates an example of a resource grid supported by a wireless communication system to which the method proposed by the present disclosure may be applied.

FIG. 5 illustrates a slot structure of an NR frame to which the method proposed by the present disclosure may be applied.

FIG. 6 illustrates examples of resource grids for each antenna port and numerology to which the method proposed by the present disclosure may be applied.

FIG. 7 illustrates physical channels and general signal transmission used in a 3GPP system.

FIG. 8 is a flowchart illustrating an example of a CSI-related procedure.

FIG. 9 is a flowchart illustrating an example of a TRS procedure.

FIG. 10 is a diagram for describing a reliability enhancement method using transmission in multiple TRPs.

FIG. 11 illustrates a simplified schematic diagram of the channel model.

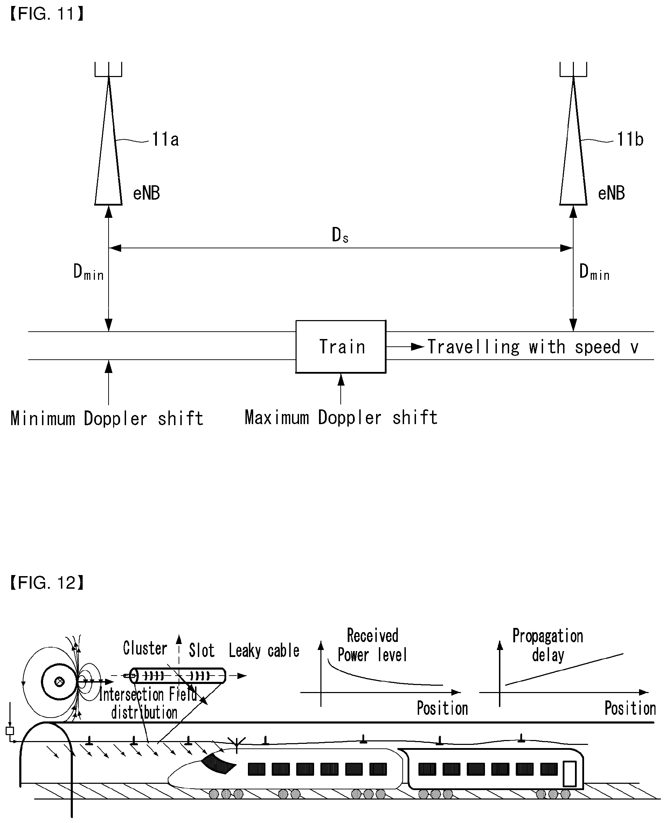

FIG. 11 illustrates a schematic diagram of the channel model.

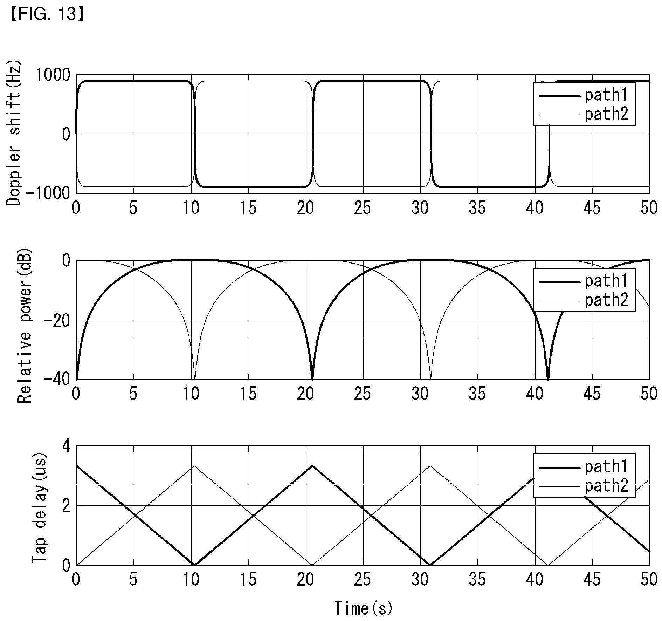

FIG. 13 illustrates examples of parameters and channel characteristics of the SFN channel model.

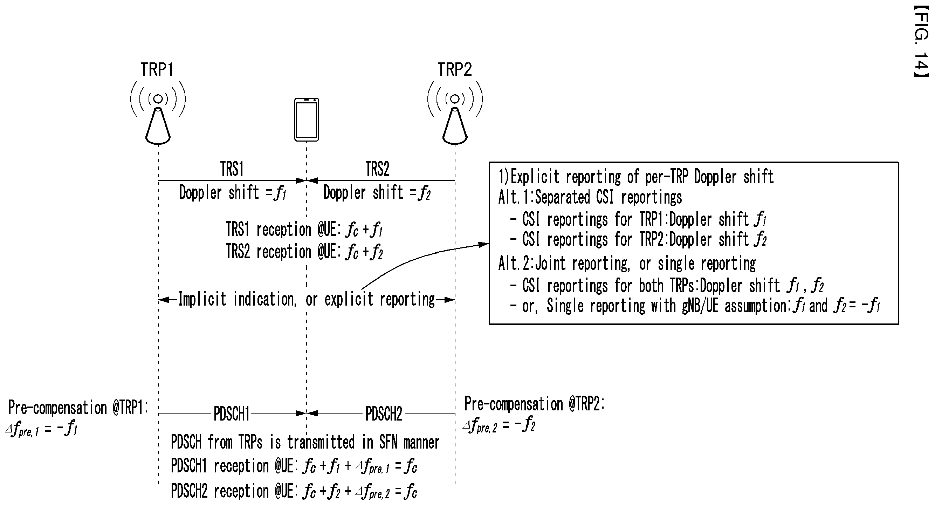

FIG. 14 illustrates an example of Doppler shift pre-compensation.

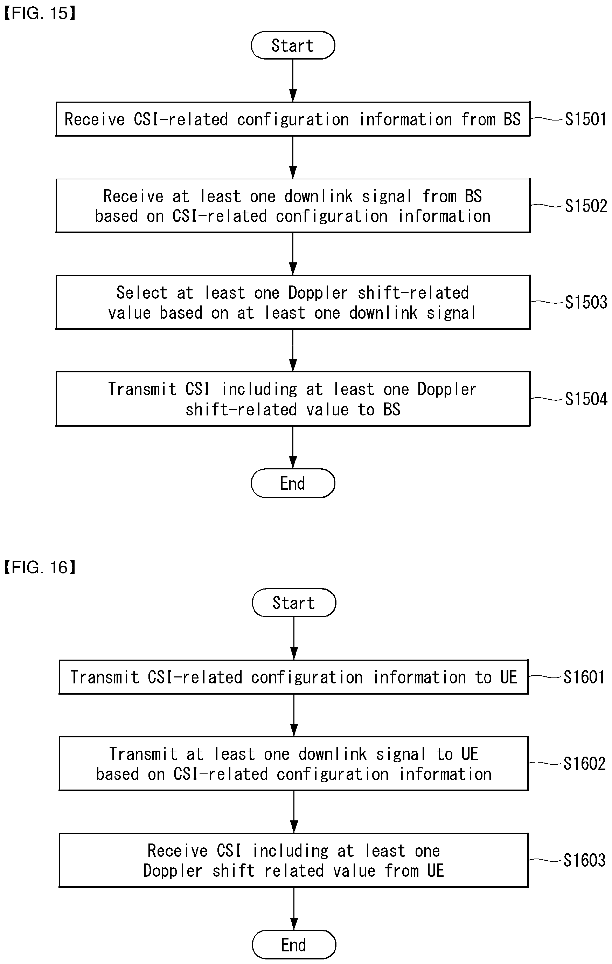

FIG. 15 is a flowchart for describing an operation method of a terminal proposed by the present disclosure.

FIG. 16 is a flowchart for describing an operation method of a base station proposed by the present disclosure.

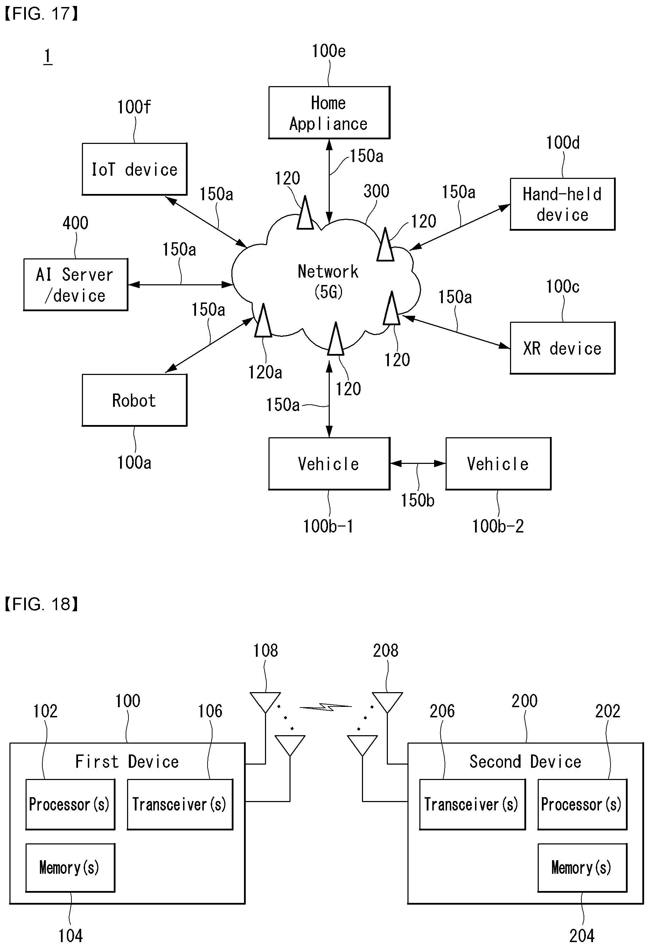

FIG. 17 illustrates a communication system 1 applied to the present disclosure.

FIG. 18 illustrates a wireless device which may be applied to the present disclosure.

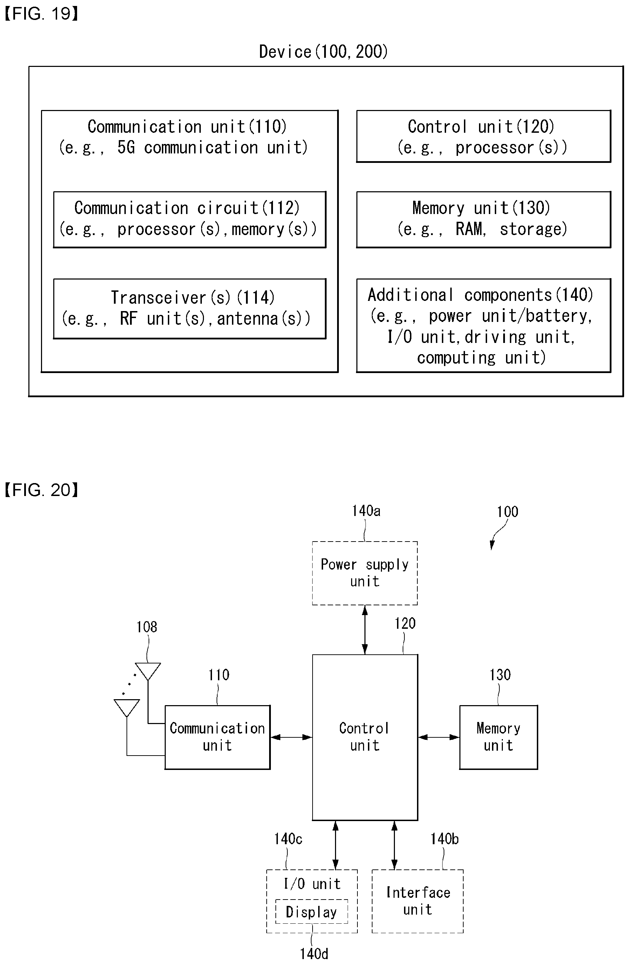

FIG. 19 illustrates another example of the wireless device applied to the present disclosure.

FIG. 20 illustrates a hand-held device applied to the present disclosure.

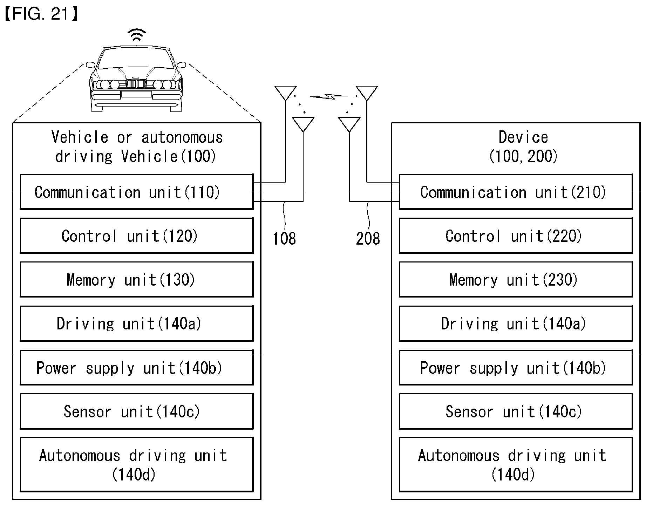

FIG. 21 illustrates a vehicle or autonomous vehicle applied to the present disclosure.

[Mode for Disclosure]

Reference will now be made in detail to embodiments of the present disclosure, examples of which are illustrated in the accompanying drawings. A detailed description to be disclosed below together with the accompanying drawing is to describe exemplary embodiments of the present disclosure and not to describe a unique embodiment for carrying out the present disclosure. The detailed description below includes details to provide a complete understanding of the present disclosure. However, those skilled in the art know that the present disclosure may be carried out without the details.

In some cases, in order to prevent a concept of the present disclosure from being ambiguous, known structures and devices may be omitted or illustrated in a block diagram format based on core functions of each structure and device.

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

The following technology may be used in various radio access system including CDMA, FDMA, TDMA, OFDMA, SC-FDMA, and the like. The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)/LTE-A pro is an evolved version of the 3GPP LTE. 3GPP NR (New Radio or New Radio Access Technology) is an evolved version of the 3GPP LTE/LTE-A/LTE-A pro.

For clarity of description, the technical spirit of the present disclosure is described based on the 3GPP communication system (e.g., LTE-A or NR), but the technical spirit of the present disclosure are not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system, "xxx" means a detailed standard document number. The LTE/NR may be collectively referred to as the 3GPP system. Matters disclosed in a standard document opened before the present disclosure may be referred to for a background art, terms, omissions, etc., used for describing the present disclosure. For example, the following documents may be referred to.

3GPP LTE

36.211: Physical channels and modulation

36.212: Multiplexing and channel coding

36.213: Physical layer procedures

36.300: Overall description

36.331: Radio Resource Control (RRC)

3GPP NR

38.211: Physical channels and modulation

38.212: Multiplexing and channel coding
38.213: Physical layer procedures for control
38.214: Physical layer procedures for data
38.300: NR and NG-RAN Overall Description
38.331: Radio Resource Control (RRC) protocol specification

As more and more communication devices require larger communication capacity, there is a need for improved mobile broadband communication compared to the existing radio access technology (RAT). Further, massive machine type communications (MTCs), which provide various services anytime and anywhere by connecting many devices and objects, are one of the major issues to be considered in the next generation communication. In addition, a communication system design considering a service/UE sensitive to reliability and latency is being discussed. The introduction of next generation radio access technology considering enhanced mobile broadband communication (eMBB), massive MTC (mMTC), ultra-reliable and low latency communication (URLLC) is discussed, and in the present disclosure, the technology is called new RAT for convenience. The NR is an expression representing an example of 5G radio access technology (RAT).

Three major requirement areas of 5G include (1) an enhanced mobile broadband (eMBB) area, (2) a massive machine type communication (mMTC) area and (3) an ultra-reliable and low latency communications (URLLC) area.

Some use cases may require multiple areas for optimization, and other use case may be focused on only one key performance indicator (KPI). 5G support such various use cases in a flexible and reliable manner.

eMBB is far above basic mobile Internet access and covers media and entertainment applications in abundant bidirectional tasks, cloud or augmented reality. Data is one of key motive powers of 5G, and dedicated voice services may not be first seen in the 5G era. In 5G, it is expected that voice will be processed as an application program using a data connection simply provided by a communication system. Major causes for an increased traffic volume include an increase in the content size and an increase in the number of applications that require a high data transfer rate. Streaming service (audio and video), dialogue type video and mobile Internet connections will be used more widely as more devices are connected to the Internet. Such many application programs require connectivity always turned on in order to push real-time information and notification to a user. A cloud storage and application suddenly increases in the mobile communication platform, and this may be applied to both business and entertainment. Furthermore, cloud storage is a special use case that tows the growth of an uplink data transfer rate. 5G is also used for remote business of cloud. When a tactile interface is used, further lower end-to-end latency is required to maintain excellent user experiences. Entertainment, for example, cloud game and video streaming are other key elements which increase a need for the mobile broadband ability. Entertainment is essential in the smartphone and tablet anywhere including high mobility environments, such as a train, a vehicle and an airplane. Another use case is augmented reality and information search for entertainment. In this case, augmented reality requires very low latency and an instant amount of data.

Furthermore, one of the most expected 5G use case relates to a function capable of smoothly connecting embedded sensors in all fields, that is, mMTC. Until 2020, it is expected that potential IoT devices will reach 20.4 billion. The industry IoT is one of areas in which 5G performs major roles enabling smart city, asset tracking, smart utility, agriculture and security infra.

URLLC includes a new service which will change the industry through remote control of major infra and a link having ultra-reliability/low available latency, such as a self-driving vehicle. A level of reliability and latency is essential for smart grid control, industry automation, robot engineering, drone control and adjustment.

Multiple use cases are described more specifically.

5G may supplement fiber-to-the-home (FTTH) and cable-based broadband (or DOCSIS) as means for providing a stream evaluated from gigabits per second to several hundreds of mega bits per second. Such fast speed is necessary to deliver TV with resolution of 4K or more (6K, 8K or more) in addition to virtual reality and augmented reality. Virtual reality (VR) and augmented reality (AR) applications include immersive sports games. A specific application program may require a special network configuration. For example, in the case of VR game, in order for game companies to minimize latency, a core server may need to be integrated with the edge network server of a network operator.

An automotive is expected to be an important and new motive power in 5G, along with many use cases for the mobile communication of an automotive. For example, entertainment for a passenger requires a high capacity and a high mobility mobile broadband at the same time. The reason for this is that future users continue to expect a high-quality connection regardless of their location and speed. Another use example of the automotive field is an augmented reality dashboard. The augmented reality dashboard overlaps and displays information, identifying an object in the dark and notifying a driver of the distance and movement of the object, over a thing seen by the driver through a front window. In the future, a wireless module enables communication between automotives, information exchange between an automotive and a supported infrastructure, and information exchange between an automotive and other connected devices (e.g., devices accompanied by a pedestrian). A safety system guides alternative courses of a behavior so that a driver may drive more safely, thereby reducing a danger of an accident. A next step will be a remotely controlled or self-driven vehicle. This requires very reliable, very fast communication between different self-driven vehicles and between an automotive and infra. In the future, a self-driven vehicle may perform all driving activities, and a driver will be focused on things other than traffic, which cannot be identified by an automotive itself. Technical requirements of a self-driven vehicle require ultra-low latency and ultra-high speed reliability so that traffic safety is increased up to a level which cannot be achieved by a person.

A smart city and smart home mentioned as a smart society will be embedded as a high-density radio sensor network. The distributed network of intelligent sensors will identify the cost of a city or home and a condition for energy-efficient maintenance. A similar configuration may be performed for each home. All of a temperature sensor, a window and heating controller, a burglar alarm and home appliances are wirelessly connected. Many of such sensors are typically a low data transfer rate, low energy and a low cost. However, for example, real-time HD video may be required for a specific type of device for surveillance.

The consumption and distribution of energy including heat or gas are highly distributed and thus require automated control of a distributed sensor network. A smart grid collects information, and interconnects such sensors using digital information and a communication technology so that the sensors operate based on the information. The information may include the behaviors of a supplier and consumer, and thus the smart grid may improve the distribution of fuel, such as electricity, in an efficient, reliable, economical, production-sustainable and automated manner. The smart grid may be considered to be another sensor network having small latency.

A health part owns many application programs which reap the benefits of mobile communication. A communication system may support remote treatment providing clinical treatment at a distant place. This helps to reduce a barrier for the distance and may improve access to medical services which are not continuously used at remote farming areas. Furthermore, this is used to save life in important treatment and an emergency condition. A radio sensor network based on mobile communication may provide remote monitoring and sensors for parameters, such as the heart rate and blood pressure.

Radio and mobile communication becomes increasingly important in the industry application field. Wiring requires a high installation and maintenance cost. Accordingly, the possibility that a cable will be replaced with reconfigurable radio links is an attractive opportunity in many industrial fields. However, to achieve the possibility requires that a radio connection operates with latency, reliability and capacity similar to those of the cable and that management is simplified. Low latency and a low error probability is a new requirement for a connection to 5G.

Logistics and freight tracking is an important use case for mobile communication, which enables the tracking inventory and packages anywhere using a location-based information system. The logistics and freight tracking use case typically requires a low data speed, but a wide area and reliable location information.

In a new RAT system including NR uses an OFDM transmission scheme or a similar transmission scheme thereto. The new RAT system may follow OFDM parameters different from OFDM parameters of LTE. Alternatively, the new RAT system may follow numerology of conventional LTE/LTE-A as it is or have a larger system bandwidth (e.g., 100 MHz). Alternatively, one cell may support a plurality of numerologies. In other words, UEs that operate with different numerologies may coexist in one cell.

The numerology corresponds to one subcarrier spacing in a frequency domain. Different numerologies may be defined by scaling reference subcarrier spacing to an integer N.

Definition of terms

eLTE eNB: The eLTE eNB is the evolution of eNB that supports connectivity to EPC and NGC.

gNB: A node which supports the NR as well as connectivity to NGC.

New RAN: A radio access network which supports either NR or E-UTRA or interfaces with the NGC.

Network slice: A network slice is a network created by the operator customized to provide an optimized solution for a specific market scenario which demands specific requirements with end-to-end scope.

Network function: A network function is a logical node within a network infrastructure that has well-defined external interfaces and well-defined functional behavior.

NG-C: A control plane interface used on NG2 reference points between new RAN and NGC.

NG-U: A user plane interface used on NG3 references points between new RAN and NGC.

Non-standalone NR: A deployment configuration where the gNB requires an LTE eNB as an anchor for control plane connectivity to EPC, or requires an eLTE eNB as an anchor for control plane connectivity to NGC.

Non-standalone E-UTRA: A deployment configuration where the eLTE eNB requires a gNB as an anchor for control plane connectivity to NGC.

User plane gateway: A termination point of NG-U interface.

Overview of system

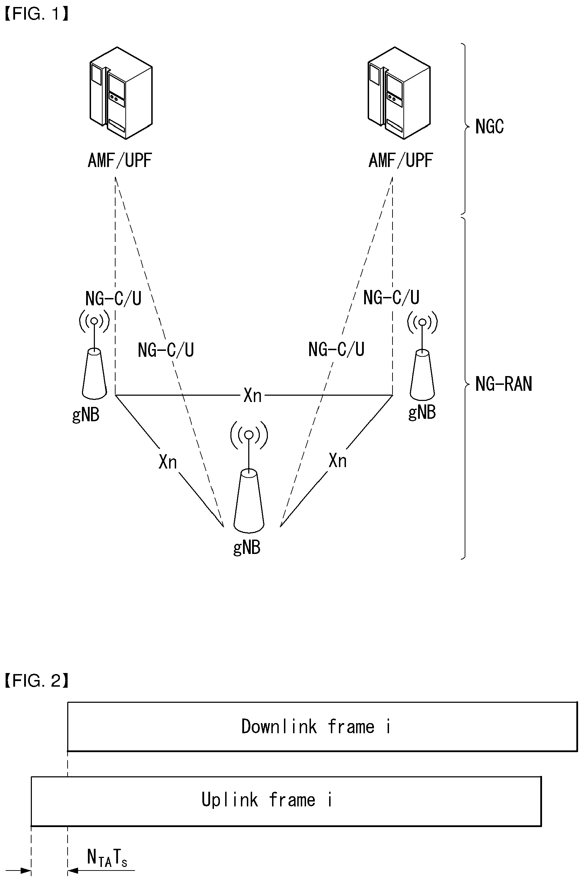

FIG. 1 illustrates an example of an overall structure of a NR system to which a method proposed in the present disclosure is applicable.

Referring to FIG. 1, an NG-RAN consists of gNBs that provide an NG-RA user plane (new AS sublayer/PDCP/RLC/MAC/PHY) and control plane (RRC) protocol terminations for a user equipment (UE).

The gNBs are interconnected with each other by means of an Xn interface.

The gNBs are also connected to an NGC by means of an NG interface.

More specifically, the gNBs are connected to an access and mobility management function (AMF) by means of an N2 interface and to a user plane function (UPF) by means of an N3 interface.

New Rat (NR) Numerology and Frame Structure

In the NR system, multiple numerologies may be supported. The numerologies may be defined by subcarrier spacing and a CP (Cyclic Prefix) overhead. Spacing between the plurality of subcarriers may be derived by scaling basic subcarrier spacing into an integer N (or $\mu$). In addition, although a very low subcarrier spacing is assumed not to be used at a very high subcarrier frequency, a numerology to be used may be selected independent of a frequency band.

In addition, in the NR system, a variety of frame structures according to the multiple numerologies may be supported.

Hereinafter, an orthogonal frequency division multiplexing (OFDM) numerology and a frame structure, which may be considered in the NR system, will be described.

A plurality of OFDM numerologies supported in the NR system may be defined as in Table 1.

[Table 1]

| $\mu$ | $\Delta f = 2^{\mu} \cdot 15$ [kHz] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

The NR supports multiple numerologies (or subcarrier spacing (SCS)) for supporting various 5G services. For example, when the SCS is 15 kHz, a wide area in traditional cellular bands is supported and when the SCS is 30 kHz/60 kHz, dense-urban, lower latency, and wider carrier bandwidth are supported, and when the SCS is more than 60 kHz, a bandwidth larger than 24.25 GHz is supported in order to overcome phase noise.

An NR frequency band is defined as frequency ranges of two types (FR1 and FR2). FR1 and FR2 may be configured as shown in Table 2 below. Further, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in the NR system, a size of various fields in the time domain is expressed as a multiple of a time unit of $T_s = 1/(\Delta f_{max} \cdot N_f)$. In this case, $\Delta f_{max} = 480 \cdot 10^3$, and $N_f = 4096$. DL and UL transmission is configured as a radio frame having a section of $T_f = (\Delta f_{max} N_f/100) \cdot T_s = 10$ms. The radio frame is composed of ten subframes each having a section of $T_{sf} = (\Delta f_{max} N_f/1000) \cdot T_s = 1$ms. In this case, there may be a set of UL frames and a set of DL frames.

FIG. 2 illustrates a relation between an uplink frame and a downlink frame in a wireless communication system to which a method proposed in the present disclosure is applicable.

As illustrated in FIG. 2, uplink frame number i for transmission from a user equipment (UE) shall start $T_{TA} = N_{TA}T_s$ before the start of a corresponding downlink frame at the corresponding UE.

Regarding the numerology $\mu$, slots are numbered in increasing order of $n_s^{\mu} \in \left\{ 0,...., N_{\text{subframe}}^{\text{slots},\mu} -1 \right\}$ within a subframe and are numbered in increasing order of $n_{s,f}^{\mu} \in \left\{ 0,..., N_{\text{frame}}^{\text{slots},\mu} -1 \right\}$ within a radio frame. One slot consists of consecutive OFDM symbols of $N_{\text{symb}}^{\mu}$, and $N_{\text{symb}}^{\mu}$ is determined depending on a numerology used and slot configuration. The start of slots $n_s^{\mu}$ in a subframe is aligned in time with the start of OFDM symbols $n_s^{\mu} N_{\text{symb}}^{\mu}$ in the same subframe.

Not all UEs are able to transmit and receive at the same time, and this means that not all OFDM symbols in a downlink slot or an uplink slot are available to be used.

Table 3 represents the number $N_{\text{symb}}^{\text{slot}}$ of OFDM symbols per slot, the number $N_{\text{slot}}^{\text{frame},\mu}$ of slots per radio frame, and the number $N_{\text{slot}}^{\text{subframe},\mu}$ of slots per subframe in a normal CP. Table 4 represents the number of OFDM symbols per slot, the number of slots per radio frame, and the number of slots per subframe in an extended CP.

[Table 3]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

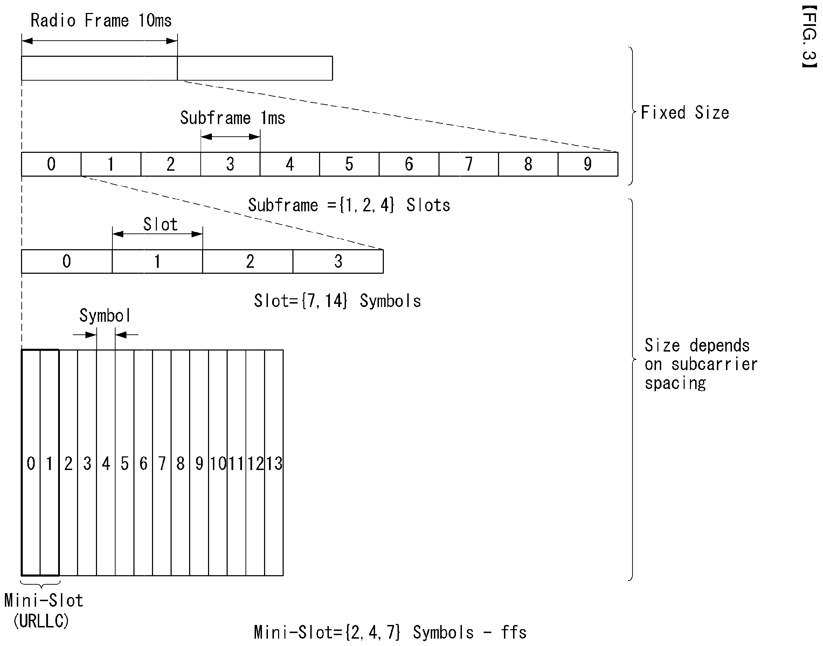

FIG. 3 illustrates an example of a frame structure in a NR system. FIG. 3 is merely for convenience of explanation and does not limit the scope of the present disclosure.

In Table 4, in case of $\mu$ =2, i.e., as an example in which a subcarrier spacing (SCS) is 60 kHz, one subframe (or frame) may include four slots with reference to Table 3, and one subframe = {1, 2, 4} slots shown in FIG. 3, for example, the number of slot(s) that may be included in one subframe may be defined as in Table 3.

Further, a mini-slot may consist of 2, 4, or 7 symbols, or may consist of more symbols or less symbols.

In regard to physical resources in the NR system, an antenna port, a resource grid, a resource element, a resource block, a carrier part, etc. May be considered.

Hereinafter, the above physical resources that may be considered in the NR system are described in more detail.

First, in regard to an antenna port, the antenna port is defined so that a channel over which a symbol on an antenna port is conveyed may be inferred from a channel over which another symbol on the same antenna port is conveyed. When large-scale properties of a channel over which a symbol on one antenna port is conveyed may be inferred from a channel over which a symbol on another antenna port is conveyed, the two antenna ports may be regarded as being in a quasi co-located or quasi co-location (QC/QCL) relation. Here, the large-scale properties may include at least one of delay spread, Doppler spread, frequency shift, average received power, and received timing.

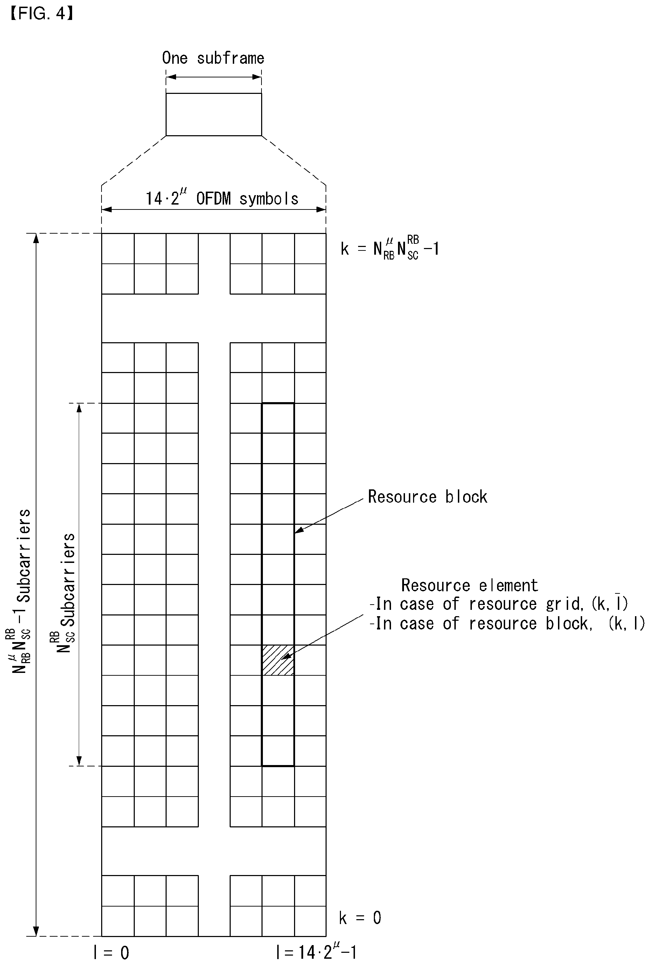

FIG. 4 illustrates an example of a resource grid supported in a wireless communication system to which a method proposed in the present disclosure is applicable.

Referring to FIG. 4, a resource grid consists of $N_{\text{RB}}^{\mu} N_{\text{sc}}^{\text{RB}}$ subcarriers on a frequency domain, each subframe consisting of 14·2$\mu$ OFDM symbols, but the present disclosure is not limited thereto.

Referring to FIG. 4, a resource grid consists of $N_{RB}^{\mu} N_{sc}^{RB}$ subcarriers on a frequency domain, each subframe consisting of $14 \cdot 2^{\mu}$ OFDM symbols, but the present disclosure is not limited thereto.

In the NR system, a transmitted signal is described by one or more resource grids, consisting of $N_{RB}^{\mu} N_{sc}^{RB}$ subcarriers, and $2^{\mu} N_{symb}^{(\mu)}$ OFDM symbols, where $N_{RB}^{\mu} \leq N_{RB}^{max,\mu}$. $N_{RB}^{max,\mu}$ denotes a maximum transmission bandwidth and may change not only between numerologies but also between uplink and downlink.

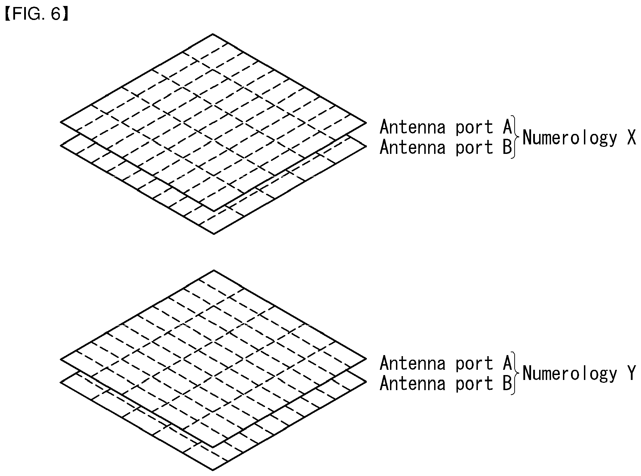

In this case, as illustrated in FIG. 6, one resource grid may be configured per numerology $\mu$ and antenna port p.

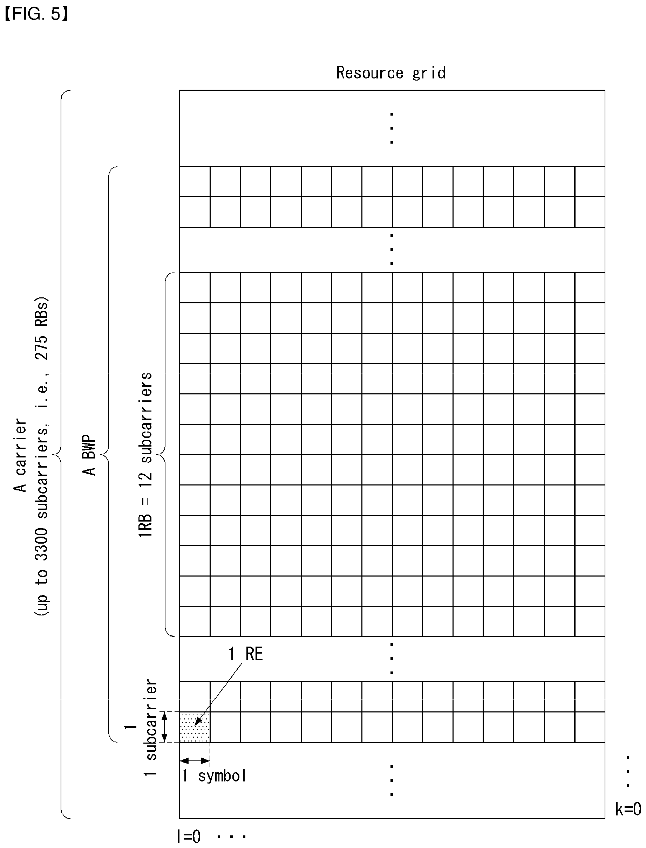

FIG. 5 illustrates a slot structure of an NR frame to which the method proposed in the present disclosure may be applied.

A slot includes a plurality of symbols in the time domain. For example, in the case of a normal CP, one slot includes 7 symbols, but in the case of an extended CP, one slot includes 6 symbols. A carrier includes a plurality of subcarriers in the frequency domain. A resource block (RB) is defined as a plurality of (e.g., 12) contiguous subcarriers in the frequency domain. A bandwidth part (BWP) is defined as a plurality of contiguous (P)RBs in the frequency domain, and may correspond to one numerology (e.g., SCS, CP length, etc.). The carrier may include up to N (e.g., 5) BWPs. Data communication may be performed through the activated BWP, and only one BWP may be activated for one terminal. Each element in the resource grid may be referred to as a resource element (RE), and one complex symbol may be mapped.

FIG. 6 illustrates examples of a resource grid per antenna port and numerology to which a method proposed in the disclosure is applicable.

Each element of the resource grid for the numerology $\mu$ and the antenna port p is called a resource element and is uniquely identified by an index pair $(k,\bar{l})$, where $k = 0,...,N_{RB}^{\mu} N_{sc}^{RB} - 1$ is an index on a frequency domain, and $\bar{l} = 0,...,2^{\mu} N_{symb}^{(\mu)} - 1$ refers to a location of a symbol in a subframe. The index pair $(k,l)$ is used to refer to a resource element in a slot, where $l = 0,...,N_{symb}^{\mu} - 1$.

The resource element $(k,\bar{l})$ for the numerology $\mu$ and the antenna port p corresponds to a complex value $a_{k,\bar{l}}^{(p,\mu)}$. When there is no risk for confusion or when a specific antenna port or numerology is not specified, the indices p and $\mu$ may be dropped, and as a result, the complex value may be $a_{k,\bar{l}}^{(p)}$ or $a_{k,\bar{l}}$.

Further, a physical resource block is defined as $N_{sc}^{RB} = 12$ consecutive subcarriers in the frequency domain.

Point A serves as a common reference point of a resource block grid and may be obtained as follows.

- offsetToPointA for PCell downlink represents a frequency offset between the point A and a lowest subcarrier of a lowest resource block that overlaps a SS/PBCH block used by the UE for initial cell selection, and is expressed in units of resource blocks assuming 15 kHz subcarrier spacing for FR1 and 60 kHz subcarrier spacing for FR2;
- absoluteFrequencyPointA represents frequency-location of the point A expressed as in absolute radio-frequency channel number (ARFCN);

The common resource blocks are numbered from 0 and upwards in the frequency domain for subcarrier spacing configuration $\mu$.

The center of subcarrier 0 of common resource block 0 for the subcarrier spacing configuration $\mu$ coincides with "point A". A common resource block number $n_{CRB}^{\mu}$ in the frequency domain and resource elements (k, l) for the subcarrier spacing configuration $\mu$ may be given by the following Equation 1.

[Equation 1]

$$n_{CRB}^{\mu} = \left\lfloor \frac{k}{N_{sc}^{RB}} \right\rfloor$$

Here, *k* may be defined relative to the point A so that *k* = 0 corresponds to a subcarrier centered around the point A. Physical resource blocks are defined within a bandwidth part (BWP) and are numbered from 0 to $N_{\mathrm{BWP},i}^{\mathrm{size}} - 1$ , where *i* is No. Of the BWP. A relation between the physical resource block $n_{\mathrm{PRB}}$ in BWP *i* and the common resource block $n_{\mathrm{CRB}}$ may be given by the following Equation 2.

[Equation 2]

$$n_{\mathrm{CRB}} = n_{\mathrm{PRB}} + N_{\mathrm{BWP},i}^{\mathrm{start}}$$

Here, $N_{\mathrm{BWP},i}^{\mathrm{start}}$ may be the common resource block where the BWP starts relative to the common resource block 0.

**Bandwidth part (BWP)**

The NR system may support up to 400 MHz per component carrier (CC). If a UE which operates in wideband CC operates while continuously turning on RF for all CCs, UE battery consumption may increase. Alternatively, when several use cases (e.g., eMBB, URLLC, mMTC, etc.) which operate in one wideband CC are considered, different numerologies (e.g., sub-carrier spacing) may be supported for each frequency band in the corresponding CC. Alternatively, a capability for the maximum bandwidth may vary for each UE. By considering this, the BS may instruct the UE to operate only in a partial bandwidth rather than the entire bandwidth of the wideband CC and defines the corresponding partial bandwidth as the bandwidth part (BWP) for convenience. The BWP may be constituted by consecutive resource blocks (RBs) on the frequency axis and may correspond to one numerology (e.g., sub-carrier spacing, CP length, slot/mini-slot duration).

Meanwhile, the eNB may configure multiple BWPs even in one CC configured to the UE. As one example, a BWP occupying a relatively small frequency domain may be configured in a PDCCH monitoring slot and a PDSCH indicated in PDCCH may be scheduled onto a BWP larger therethan. Alternatively, when UEs are concentrated on a specific BWP, some UEs may be configured to other BWPs for load balancing. Alternatively, a partial spectrum of the entire bandwidth may be excluded and both BWPs may be configured even in the same slot by considering frequency domain inter-cell interference cancellation between neighboring cells. In other words, the eNB may configure at least one DL/UL BWP to the UE associated with the wideband CC and activate at least one DL/UL BWP (by L1 signaling or MAC CE or RRC signaling) among configured DL/UL BWP(s) at a specific time and switching may be indicated to another configured DL/UL BWP (by L1 signaling or MAC CE or RRC signaling) or when a timer value is expired based on a timer, the timer value may be switched to the DL/UL BWP. In this case, the activated DL/UL BWP is defined as an active DL/UL BWP. However, in a situation in which the UE is in an initial access process or before RRC connection is set up, the UE may not receive a configuration for the DL/UL BWP and in such a situation, the DL/UL BWP assumed by the UE is defined as an initial active DL/UL BWP.

**Physical Channel and General Signal Transmission**

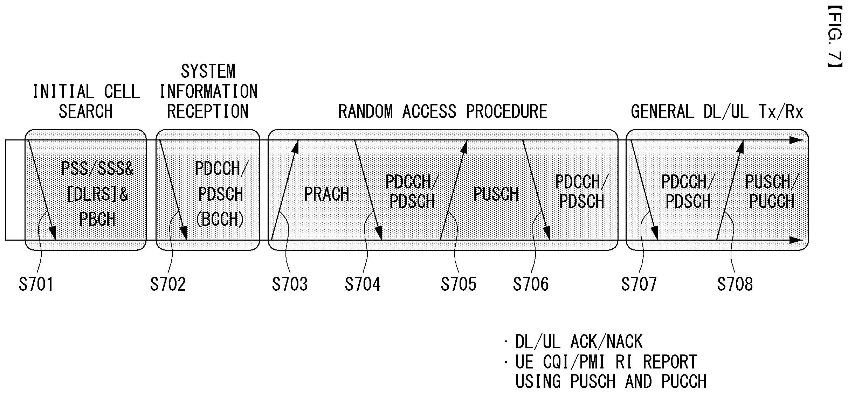

FIG. 7 illustrates physical channels and general signal transmission. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S701). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. Meanwhile, the UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S702).

Meanwhile, when there is no radio resource first accessing the eNB or for signal transmission, the UE may perform a Random Access Procedure (RACH) to the eNB (S703 to S706). To this end, the UE may transmit a specific sequence to a preamble through a Physical Random Access Channel (PRACH) (S703 and S705) and receive a response message (Random Access Response (RAR) message) for the preamble through the PDCCH and a corresponding PDSCH. In the case of a contention based RACH, a Contention Resolution Procedure may be additionally performed (S706).

The UE that performs the above procedure may then perform PDCCH/PDSCH reception (S707) and Physical Uplink Shared Channel (PUSCH)/Physical Uplink Control Channel (PUCCH) transmission (S708) as a general uplink/downlink signal transmission procedure. In particular, the UE may receive Downlink Control Information (DCI) through the PDCCH. Here, the DCI may include control information such as resource allocation information for the UE and formats may be differently applied according to a use purpose.

Meanwhile, the control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

QCL(Quasi-Co Location)

The antenna port is defined so that a channel in which the symbol on the antenna port is transported may be inferred from a channel in which different symbols on the same antenna port are transported. When a property of a channel in which a symbol on one antenna port is transported may be interred from a channel in which symbols on different antenna ports are transported, two antenna ports may have a quasi co-located or quasi co-location (QC/QCL) relationship.

Here, the channel property includes at least one of a delay spread, a Doppler spread, a frequency/Doppler shift, average received power, received timing/average delay, and a spatial Rx parameter. Here, the spatial Rx parameter means a spatial (receive) channel property parameter such as angle of arrival.

The UE may be configured as a list of up to M TCI-State conFIgurations in higher layer parameter PDSCH-ConFIG in order to decode the PDSCH according to detected PDCCH having an intended DCI for the corresponding UE and a given serving cell. The M depends on a UE capability.

Each TCI-State includes a parameter for conFIguring a quasi co-location relationship between one or two DL reference signals and a DM-RS port of the PDSCH.

The quasi co-location relationship is configured as higher layer parameter qcl-Type1 for a first DL RS and qcl-Type2 (when configured) for a second DL RS. Two DL RSs are not the same as each other in terms of QCL type regardless of whether two DL RS are DL RSs having the same reference or DL RSs having different references.

A quasi co-location type corresponding to each DL RS may be given by higher layer parameter qcl-Type of QCL-Info and may take one of the following values:

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is specific NZP CSI-RS, corresponding NZP CSI-RS antenna ports may be indicated/configured to be QCL with specific TRS from the viewpoint of QCL-Type A and specific SSB from the viewpoint of QCL-Type D. The UE that receives the indication/conFIguration may receive the corresponding NZP CSI-RS by using a Doppler delay value measured in QCL-TypeA TRS and apply an Rx beam used for receiving QCL-TypeD SSB to reception of the corresponding NZP CSI-RS.

The UE may receive an activation command by MAC CE signaling used to map up to 8 TCI states to the codepoint of the DCI field 'Transmission Configuration Indication' in each of one CC/DL BWP or in a set of CCs/DL BWPs. When a set of TCI state IDs is activated for the set of CCs/DL BWPs, the list of applicable CCs is determined by the CC indicated in the activation command, and the same set of TCI state IDs may be applied to all indicated DL BWPs.

When the UE supports two TCI states in the codepoint of the DCI field 'Transmission Configuration Indication', the UE may receive the activation command as described in a predefined standard (e.g., 3GPP TS 38.321, section 6.1.3.24), and the activation command may be used to map up to 8 combinations of one or two TCI states to the codepoint of the DCI field 'Transmission Configuration Indication'. The UE does not expect to receive 8 or more TCI states in the activation command.

When the UE transmits the PUCCH including HARQ-ACK information in slot n corresponding to the PDSCH carrying the activation command, the indicated mapping between the TCI state and the codepoint of the DCI field 'Transmission Configuration Indication' should be able to be applied from the first slot after slot $n + 3N_{slot}^{subframe,\mu}$. Here, · is the SCS configuration for PUCCH. When tci-PresentInDCI is configured to "enabled" or tci-PresentInDCI-ForFormat1_2 is configured for CORESET scheduling the PDSCH and a time offset between DL DCI reception and the corresponding PDSCH is equal to or greater than timeDurationForQCL, after the UE receives an initial higher layer configuration of TCI states and before the UE receives the activation command , the UE may assume that the DM-RS port of the PDSCH of the serving cell is co-located with the SS/PBCH block determined in the initial access procedure for 'QCL-TypeA'. And, if applied, the same applies to 'QCL-TypeD'.

When the UE is configured with the higher layer parameter tci-PresentInDCI configured to 'enabled' for the CORESET scheduling the PDSCH, the UE may assume that the TCI field exists in DCI format 1_1 of the PDCCH transmitted in the CORESET. When the UE is configured with the higher layer parameter tci-PresentInDCI-ForFormat1_2 for the CORESET scheduling the PDSCH, the UE may assume that a DCI field having a DCI field size indicated by tci-PresentInDCI-ForFormat1_2 exists in DCI format 1_2 of the PDCCH transmitted on the CORESET. When the PDSCH is scheduled by a DCI format in which the TCI field does not exist, and the time offset between the DL DCI and reception of the corresponding PDSCH is equal to or greater than the threshold timeDurationForQCL (if applicable), (where the threshold is based on the reported threshold), the UE may assume that the TCI state or QCL assumption for the PDSCH is the same as the TCI state or QCL assumption applied for the CORESET used for PDCCH transmission in order to determine the PDSCH antenna port quasi co-location.

When the PDSCH is scheduled by the DCI format with the TCI field, a TCI field in the DCI of a scheduling configuration component carrier may indicate a DCI state activated in the scheduled configuration component carrier or DL BWP. In order to determine the PDSCH antenna port quasi co-location, the UE may need to use the TCI-State according to the value of the 'Transmission Configuration Indication' field in the PDCCH detected together with the DCI.

When the time offset between reception of the DL DCI and the corresponding PDSCH is equal to or greater than the timeDurationForQCL threshold, the UE may assume that the DM-RS ports of the PDSCH of the serving cell are quasi co-located with the RS(s) in the TCI state with respect to the QCL type parameter(s) given by the indicated TCI state. Here, the threshold is based on the reported UE capability.

When the UE is configured to single slot PDSCH, the indicated TCI state should be based on the activated TCI state in the slot with the scheduled PDSCH.

When the UE is configured to multi-slot PDSCH, the indicated TCI state should be based on an activated TCI state of a first slot with the scheduled PDSCH, and the UE should anticipate that activated TCI states are the same through slots having the scheduled PDSCH.

When the UE is configured to CORESET related to a search space set for cross-carrier scheduling and the UE is not configured to enableDefaultBeamForCSS, the UE expects tci-PresentInDCI to be configured to 'enabled' or tci-PresentInDCI-Format1_2 for CORESET, and when one or more TCI states configured for a serving cell scheduled by the search space set include 'QCL-TypeD', the UE expects the time offset between reception of the PDCCH detected in the search space set and the corresponding PDSCH to be equal to or greater than the timeDurationForQCL threshold.

Regardless of the configurations of tci-PresentInDCI and tci-PresentInDCI-Format1_2 in RRC connection mode, if the offset between the reception of DL DCI and the corresponding PDSCH is smaller than the timeDurationForQCL threshold, the UE may assume that the DM-RS ports of the PDSCH of the serving cell RS(s) are quasi co-located with the RS(s) for the QCL parameter(s) used for the PDCCH quasi co-location indication of the CORESET associated with the monitored search space with the lowest controlResourceSetId in the latest slot where one or more CORESETs within the active BWP of the serving cell are monitored by the UE. In this case, if 'QCL-TypeD' of the PDSCH DM-RS is different from that of the overlapping PDCCH DM-RS in at least one symbol, the UE expects to prioritize reception of the PDCCH related to the CORESET.

This also applies in the case of in-band CA. (When PDSCH and CORESET are in different component carriers) When none of the TCI states configured for the serving cell of the scheduled PDSCH include 'QCL-TypeD', the UE should obtain different assumptions from the TCI states indicated with respect to the scheduled PDSCH regardless of the reception of the DL DCI and the corresponding PDSCH.

When the UE is configured to enableDefaultTCIStatePerCoresetPoolIndex and the UE is configured by higher layer parameter PDCCH-Config including two different values of CORESETPoolIndex in ControlResourceSet, in both cases, tci-PresentInDCI is configured to 'enabled' and tci-PresentInDCI is not configured to the RRC connected mode, if the offset between the reception of the DL DCI and the corresponding PDSCH is less than the timeDurationForQCL threshold, the UE may assume that the DM-RS ports of the PDSCH associated with the CORESETPoolIndex value of the serving cell may be quasi-co-located with RS(s) for the QCL parameter used for quasi co-location indication of CORESET associated with the monitored search space having the lowest controlResourceSetId among CORESETs. Here, the CORESET is configured with the same CORESETPoolIndex value as the PDCCH scheduling the corresponding PDSCH, and is one or more CORESETs associated with the same CORESETPoolIndex value as the PDCCH scheduling the corresponding PDSCH within the active BWP of the serving cell monitored by the UE in the latest slot.

When the UE is configured to enableTwoDefaultTCIStates, if the offset between the reception of the DL DCI and the corresponding PDSCH or the first PDSCH transmission occasion is less than the timeDurationForQCL threshold, and at least one TCI states configured for the serving cell of the scheduled PDSCH is 'QCL -TypeD', and at least one TCI codepoint indicates two TCI states, the UE may assume that the DM-RS ports of the PDSCH or PDSCH transmission occasions of the serving cell are quasi co-located with the RS(s) for the QCL parameter(s) associated with TCI states corresponding to the lowest codepoint among TCI codepoints including two different TCI states.

When the UE is configured with higher layer parameter repetitionScheme-r16 configured to 'TDMSchemeA' or configured with higher layer parameter repetitionNumber-r16, the mapping of TCI states to PDSCH transmission occasions is determined by replacing the TCI states indicated by the TCI states corresponding to the lowest codepoint among the TCI codepoints including two different TCI states.

When a PDCCH carrying a scheduling DCI is received on one component carrier, and a PDSCH scheduled by the DCI is on another component carrier and the UE is configured to enableDefaultBeamForCCS:

- timeDurationForQCL is determined based on the subcarrier spacing of the scheduled PDSCH. If $\mu$PDCCH < $\mu$PDSCH, an additional timing delay $d \frac{2^{\mu PDSCH}}{2^{\mu PDCCH}}$ is added to timeDurationForQCL, where d is defined in a predefined standard, otherwise d is 0.

- In both cases, when the offset between the reception of the DL DCI and the corresponding PDSCH is less than the timeDurationForQCL threshold, and when the DL DCI field does not exist, the UE obtains the QCL assumption for the scheduled PDSCH from the activated TCI state having a lowest ID applicable to the PDSCH in the active BWP of a scheduled cell.

For a periodic CSI-RS resource in an NZP-CSI-RS-ResourceSet configured with higher layer parameter trs-Info, the UE may expect the TCI-State to indicate one of the following quasi co-location type(s):

- 'QCL-TypeC' with the SS/PBCH block and 'QCL-TypeD' with the same SS/PBCH block if applicable,
- 'QCL-TypeC' with SS/PBCH block and, if applicable, 'QCL-TypeD' with CSI-RS resource in NZP-CSI-RS-Resource-Set configured to higher layer parameter repetition, or

In the case of an aperiodic CSI-RS resource of NZP-CSI-RS-ResourceSet configured to higher layer parameter trs-Info, the UE may expect the TCI-State to indicate 'QCL-TypeA' with the periodic CSI-RS resource, and indicate 'QCL-TypeA' having the same periodic CSI-RS resource if applicable, in the NZP-CSI-RS-ResourceSet configured with the higher layer parameter trs-Info.

For CSI-RS resource of NZP-CSI-RS-ResourceSet without higher layer parameter trs-Info and higher layer parameter repetition, the UE may expect the TCI-State to indicate one of the following quasi co-location type(s):

- 'QCL-TypeA' with CSI-RS resource in NZP-CSI-RS-ResourceSet configured by higher layer parameter trs-Info, and 'QCL-TypeD' with the same CSI-RS resource, if applicable, or
- 'QCL-TypeA' with CSI-RS resource in NZP-CSI-RS-ResourceSet configured by higher layer parameter trs-Info, and 'QCL-TypeD' with SS/PBCH block if applicable, or
- 'QCL-TypeA' with CSI-RS resource in NZP-CSI-RS-ResourceSet configured by higher layer parameter trs-Info, and 'QCL-TypeD' with CSI-RS resource in NZP-CSI-RS-ResourceSet configured by higher layer parameter repetition if applicable, or
- When 'QCL-TypeD' is not applied, 'QCL-TypeB' with CSI-RS resource in NZP-CSI-RS-ResourceSet configured by higher layer parameter trs-Info.

For the CSI-RS resource of the NZP-CSI-RS-ResourceSet configured by higher layer parameter repetition, the UE may expect the TCI-State to indicate one of the following quasi co-location type(s):

- 'QCL-TypeA' with CSI-RS resource in NZP-CSI-RS-ResourceSet configured by higher layer parameter trs-Info, and 'QCL-TypeD' with the same CSI-RS resource, if applicable, or
- 'QCL-TypeA' with CSI-RS resource in NZP-CSI-RS-ResourceSet configured by higher layer parameter trs-Info, and 'QCL-TypeD' with CSI-RS resource in NZP-CSI-RS-ResourceSet configured by higher layer parameter repetition if applicable, or
- 'QCL-TypeC' with the SS/PBCH block and 'QCL-TypeD' with the same SS/PBCH block if applicable.

For DM-RS of PDCCH, the UE may expect the TCI-State to indicate one of the following quasi co-location type(s):

- 'QCL-TypeA' with CSI-RS resource in NZP-CSI-RS-ResourceSet configured by higher layer parameter trs-Info, and 'QCL-TypeD' with the same CSI-RS resource, if applicable, or

- 'QCL-TypeA' with CSI-RS resource in NZP-CSI-RS-ResourceSet configured by higher layer parameter trs-Info, and 'QCL-TypeD' with CSI-RS resource in NZP-CSI-RS-ResourceSet configured by higher layer parameter repetition if applicable, or
- 'QCL-TypeA' with CSI-RS resource in NZP-CSI-RS-ResourceSet configured without higher layer parameter trs-Info and higher layer parameter repetition, and 'QCL-TypeD' with the same CSI-RS resource, if applicable.

For DM-RS of PDSCH, the UE may expect the TCI-State to indicate one of the following quasi co-location type(s):

- 'QCL-TypeA' with CSI-RS resource in NZP-CSI-RS-ResourceSet configured by higher layer parameter trs-Info, and 'QCL-TypeD' with the same CSI-RS resource, if applicable, or
- 'QCL-TypeA' with CSI-RS resource in NZP-CSI-RS-ResourceSet configured by higher layer parameter trs-Info, and 'QCL-TypeD' with CSI-RS resource in NZP-CSI-RS-ResourceSet configured by higher layer parameter repetition if applicable, or
- 'QCL-TypeA' with CSI-RS resource in NZP-CSI-RS-ResourceSet configured without higher layer parameter trs-Info and higher layer parameter repetition, and 'QCL-TypeD' with the same CSI-RS resource, if applicable.

## CSI related **operation**

In a New Radio (NR) system, a channel state information-reference signal (CSI-RS) is used for time and/or frequency tracking, CSI computation, layer 1 (L1)-reference signal received power (RSRP) computation, and mobility. Here, the CSI computation is related to CSI acquisition and the L1-RSRP computation is related to beam management (BM).

Channel state information (CSI) collectively refers to information that may indicate the quality of a radio channel (or referred to as a link) formed between the UE and the antenna port.

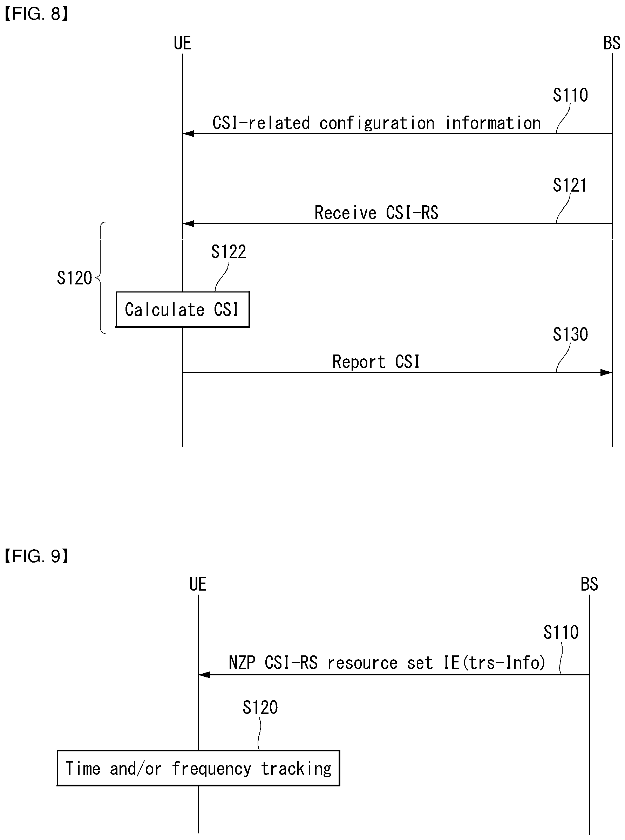

FIG. 8 is a flowchart showing an example of a CSI-related procedure.

Referring to FIG. 14, in order to perform one of usages of the CSI-RS, a terminal (e.g. user equipment (UE)) receives, from a base station (e.g. general Node B, gNB), configuration information related to the CSI through radio resource control (RRC) signaling (S110).

The configuration information related to the CSI may include at least one of CSI-interference management (IM) resource related information, CSI measurement configuration related information, CSI resource configuration related information, CSI-RS resource related information, or CSI report configuration related information.

The CSI-IM resource related information may include CSI-IM resource information, CSI-IM resource set information, and the like. The CSI-IM resource set is identified by a CSI-IM resource set identifier (ID) and one resource set includes at least one CSI-IM resource. Each CSI-IM resource is identified by a CSI-IM resource ID.

The CSI resource configuration related information may be expressed as CSI-ResourceConfig IE. The CSI resource configuration related information defines a group including at least one of a non zero power (NZP) CSI-RS resource set, a CSI-IM resource set, or a CSI-SSB resource set. That is, the CSI resource configuration related information may include a CSI-RS resource set list, and the CSI-RS resource set list may include at least one of a NZP CSI-RS resource set list, a CSI-IM resource set list, or a CSI-SSB resource set list. The CSI-RS resource set is identified by a CSI-RS resource set ID and one resource set includes at least one CSI-RS resource. Each CSI-RS resource is identified by a CSI-RS resource ID.

Referring to Table 5, parameters (e.g., a BM related 'repetition' parameter and a tracking related 'trs-Info' parameter) representing the usage of the CSI-RS may be configured for each NZP CSI-RS resource set. Table 5 shows an example of the NZP CSI-RS resource set IE.

【Table 5】

```
-- ASN1START
-- TAG-NZP-CSI-RS-RESOURCESET-START
NZP-CSI-RS-ResourceSet ::=          SEQUENCE {
    nzp-CSI-ResourceSetId              NZP-CSI-RS-ResourceSetId,
    nzp-CSI-RS-Resources               SEQUENCE (SIZE (1..maxNrofNZP-CSI-RS-
ResourcesPerSet)) OF NZP-CSI-RS-ResourceId,
    repetition                         ENUMERATED { on, off }
    aperiodicTriggeringOffset          INTEGER(0..4)
    trs-Info                           ENUMERATED {true}
    ...
}

-- TAG-NZP-CSI-RS-RESOURCESET-STOP
-- ASN1STOP
```

In addition, the repetition parameter corresponding to the higher layer parameter corresponds to 'CSI-RS-ResourceRep' of L1 parameter.

The CSI report configuration related information includes a reportConfigType parameter representing a time domain behavior and a reportQuantity parameter representing a CSI related quantity for reporting. The time domain behavior may be periodic, aperiodic, or semi-persistent.

The CSI report configuration related information may be expressed as CSI-ReportConfig IE and Table 6 below shows an example of CSI-ReportConfig IE.

【Table 6】

```
-- ASN1START
-- TAG-CSI-RESOURCECONFIG-START

CSI-ReportConfig ::=                SEQUENCE {
    reportConfigId                     CSI-ReportConfigId,
    carrier                            ServCellIndex           OPTIONAL, -
- Need S
    resourcesForChannelMeasurement     CSI-ResourceConfigId,
    csi-IM-ResourcesForInterference    CSI-ResourceConfigId    OPTIONAL, -
- Need R
    nzp-CSI-RS-ResourcesForInterference  CSI-ResourceConfigId  OPTIONAL, -
- Need R
    reportConfigType                   CHOICE {
        periodic                           SEQUENCE {
            reportSlotConfig                   CSI-
ReportPeriodicityAndOffset,
            pucch-CSI-ResourceList                 SEQUENCE (SIZE
(1..maxNrofBWPs)) OF PUCCH-CSI-Resource
        },
        semiPersistentOnPUCCH              SEQUENCE {
            reportSlotConfig                   CSI-
ReportPeriodicityAndOffset,
            pucch-CSI-ResourceList                 SEQUENCE (SIZE
(1..maxNrofBWPs)) OF PUCCH-CSI-Resource
        },
        semiPersistentOnPUSCH             SEQUENCE {
            reportSlotConfig                   ENUMERATED {sl5, sl10, sl20,
sl40, sl80, sl160, sl320},
            reportSlotOffsetList               SEQUENCE (SIZE (1.. maxNrofUL-
Allocations)) OF INTEGER(0..32),
            p0alpha                            P0-PUSCH-AlphaSetId
        },
        aperiodic                         SEQUENCE {
            reportSlotOffsetList               SEQUENCE (SIZE (1..maxNrofUL-
Allocations)) OF INTEGER(0..32)
        }
    },
    reportQuantity                    CHOICE {
        none                              NULL,
        cri-RI-PMI-CQI                    NULL,
        cri-RI-i1                         NULL,
        cri-RI-i1-CQI                     SEQUENCE {
            pdsch-BundleSizeForCSI                ENUMERATED {n2, n4}
    OPTIONAL
        },
        cri-RI-CQI                        NULL,
        cri-RSRP                          NULL,
        ssb-Index-RSRP                    NULL,
        cri-RI-LI-PMI-CQI                 NULL
    },
```

- The UE measures CSI based on configuration information related to the CSI (S120). The CSI measurement may include (1) a CSI-RS reception process of the UE (S121) and (2) a process of computing the CSI through the received CSI-RS (S122), and a detailed description thereof will be given later.

For the CSI-RS, resource element (RE) mapping of the CSI-RS resource is configured in time and frequency domains by higher layer parameter CSI-RS-ResourceMapping.

Table 7 shows an example of CSI-RS-ResourceMapping IE.

【Table 7】

```
         -- ASN1START
         -- TAG-CSI-RS-RESOURCEMAPPING-START

         CSI-RS-ResourceMapping ::=          SEQUENCE {
             frequencyDomainAllocation            CHOICE {
                 row1                                 BIT STRING (SIZE (4)),
                 row2                                 BIT STRING (SIZE (12)),
                 row4                                 BIT STRING (SIZE (3)),
                 other                                BIT STRING (SIZE (6))
             },
             nrofPorts                            ENUMERATED {p1,p2,p4,p8,p12,p16,p24,p32},
             firstOFDMSymbolInTimeDomain          INTEGER (0..13),
             firstOFDMSymbolInTimeDomain2         INTEGER (2..12)
             cdm-Type                             ENUMERATED {noCDM, fd-CDM2, cdm4-FD2-TD2, cdm8-
FD2-TD4},
             density                              CHOICE {
                 dot5                                 ENUMERATED {evenPRBs, oddPRBs},
                 one                                  NULL,
                 three                                NULL,
                 spare                                NULL
             },
             freqBand                             CSI-FrequencyOccupation,
             ...
         }
```

In Table 7, a density (D) represents a density of the CSI-RS resource measured in RE/port/physical resource block (PRB) and nrofPorts represents the number of antenna ports.

The UE reports the measured CSI to the base station (S130).

Here, when the quantity of CSI-ReportConfig in Table 10 is configured to 'none (or No report)', the UE may skip the report.

However, even when the quantity is configured to 'none (or No report)', the UE may report to the base station.

The case where the quantity is configured to 'none' is a case of triggering aperiodic TRS or a case where repetition is configured.

Here, only in a case where the repetition is configured to 'ON', the report of the UE may be skipped.

## CSI measurement

The NR system supports more flexible and dynamic CSI measurement and reporting. Here, the CSI measurement may include a procedure of acquiring the CSI by receiving the CSI-RS and computing the received CSI-RS.

As time domain behaviors of the CSI measurement and reporting, aperiodic/semi-persistent/periodic channel measurement (CM) and interference measurement (IM) are supported. A 4 port NZP CSI-RS RE pattern is used for configuring the CSI-IM.

CSI-IM based IMR of the NR has a similar design to the CSI-IM of the LTE and is configured independently of ZP CSI-RS resources for PDSCH rate matching. In addition, in ZP CSI-RS based IMR, each port emulates an interference layer having (a preferable channel and) precoded NZP CSI-RS. This is for intra-cell interference measurement with respect to a multi-user case and primarily targets MU interference.

The base station transmits the precoded NZP CSI-RS to the UE on each port of the configured NZP CSI-RS based IMR.

The UE assumes a channel/interference layer for each port in the resource set and measures interference.

For the channel, when there is no PMI and RI feedback, multiple resources are configured in a set and the base station or the network indicates a subset of NZP CSI-RS resources through the DCI with respect to channel/interference measurement.

Resource setting and resource setting configuration will be described in more detail.

## resource setting

Each CSI resource setting 'CSI-ResourceConfig' includes a configuration for S ≥ 1 CSI resource set (given by higher layer parameter csi-RS-ResourceSetList). The CSI resource setting corresponds to the CSI-RS-resourcesetlist. Here, S represents the number of configured CSI-RS resource sets. Here, the configuration for S ≥ 1 CSI resource set includes each CSI resource set including CSI-RS resources (constituted by NZP CSI-RS or CSI IM) and an SS/PBCH block (SSB) resource used for L1-RSRP computation.

Each CSI resource setting is positioned in a DL BWP (bandwidth part) identified by a higher layer parameter bwp-id. In addition, all CSI resource settings linked to CSI reporting setting have the same DL BWP.

A time domain behavior of the CSI-RS resource within the CSI resource setting included in CSI-ResourceConfig IE is indicated by higher layer parameter resourceType and may be configured to be aperiodic, periodic, or semi-persistent. The number S of configured CSI-RS resource sets is limited to '1' with respect to periodic and semi-persistent CSI resource settings. Periodicity and slot offset which are configured are given in numerology of associated DL BWP as given by bwp-id with respect to the periodic and semi-persistent CSI resource settings.

When the UE is configured as multiple CSI-ResourceConfigs including the same NZP CSI-RS resource ID, the same time domain behavior is configured with respect to CSI-ResourceConfig.

When the UE is configured as multiple CSI-ResourceConfigs including the same CSI-IM resource ID, the same time domain behavior is configured with respect to CSI-ResourceConfig.

Next, one or more CSI resource settings for channel measurement (CM) and interference measurement (IM) are configured through higher layer signaling.

- CSI-IM resource for interference measurement.
- NZP CSI-RS resource for interference measurement.
- NZP CSI-RS resource for channel measurement.

That is, channel measurement resource (CMR) may be NZP CSI-RS for CSI acquisition and interference measurement resource (IMR) may be NZP CSI-RS for CSI-IM and IM.

Here, CSI-IM (or ZP CSI-RS for IM) is primarily used for inter-cell interference measurement.

In addition, NZP CSI-RS for IM is primarily used for intra-cell interference measurement from multi-users.

The UE may assume CSI-RS resource(s) for channel measurement and CSI-IM/NZP CSI-RS resource(s) for interference measurement configured for one CSI reporting are 'QCL-TypeD' for each resource.

### resource setting configuration

As described, the resource setting may mean a resource set list.

For aperiodic CSI, in each trigger state configured by using higher layer parameter CSI-AperiodicTriggerState, each CSI-ReportConfig is associated with one or multiple CSI-ReportConfigs linked to the periodic, semi-persistent, or aperiodic resource setting.

One reporting setting may be connected with a maximum of three resource settings.

- When one resource setting is configured, the resource setting (given by higher layer parameter resourcesForChannelMeasurement) is for channel measurement for L1-RSRP computation.
- When two resource settings are configured, a first resource setting (given by higher layer parameter resourcesForChannelMeasurement) is for channel measurement and a second resource setting (given by csi-IM-ResourcesForInterference or nzp-CSI-RS-ResourcesForInterference) is for interference measurement performed on CSI-IM or NZP CSI-RS.
- When three resource settings are configured, a first resource setting (given by resourcesForChannelMeasurement) is for channel measurement, a second resource setting (given by csi-IM-ResourcesForInterference) is for CSI-IM based interference measurement, and a third resource setting (given by nzp-CSI-RS-ResourcesForInterference) is for NZP CSI-RS based interference measurement.

Each CSI-ReportConfig is linked to periodic or semi-persistent resource setting with respect to semi-persistent or periodic CSI.

- When one resource setting (given by resourcesForChannelMeasurement) is configured, the resource setting is for channel measurement for L1-RSRP computation.
- When two resource settings are configured, a first resource setting (given by resourcesForChannelMeasurement) is for channel measurement and a second resource setting (given by higher layer parameter csi-IM-ResourcesForInterference) is used for interference measurement performed on CSI-IM.

### CSI computation

When interference measurement is performed on CSI-IM, each CSI-RS resource for channel measurement is associated with the CSI-IM resource for each resource by an order of CSI-RS resources and CSI-IM resources within a corresponding resource set. The number of CSI-RS resources for channel measurement is equal to the number of CSI-IM resources.

In addition, when the interference measurement is performed in the NZP CSI-RS, the UE does not expect to be configured as one or more NZP CSI-RS resources in the associated resource set within the resource setting for channel measurement.

The UE in which Higher layer parameter nzp-CSI-RS-ResourcesForInterference is configured does not expect that 18 or more NZP CSI-RS ports will be configured in the NZP CSI-RS resource set.

For CSI measurement, the UE assumes the followings.

- Each NZP CSI-RS port configured for interference measurement corresponds to an interference transport layer.
- All interference transport layers of the NZP CSI-RS port for interference measurement consider an energy per resource element (EPRE) ratio.
- Different interference signals on RE(s) of the NZP CSI-RS resource for channel measurement, the NZP CSI-RS resource for interference measurement, or CSI-IM resource for interference measurement.

**CSI Reporting**

For CSI reporting, time and frequency resources which may be used by the UE are controlled by the base station.

The channel state information (CSI) may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), and L1-RSRP.

For the CQI, PMI, CRI, SSBRI, LI, RI, and L1-RSRP, the UE is configured by a higher layer as $N \geq 1$ CSI-ReportConfig reporting setting, $M \geq 1$ CSI-ResourceConfig resource setting, and a list (provided by aperiodicTrigger-StateList and semiPersistentOnPUSCH) of one or two trigger states. In the aperiodicTriggerStateList, each trigger state includes the channel and an associated CSI-ReportConfigs list optionally indicating resource set IDs for interference. In the semiPersistentOnPUSCH-TriggerStateList, each trigger state includes one associated CSI-ReportConfig.

In addition, the time domain behavior of CSI reporting supports periodic, semi-persistent, and aperiodic.

i) The periodic CSI reporting is performed on short PUCCH and long PUCCH. The periodicity and slot offset of the periodic CSI reporting may be configured through RRC and refer to the CSI-ReportConfig IE.

ii) SP(semi-periodic) CSI reporting is performed on short PUCCH, long PUCCH, or PUSCH.

In the case of SP CSI on the short/long PUCCH, the periodicity and the slot offset are configured with the RRC and the CSI reporting is activated/deactivated by separate MAC CE.

In the case of the SP CSI on the PUSCH, the periodicity of the SP CSI reporting is configured through the RRC, but the slot offset is not configured through the RRC and the SP CSI reporting is activated/deactivated by DCI (format 0_1). For SP CSI reporting on PUSCH, a separate RNTI (SP-CSI C-RNTI) is used.

An initial CSI reporting timing follows a PUSCH time domain allocation value indicated in the DCI and a subsequent CSI reporting timing follows a periodicity configured through the RRC.

DCI format 0_1 may include a CSI request field and may activate/deactivate a specific configured SP-CSI trigger state. The SP CSI reporting has the same or similar activation/deactivation as a mechanism having data transmission on SPS PUSCH.

iii) The aperiodic CSI reporting is performed on the PUSCH and is triggered by the DCI. In this case, information related to the trigger of aperiodic CSI reporting may be delivered/indicated/configured through the MAC-CE.

In the case of AP CSI having AP CSI-RS, an AP CSI-RS timing is configured by the RRC, and a timing for the AP CSI reporting is dynamically controlled by the DCI.

In the NR, it is not applied a scheme (for example, transmitting RI, WB PMI/CQI, and SB PMI/CQI in order) of dividing and reporting the CSI in multiple reporting instances applied to PUCCH based CSI reporting in the LTE. Instead, the NR restricts specific CSI reporting not to be configured in the short/long PUCCH and a CSI omission rule is defined. In addition, in relation with the AP CSI reporting timing, a PUSCH symbol/slot location is dynamically indicated by the DCI. In addition, candidate slot offsets are configured by the RRC. For the CSI reporting, slot offset(Y) is configured for each reporting setting. For UL-SCH, slot offset K2 is configured separately.

Two CSI latency classes (low latency class and high latency class) are defined in terms of CSI computation complexity. In the case of Low latency CSI, it is a WB CSI including a maximum of 4 ports Type-I codebook or a maximum of 4-ports non-PMI feedback CSI. The high latency CSI refers to CSI other than the low latency CSI. For a normal UE, $(Z, Z')$ is defined in a unit of OFDM symbols. Here, Z represents a minimum CSI processing time from the reception of the aperiodic CSI triggering DCI to the execution of the CSI reporting. In addition, Z' represents a minimum CSI processing time from the reception of the CSI-RS for channel/interference to the execution of the CSI reporting.

Additionally, the UE reports the number of CSIs which may be simultaneously calculated.

**Reporting configurations**

The UE may need to calculate CSI parameters (if reported) by assuming the following dependencies between CSI parameters (if reported).

- LI should be calculated based on the reported CQI, PMI, RI and CRI.
- CQI should be calculated based on the reported PMI, RI and CRI.
- PMI should be calculated based on the reported RI and CRI.
- RI should be calculated based on the reported CRI.

Reporting configuration for CSI may be aperiodic (using PUSCH), periodic (using PUCCH) or semi-persistent (using PUCCH and DCI activated PUSCH). The CSI-RS resource may be periodic, semi-persistent or aperiodic. Table 8 shows supported combinations of CSI reporting configuration and CSI-RS resource configuration, and a method of triggering CSI reporting for each CSI-RS resource configuration. The periodic CSI-RS may be configured by a higher layer. The semi-persistent CSI-RS may be activated and deactivated as described in a predefined standard (e.g., 3GPP TS 38.214, Section 5.2.1.5.2). The aperiodic CSI-RS may be configured and triggered/activated as described in a predefined standard (e.g., 3GPP TS 38.214, Section 5.2.1.5.1).

[Table 8]

| CSI-RS Configuration | Periodic CSI Reporting | Semi-Persistent CSI Reporting | Aperiodic CSI Reporting |
|---|---|---|---|
| Periodic CSI-RS | No dynamic triggering/ activation | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Semi-Persistent CSI-RS | Not Supported | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Aperiodic CSI-RS | Not Supported | Not Supported | Triggered by DCI; additionally, activation command [10, TS 38.321] possible as defined in Subclause 5.2.1.5.1. |

**Activation/deactivation of semi-persistent CSI-RS/CSI-IM resource set**

The network (or BS) transmits the SP CSI-RS/CSI-IM resource set activation/deactivation MAC CE described in the predefined standard (e.g., 3GPP TS38.321, section 6.1.3.12) to activate and deactivate a configured semi-persistent CSI-RS/CSI-IM resource set of the serving cell. The configured semi-persistent CSI-RS/CSI-IM resource set may be first deactivated during configuration and after handover.

A MAC entity may need to perform:

1> When the MAC entity receives the SP CSI-RS/CSI-IM resource set activation/deactivation MAC CE from the serving cell:
2> Information about the SP CSI-RS/CSI-IM Resource Set activation/deactivation MAC CE may need to be instructed to a lower layer.

Aperiodic CSI trigger state subselection

The network (or BS) transmits the aperiodic CSI trigger state subselection MAC CE described in the predefined standard (e.g., 3GPP TS38.321 section 6.1.3.13) to select the aperiodic CSI trigger state among the configured aperioidc CSI trigger states of the serving cell.

The MAC entity may need to perform:

1> When the MAC entity receives the aperiodic CSI trigger state subselection MAC CE from the serving cell:

2> Aperiodic CSI state subselection MAC CE information may need to be indicated to the lower layer.

## Tracking reference signal (TRS)

TRS is defined in NR for a function of cell-specific reference signal (CRS) used for fine time and frequency tracking in the LTE system.

However, the TRS defined in NR is not an always-on scheme unlike the CRS of the LTE system.

Due to the TRS defined in NR, the UE is capable of estimating timing offset, delay spread, frequency offset, and Doppler spread.

The TRS is supported in both below 6 GHz (FR1) and above 6 GHz (FR2).

Periodic TRS is mandatory in both FR1 and FR2, and aperiodic TRS is optional in both FR1 and FR2.

FIG. 9 is a flowchart illustrating an example of a TRS procedure.

Referring to FIG. 9, the UE receives an NZP-CSI-RS-ResourceSet information element (IE) including a trs-Info parameter from the BS (S110).

The trs-Info parameter is a parameter indicating whether antenna ports for all NZP-CSI-RS resources in the CSI-RS resource set are the same, and is configured by the unit of the NZP-CSI-RS resource set.

CSI-RS resources in the CSI-RS resource set in which the trs-Info parameter is configured to 'ON' are configured as 1-port CSI-RS resources.

Periodic CSI-RS resources in a CSI-RS resource set in which the trs-Info parameter is configured to 'ON' have the same periodicity, bandwidth, and subcarrier location.

In addition, the aperiodic CSI-RS resources in the CSI-RS resource set in which the trs-Info parameter is configured to 'ON' have the same bandwidth and the same number of CSI-RS resources with the same RB location.

If an aperiodic TRS is configured, a QCL reference of the TRS should be related to the periodic TRS, and the QCL types are 'QCL-Type-A' and 'QCL-TypeD'.

Next, the UE performs time and/or frequency tracking through the CSI-RS resources in the CSI-RS resource set in which the trs-Info is configured to 'ON' (S120).

## CSI computation time

When the CSI request field on DCI triggers CSI report(s) on PUSCH, when the first uplink symbol for carrying the corresponding CSI report(s) including the effect of timing advance starts later than symbol Zref, and when the first uplink symbol for carrying the n-th CSI report including the effect of the timing advance starts later than the symbol Z'ref (n), the UE may need to provide a valid CSI report for the n-th triggered report.

Here, Zref may be defined as the next uplink symbol having a CP starting after the end $T_{proc,CSI} = (Z)(2048+144)\cdot\kappa 2^{-\mu}\cdot T_C + T_{switch}$ of the last symbol of the PDCCH triggering the CSI report(s), and Z'ref(n) may be defined as the next uplink symbol having a CP starting after $T'_{proc,CSI} = (Z')(2048+144)\cdot\kappa 2^{-\mu}\cdot T_C$ of the last symbol with respect to the earliest one of the aperiodic CSI-RS resource for channel measurements, the aperiodic CSI-IM used for interference measurements, and the aperiodic NZP CSI-RS for interference measurements when the aperiodic CSI-RS is used for channel measurement for the n-th triggered CSI report. Here, $T_{switch}$ may be defined by a predefined standard (e.g., 3GPP TS38.214) and applied only when Z1 of Table 9 is applied.

When the PUSCH indicated by the DCI overlaps with another PUCCH or PUSCH, the CSI report(s) may be multiplexed according to a procedure described in the predefined standard (e.g., 3GPP TS38.213/TS38.214) if supported. Otherwise, the CSI report(s) may be transmitted on the PUSCH indicated by DCI.

When the CSI request field on the DCI triggers the CSI report(s) on the PUSCH, if the first uplink symbol carrying the corresponding CSI report(s) including the effect of the timing advance starts earlier than symbol Zref, if HARQ-ACK or a transport block is not multiplexed on the PUSCH, the UE may ignore scheduling DCI.

When the CSI request field on the DCI triggers the CSI report(s) on the PUSCH, if the first uplink symbol to carry the n-th CSI report including the effect of the timing advance starts earlier than symbol Z'ref(n), if the number of triggered reports is one and no HARQ-ACK or transport block is multiplexed on the PUSCH, the UE may ignore the corresponding DCI. Otherwise, the UE does not need to update the CSI for the n-th triggered CSI report.

Z, Z' and $\mu$ are defined as follows:

$$Z = \max_{m=0,\ldots,M-1} (Z(m)) \quad \text{and} \quad Z' = \max_{m=0,\ldots,M-1} (Z'(m))$$

, where M may be the number of updated CSI report(s) according to a predefined standard (e.g., 3GPP TS38.214), and ($Z(m)$,$Z'(m)$) may corresponds to the m-th updated CSI report and may be defined as follows.

- When the CSI is triggered without PUSCH having a transport block, HARQ-ACK, or both, L = 0 CPUs are occupied, and the CSI to be transmitted is a single CSI and corresponds to the wideband frequency-granularity, $(Z_1, Z_1')$ in Table 9. Here, the CSI corresponds to up to 4 CSI-RS ports in a single resource without a CSI report. And, here, CodebookType is configured to 'typeI-SinglePanel' or reportQuantity is configured to 'cri-RI-CQI'. or,

- If the CSI to be transmitted corresponds to the wideband frequency-granularity, $(Z_1, Z_1)$ in Table 10. Here, CSI corresponds to up to 4 CSI-RS ports in a single resource without a CRI report. And, here, CodebookType is configured to 'typeI-SinglePanel' or reportQuantity is configured to 'cri-RI-CQI'. or,

- When reportQuantity is configured to 'cri-RSRP' or 'ssb-Index-RSRP', $(Z_3, Z_3')$ in Table 10. Here, as defined in a predefined standard (e.g., 3GPP TS38.306), $X_\mu$ conforms to UE reported capability beamReportTiming, and $KB_l$ conforms to UE reported capability beamSwitchTiming. or,

- Otherwise, $(Z_2, Z_2')$ in Table 10.

- $\mu$ in Table 9 and Table 10 corresponds to min $(\mu_{PDCCH}, \mu_{CSI-RS}, \mu_{UL})$. Here, $\mu_{PDCCH}$ corresponds to the subcarrier spacing of PDCCH through which DCI is transmitted, $\mu_{UL}$ corresponds to subcarrier spacing of PUSCH through which CSI reports can be transmitted, and $\mu_{CSI-RS}$ corresponds to the minimum subcarrier spacing of aperiodic CSI-RS triggered by DCI.

Table 9 shows CSI computation delay requirement 1.

[Table 9]

| $\mu$ | $Z_1$ [symbols] | |
|---|---|---|
| | $Z_1$ | $Z'_1$ |
| 0 | 10 | 8 |
| 1 | 13 | 11 |
| 2 | 25 | 21 |
| 3 | 43 | $3\delta$ |

Table 10 shows CSI computation delay requirement 2.

[Table 10]

| $\mu$ | $Z_1$ [symbols] | | $Z_2$ [symbols] | | $Z_3$ [symbols] | |
|---|---|---|---|---|---|---|
| | $Z_1$ | $Z'_1$ | $Z_2$ | $Z'_2$ | $Z_3$ | $Z'_3$ |
| 0 | 22 | 16 | 40 | 37 | 22 | $X_0$ |
| 1 | 33 | 30 | 72 | 69 | 33 | $X_1$ |
| 2 | 44 | 42 | 141 | 140 | min($44, X_2 + KB_1$) | $X_2$ |
| 3 | 97 | 85 | 152 | 140 | min($97, X_3 + KB_2$) | $X_3$ |

## Multiple Transmission and Reception Point (TRP)-related Operation

The coordinated multi point (CoMP) technique is a scheme in a plurality of base stations exchange (e.g., use X2 interface) or utilize channel information (e.g., RI/CQI/PMI/LI, etc.) fed back from the user equipment (UE) to perform cooperative transmission with the UE, thereby effectively controlling interference. According to the scheme used, the cooperative transmission may be divided into joint transmission (JT), coordinated scheduling (CS), coordinated beamforming (CB), dynamic point selection (DPS), dynamic point blacking (DPB), and the like.

## Multiple TRP (M-TRP) transmission

The M-TRP transmission scheme in which M TRPs transmit data to one user equipment (UE) may be divided into two, that is, eMBB M-TRP transmission, which is a scheme for significantly increasing a transmission rate, and URLLC M-TRP transmission, which is a scheme for increasing a reception success rate and reducing delay.

In addition, from the perspective of the downlink control information (DCI) transmission, the multiple TRP (M-TRP) transmission scheme may be divided into i) a multiple DCI (M-DCI) based M-TRP transmission method in which each TRP transmits a different DCI and ii) a single DCI (S-DCI) based M-TRP transmission method in which one TRP transmits DCI. For example, in the case of the S-DCI, since all scheduling information for data transmitted by the M TRP needs to be transmitted through one DCI, and therefore, may be used in an ideal backhaul (HackHaul, BH) environment that enables dynamic cooperation between two TRPs.

Standardization of scheme 3/4 is under discussion in TDM based URLLC. As an example, scheme 4 means a scheme in which one TRP transmits a TB in one slot, and has the effect of increasing the data reception probability through the same TB received from several TRPs in several slots. On the other hand, scheme 3 means a scheme in which one TRP transmits a TB through several consecutive OFDM symbols (that is, a symbol group), and may be configured so that several TRPs in one slot transmit the same TB through different symbol groups.

In addition, the UE may recognize a PDSCH/PUSCH (or PUCCH), which is scheduled by the DCI received with different CORESETs (or CORESETs belonging to different CORESET groups/pools), as a PDSCH received from different TRPs or a PUSCH (or PUCCH) transmitted to different TRPs. That is, according to information (e.g., index) on the CORESET group/pool, the UE may distinguish or identify the TRP to be transmitted and received to/and from itself. In addition, the scheme for UL transmission (e.g., PUSCH/PUCCH) transmitted to different TRPs may be equally applied to UL transmission (e.g., PUSCH/PUCCH) transmitted to different panels belonging to the same TRP.

In addition, MTRP-URLLC may mean that the same transport block (TB) is transmitted using a different layer/time/frequency of the M-TRP. It may be assumed that a UE configured with the MTRP-URLLC transmission scheme is indicated with several TCI state(s) by DCI, and data received using the QCL RS of each TCI state are the same TB. On the other hand, MTRP-eMBB may mean that the M-TRP transmits different TBs using different layers/times/frequencies. It may be assumed that the UE configured for the MTRP-eMBB transmission scheme is indicated with several TCI state(s) by the DCI, and data received using the QCL RS of each TCI state is a different TB. In this regard, as the UE separately uses the RNTI configured for an MTRP-URLLC usage and the RNTI configured for an MTRP-eMBB usage, the UE may determine/decide whether the corresponding M-TRP transmission is URLLC transmission or eMBB transmission. That is, when CRC masking of DCI received by the terminal is performed using the RNTI configured for the MTRP-URLLC usage, this may correspond to the URLLC transmission, and when the CRC masking of the DCI is performed using the RNTI configured for the MTRP-eMBB usage, this may correspond to the eMBB transmission.

Hereinafter, the CORESET group ID described/mentioned in the present disclosure may mean index/identification information (e.g., ID) for distinguishing the CORESET for each TRP/panel, etc. In addition, the CORESET group may be a group/union of the CORESET distinguished by the index/identification information (e.g., ID) for distinguishing the CORESET for each TRP/panel/the CORESET group ID. As an example, the CORESET group ID may be specific index information defined in the CORSET configuration. As an example, the CORESET group may be configured/indicated/defined by an index defined in the CORESET configuration for each CORESET. And/or the CORESET group ID may mean an index/identification information/indicator, etc. for distinguishing/identifying CORESETs configured/related to each TRP/panel, and the CORESET group ID described/mentioned in the present disclosure may be replaced and expressed as a specific index/specific identification information/specific indicator for distinguishing/identifying the CORESETs configured/related to each TRP/panel. The CORESET group ID, i.e., the specific index/specific identification information/specific indicator for distinguishing/identifying the CORESETs configured/related to each TRP/panel may be configured/indicated through a higher layer signaling (e.g., RRC signaling)/L2 signaling (e.g., MAC-CE)/L1 signaling (e.g., DCI). As an example, PDCCH detection for each TRP/panel may be configured/indicated to be performed in units of the corresponding CORESET group, and/or uplink control information (e.g., CSI, HARQ-A/N, SR) and/or uplink physical channel resources (e.g., PUCCH/PRACH/SRS resources) may be configured/indicated to be separated, and managed/controlled for each TRP/panel in units of the corresponding CORESET group, and/or HARQ A/N (process/retransmission) for the PDSCH/PUSCH scheduled for each TRP/panel may be managed in units of the corresponding CORESET group.

For example, ControlResourceSet IE (information element), which is a higher layer parameter, is used to configure a time/frequency control resource set (CORESET). As an example, the control resource set (CORESET) may be related to detection and reception of downlink control information. The ControlResourceSet IE may include CORESET related ID (e.g., controlResourceSetID)/CORESET pool index (e.g., CORESETPoolIndex) for CORESET/time/frequency resource configuration of CORESET/TCI information related to the CORESET. As an example, the CORESET pool index (e.g., CORESETPoolIndex) may be configured to 0 or 1. In the above description, the CORESET group may correspond to the CORESET pool, and the CORESET group ID may correspond to the CORESET pool index (e.g., CORESETPoolIndex).

**Multiple DCI based/single DCI based cooperative transmission**

Non-coherent joint transmission (NCJT) is a method in which multiple transmission points (TPs) transmit data to one user equipment (UE) using the same time frequency, and transmits data to different layers using different DMRS (Demodulation Multiplexing Reference Signal) ports between TPs. The TP transmits the data scheduling information to the UE receiving the NCJT as the downlink control information (DCI). In this case, a scheme in which each TP participating in the NCJT transmits scheduling information for data transmitted by itself to the DCI may be referred to as multi DCI based cooperative transmission. Since each of N TPs participating in the NCJT transmission transmit DL grants (i.e., DL DCI) and PDSCH to the UE, the UE receives N DCIs and N PDSCHs through N TPs. On the other hand, a scheme in which one representative TP transmits scheduling information for data transmitted by itself and data transmitted by another TP to one DCI may be referred to as single DCI based cooperative transmission (e.g., single DCI based NCJT). In this case, N TPs transmit one PDSCH, but each TP transmits only some layers among multiple layers constituting one PDSCH. For example, when 4 layer data is transmitted, TP 1 may transmit 2 layers and TP 2 may transmit the remaining 2 layers to the UE.

## Description of partially overlapped NCJT

In addition, NCJT is divided into two types: fully overlapped NCJT, in which time and frequency resources transmitted by each TP completely are overlapped, and partially overlapped NCJT, in which only some time and frequency resources are overlapped. That is, in the case of the partially overlapped NCJT, both transmission data of TP 1 and TP2 are transmitted in some time-frequency resources, and only one TP among TP 1 or TP 2 transmits data in the remaining time-frequency resources.

## Reliability enhancement method in Multi-TRP

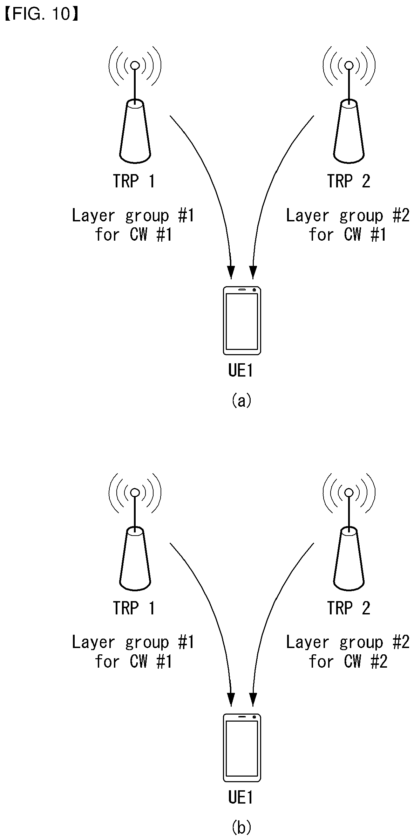

FIG. 10(a) illustrates an example of a case in which the layer group transmitting the same codeword (CW)/transport block (TB) corresponds to different TRPs. In this case, the layer group may mean a layer set including one or more layers. In this case, there is an advantage in that the amount of transmission resources increases due to the number of layers, and thus, (robust) channel coding of a low code rate may be used for the transport block (TB). In addition, since the channels transmitted from a plurality of TRPs are different, it can be expected to improve the reliability of the received signal based on the diversity gain.

FIG. 10(b) illustrates an example of transmitting different CWs through layer groups corresponding to different TRPs. In this case, it may be assumed that TBs corresponding to a first CW (CW #1) and a second CW (CW #2) are the same. Accordingly, the scheme illustrated in FIG. 10(b) can be viewed as an example of repeated transmission of the same TB. In the case of FIG. 10(b), the code rate corresponding to the TB may be higher than that of FIG. 13(a). However, according to the channel environment, the code rate may be adjusted by indicating different redundancy version (RV) values for encoding bits generated from the same TB, or the modulation order of each CW can be adjusted.

In FIG. 10(a)/(b), as the same TB is repeatedly transmitted through different layer groups and different TRPs/panels transmit each layer group, the data reception probability may be increased, and this is named as an M-TRP URLLC transmission scheme. Layers belonging to different layer groups are transmitted through DMRS ports belonging to different DMRS CDM groups, respectively.

In addition, although the above-mentioned contents related to multiple TRPs have been described based on a spatial division multiplexing (SDM) scheme using different layers, it goes without saying that this may be extended and applied even to a frequency division (FDM) scheme based on different frequency domain resources (e.g., RB/PRB (set)) and/or a time division multiplexing (TDM) scheme based on different time domain resources (e.g., slot, symbol, sub-symbol).

In the present disclosure, TRP may mean an antenna array having one or more antenna elements available in a network located at a specific geographic location in a specific area. In the present disclosure, it is described based on "TRP" for convenience of description, but as described above, the TRP may be replaced, and appreciated/applied as the base station, a transmission point (TP), a cell (e.g., macro cell/small cell/pico cell, etc.), an antenna array or panel, RRU/RRH, etc. In addition, the base station may mean a generic term for an object that transmits and receives data to and from the terminal. For example, the base station may be a concept including one or more transmission points (TPs), one or more transmission and reception points (TRPs), and the like. Further, the TP and/or the TRP may include a panel, a transmission and reception unit, and the like of the base station.

## HST-SFN deployment

### High speed train scenarios

In the process of 3GPP Release 13, the RAN4 study item (SI) for the purpose of enhancing performance requirements in high speed scenario (HST) is approved, and the results of the SI are summarized in a predefined standard (e.g., 3GPP TR 36.878). Among various results, practical high speed scenarios are organized by operators to support cellular service, and among them, existing scenarios and scenarios with high priority in the future are classified as shown in Table 6 and Table 7 below.

Table 11 shows the existing high speed scenarios, and Table 12 shows the identified high speed scenarios.

[Table 11]

| Scenario | Description |
|---|---|
| Open space | - Outdoor eNBs are installed through the railway on same frequencies as public network coverage |
| Tunnel with leaky cable | - Leaky cables are used to extend the signal through the tunnel environment<br>- No Repeaters/CPE are installed on the carriage |
| Tunnel for multi-antennas | - RRHs or RAUs are deployed through fiber in tunnel environment<br>- RRHs or RAUs share the different cell id<br>- Repeaters are not installed on the carriage |

[Table 12]

| Scenario | Description |
|---|---|
| SFN (Signal single frequency network) | - RRHs or RAUs are deployed through fiber in tunnel environment<br>- RRHs or RAUs share the same cell id<br>- Repeaters are not installed on the carriage |
| Leaky cable in Tunnel (from leaky | - Leaky cables are used to extend the signal through the tunnel environment |
| cable to repeater) | - Repeaters are installed on the carriage and distribute signal inside the carriage through leaky cables. |

**Channel models for high speed scenarios**

HST channel models have been devised for analysis of high speed scenarios, and three following models may be cited as examples.

Channel model for open space and tunnel for multi-antennas

A first channel model, as a channel model designed for scenarios such as open space and tunnel for multi-antennas, is a 1-tap non-fading propagation channel model and is characterized by the following Doppler shift characteristics.

[Equation 3]

$$f_s(t) = f_d \cos\theta(t)$$

In Equation 3 above, $f_s(t)$ means a Doppler shift and $f_d$ represents a maximum Doppler frequency. cos $\theta(t)$ be classified according to the range of t as shown in Equations 4 to 6 below.

[Equation 4]

$$\cos\theta(t) = \frac{D_s/2 - vt}{\sqrt{D_{\min}^2 + (D_s/2 - vt)^2}}, \quad 0 \le t \le D_s/v$$

[Equation 5]

$$\cos\theta(t) = \frac{-1.5D_s + vt}{\sqrt{D_{\min}{}^2 + (-1.5D_s + vt)^2}} , \quad D_s/v < t \le 2D_s/v$$

[Equation 6]

$$\cos\theta(t) = \cos\theta(t \ \bmod \ (2D_s/v)) , \quad t > 2D_s/v$$

FIG. 11 illustrates a simplified schematic diagram of the channel model.

Channel model for leaky cable in tunnel

A second channel model, as a channel model designed for the Leaky cable in Tunnel (from leaky cable to repeater) scenario defined in Identified high speed scenarios, characterized by the characteristics shown in Table 13 below.

[Table 13]

| Tap index | Excess tap delay (ns) | Relative power (dB) | Distribution of amplitude per tap | Doppler spectrum |
|---|---|---|---|---|
| 1: | 0: | 0: | Rician, K=10dB | RICE, K=10dB, fshift=0, and Maximum Doppler frequency is 30Hz |

FIG. 12 illustrates a schematic diagram of the channel model.
Channel model for SFN
A third channel model as a channel model designed for SFN (Single Frequency Network) scenarios is a 2-tap time-varying channel model, and is characterized in that Doppler shift, tap delay, and relative power are given for each tap.
[Doppler shift]
Doppler shifts for two paths are defined as Equations 7 and 8 below, respectively.

[Equation 7]

$$f_{s,1}(t) = f_s(t + \frac{1.5D_s}{v})$$

[Equation 8]

$$f_{s,2}(t) = f_s(t + \frac{0.5D_s}{v})$$

The definitions of $f_s(t)$ in Equations 7 and 8 above are the same as the definitions in Equations 3 to 6.

[Relative power]

The relative powers for two paths are as shown in Equations 9 and 10 below, respectively.

[Equation 9]

$$p_1(t) = \begin{cases} \dfrac{(vt)^2 + D_{min}^2}{(D_s - vt)^2 + (vt)^2 + 2D_{min}^2}, & 0 < t \leq D_s/v \\[4mm] \dfrac{(2D_s - vt)^2 + D_{min}^2}{(D_s - vt)^2 + (2D_s - vt)^2 + 2D_{min}^2} & D_s/v < t \leq 2D_s/v \\[4mm] p_1(t \mod (2D_s/v)), & t > 2D_s/v \end{cases}$$

[Equation 10]

$$p_2(t) = p_1(t + D_s/v)$$

[Tap delay]

Tap delays for the two paths are shown in Equations 11 and 12 below, respectively.

[Equation 11]

$$d_1(t) = \begin{cases} \dfrac{\sqrt{(D_s - vt)^2 + D_{min}^2}}{c}, & 0 < t \leq 2D_s/v \\[4mm] d_1(t \mod (2D_s/v)), & t > 2D_s/v \end{cases}$$

[Equation 12]

$$d_2(t) = d_1(t + D_s/v)$$

Table 14 and FIG. 13 show examples of parameters and channel characteristics of the SFN channel model.

[Table 14]

| Parameter | Value |
|-----------|---------|
| $D_s$ | 1000 m |
| $D_{min}$ | 10 m |
| $v$ | 350 km/h |
| $f_d$ | 875 Hz |

Evaluation methodology for Rel-17 enhancement on HST-SFN deployments

Hereinafter, agreements related to evaluation methodology for Rel-17 enhancement on HST-SFN deployment will be reviewed.

Agreement

Proposal for evaluation methodology in section 2.1 of R1-2007201 amended as follows (underlined part in Table 10 is not agreed upon)
FFS: Propagation condition for FR1, FR2, regardless of whether the CDL extension is optional or baseline.
FFS: UE heights for both FR1 and FR2.

Proposal:
LLS used for Rel-17 HST evaluations.

Mandatorily used bi-directionally, and used uni-directionally with optional gNB antenna orientation.

Rel-15 SFN is used as a baseline for comparison. Performance comparisons with other systems (e.g., Rel-16 URLLC, DPS, etc) may also be provided.

Table 15 is adopted for evaluation of HST-SFN deployments (except underlined parts).

For HST-SFN evaluation, the CDL based channel model in Table 1 is adopted.

Table 15 is a table showing LLS simulation assumption for HST-SFN deployment.

[Table 15]

| Parameter | FR1 | | FR2 |
|---|---|---|---|
| Duplexing | FDD | TDD | TDD |
| TRP layout (Ds, Dmin, etc) | Ds=700m, Dmin=150m<br>For CDL based model - TRP height: 35m, UE height:<br>1.5m | | Alt 2-1: Ds=700m, Dmin=150m<br>Alt 2-3: Ds=200-300m, Dmin=30-50m<br>Alt 2-4: Ds=580m, Dmin=5m<br>TRP height: [5/10/15/20/35]m, UE height: 1.5m |
| gNB antenna configuration including number of antennas, pattern, ports, orientation, etc | 2 ports: [Mg, Ng, M, N, P]=[1, 1, 1, 1, 2],<br><br>4 ports: [Mg, Ng, M, N, P]=[1, 1, 1, 2, 2],<br>[8 ports: Mg, Ng, M, N, P]=[1, 1, 2, 2, 2]]<br>one-to-one mapping between antenna elements and TXRUs | | 2 ports: [Mg, Ng, M, N, P]=[1, 1, 4, 8, 2],<br>directional antenna<br>Note: The results for other antenna configurations can be also provided |
|  | omni-directional antenna<br>Note: The results for other antenna configurations can be also provided | |  |
| UE antenna configuration including number of antennas, pattern, ports, orientation, etc | 2 ports: [Mg, Ng, M, N, P]=[ 1, 1, 1, 1, 2] or 4 ports: [Mg, Ng, M, N, P]=[1, 1, 1, 2, 2], one-to-one mapping between antenna elements and TXRUs omni-directional antenna | | 2 ports: [Mg, Ng, M, N, P]=[1, 1, 2, 4, 2], directional antenna |
| DMRS type | Mandatory: DM-RS type 1<br>Optional: DM-RS type 2 | | |
| Number of DMRS symb. | 1+1+1 | | |
| TDD pattern | N/A | DDDDDDDSUU,<br>S: 6D 4G 4U | DDDDDDDSUU,<br>S: 6D 4G 4U |
| MCS | MCS 4/MCS 13/MCS 17 based on 64QAM table<br>Note: Companies can also provide results with MCS adaptation | | |
| Number of scheduled RBs | 10 or 50. Other values are optional. | | |
| Propagation condition | 4-tap channel model (TS 36.101 (Annex B.3A) / TR 36.878)<br>CDL extension (CDL D/E, DS = 100ns) | | CDL extension (CDL D/E, DS = 20ns/30ns) |
| TRS configuration, TRS periodicity | 10ms, 2-slot pattern<br>Note: results for 20ms periodicity can be also provided | | |
| PDSCH mapping | Type A, Start symbol 2, Duration 12 | | |
| Rank | Rank 1 | | |
|  | Optional: other ranks or rank adaptation | | |
| BW | 10 MHz or 20 MHz | | 20MHz or 50MHz or 80MHz |

(continued)

| Parameter | FR1 | | FR2 |
|---|---|---|---|
| Duplexing | FDD | TDD | TDD |
| Carrier frequency or maximum<br><br>Doppler shift | 2GHz,<br><br>350kmph or 500kmph | 3.5GHz,<br><br>350kmph or 500kmph | 30 GHz<br><br>200 kmph or 350kmph |
| Performance metric | Throughput; BLER | | |
| Other assumptions or simulation parameters, e.g., correlation | 1) SCS: 30kHz, 15kHz as optional<br>2) Note: precoding method should be provided by each company | 1) SCS: 30kHz<br><br>2) Note: precoding method should be provided by each company | 1) SCS: 120kHz<br><br>2) Note: precoding method and analog beamforming details should be provided by each company |

Table 16 is a table showing the CDL-based channel model for HST-SFN deployment.

[Table 16]

| |
|---|
| CDL based channel model proposal for HST:<br>Combination of the CDL channel model in TR38.901 and the 4-tap channel model in TS36.101 Annex B.3A could be considered. As illustrated in figure below, 2-tap channel model for simplicity could be assumed which is similar to RAN4's 4-tap assumption in order to reflect the characteristic of SFN-based transmission, and for each tap, CDL channel model in TR38.901 could be used to model the effect of the directional antenna of gNB.<br>•     The delay for k'th TRP is modified as<br><br>$$\tau_{k,n} = \tau_k + \tau_n$$<br><br>where $\tau_k$ is the delay of k'th TRP, which can be derived as<br><br>$$\tau_k = \frac{|y(t) - x_k|}{C}$$<br><br>where $\tau_n$ is the delay of the n'th channel cluster as in Table 7.7.1-1~7.7.1-5 in 38.901 and assume the location of the k'th TRP is $x_k$, and the<br>UE's location is y(t).<br>The delay spread for different TRPs could be modelled as different. |
| •     The normalized power for k'th TRP is modified as<br><br>$$P_k = 10\,lg\left(\frac{\frac{1}{|y(t) - x_k|^2}}{\sum_{i=1,2}\frac{1}{|y(t) - x_i|^2}}\right)(dB)$$<br><br>•     To generate the modified angle parameters, the scaling method mentioned in subclause 7.7.5.1 in TS 38.901 is used<br><br>$$\varphi_{n,\text{scaled}} = \frac{\text{AS}_{\text{desired}}}{\text{AS}_{\text{model}}}\left(\varphi_{n,\text{model}} - \mu_{\varphi,\text{model}}\right) + \mu_{\varphi,\text{desired}}$$<br><br>where $\text{AS}_{\text{model}} = \text{AS}_{\text{desired}}$ could be assumed, and $\mu_{\varphi,\text{desired}}$ of the k'th TRP is the AOD, AOA, ZOD and ZOA of LOS direction derived based on the locations and antenna heights of UE and TRPs.<br>•     $\phi_{n,\text{model}}$ is the tabulated CDL ray angle<br>•     AS$_{\text{model}}$ is the rms angular spread of the tabulated CDL including the offset ray angles, calculated using the angular spread definition in Annex A in TS 38.901<br>•     $\mu_{\phi,\text{model}}$ is the mean angle of the tabulated CDL, calculated using the definition in Annex A in TS 38.901<br>•     $\mu_{\phi,\text{desired}}$ is the desired mean angle |

(continued)

- $AS_{desired}$ is the desired rms angular spread
- $\phi_{n,scaled}$ is the resulting scaled ray angle.

$\mu_{\phi,desired}$ of the k'th TRP is the AOD, AOA, ZOD and ZOA of LOS cluster derived by the locations and antenna heights of UE and TRPs.

If $D_1$ is used to denote the distance between UE and TRP1.

For AOD1 of TRP1,
$$\mu_{\phi,desired} = -\arctan(\frac{D_{min}}{D_1}) * \frac{180}{\pi}$$

For AOA1 of TRP1,
$$\mu_{\phi,desired} = 180 - \arctan(\frac{D_{min}}{D_1}) * \frac{180}{\pi}$$

For AOD2 of TRP2,
$$\mu_{\phi,desired} = -180 + \arctan(\frac{D_{min}}{D_s - D_1}) * \frac{180}{\pi}$$

For AOA2 of TRP2,
$$\mu_{\phi,desired} = \arctan(\frac{D_{min}}{D_s - D_1}) * \frac{180}{\pi}$$

For ZOD1 of TRP1,
$$\mu_{\phi,desired} = \arctan\left(\frac{h_{TRP} - h_{UE}}{\sqrt{D_1^2 + D_{min}^2}}\right) + 90°$$

For ZOD1 of TRP2,
$$\mu_{\phi,desired} = \arctan\left(\frac{h_{TRP} - h_{UE}}{\sqrt{(D_s - D_1)^2 + D_{min}^2}}\right) + 90°$$

For ZOA2 of TRP1,
$$\mu_{\phi,desired} = -\arctan\left(\frac{h_{TRP} - h_{UE}}{\sqrt{D_1^2 + D_{min}^2}}\right) + 90°$$

For ZOA2 of TRP2,
$$\mu_{\phi,desired} = -\arctan\left(\frac{h_{TRP} - h_{UE}}{\sqrt{(D_s - D_1)^2 + D_{min}^2}}\right) + 90°$$

The gNB antenna boresight could direct to the middle point on the railway between two TRPs. CDL-D and CDL-E channels models are recommended for evaluations.

(2) Agreement

For HST evaluation in FR2, Alt 2-3 is mandatory and the other alternatives (i.e., Alt 2-4 and Alt 2-1) are optional.

Alt 2-1: Ds=700m, Dmin=150m.
Alt 2-3: Ds=200-300m, Dmin=30-50m.
Alt 2-4: Ds=580m, Dmin=5m.

(3) Agreement

In the case of Alt 2-1 in Table 10 - TRP height is 35 m.
In the case of Alt 2-3 in Table 10 - TRP height is 20 m.
In the case of Alt 2-4 in Table 10 - TRP height is 5 m.

(4) Agreement

Based on predefined standards (e.g., 3GPP TR 38.802), a directional antenna model is adopted in Table 12.
Table 17 is a table for an antenna radiation pattern for terminal.

[Table 17]

| Parameter | Values |
|---|---|
| Antenna element radiation pattern in $\theta''$ dim (dB) | $A_{E,V}(\theta'') = -\min\left[12\left(\frac{\theta''-90^0}{\theta_{3dB}}\right)^2, SLA_V\right], \theta_{3dB} = 90^0, SLA_V = 25$ |
| Antenna element radiation pattern in $\varphi''$ dim (dB) | $A_{E,H}(\varphi'') = -\min\left[12\left(\frac{\varphi''}{\varphi_{3dB}}\right)^2, A_m\right], \varphi_{3dB} = 90^0, A_m = 25$ |
| Combining method for 3D antenna element pattern (dB) | $A''(\theta'', \varphi'') = -\min\left\{-\left[A_{E,V}(\theta'') + A_{E,H}(\varphi'')\right], A_m\right\}$ |
| Maximum directional gain of an antenna element $G_{E,max}$ | 5dBi |

(5) Agreement

Antenna downtilt and azimuth directions indicate the midpoint between two TRPs.

(6) Agreement

The UE height of 1.5 m is the baseline. Results for other UE heights may be reported by each company.

(7) Agreement

Results should be reported per track location (at a specific SNR) or per Throughput vs SNR (Ds/2 (middle track point)) at a specific location.
Results for different locations may be reported for each company.

(8) Agreement

CDL extension is a baseline channel model for HST-SFN evaluation in a 4-tap channel model.

(9) Agreement

The number of TRP antenna ports for FR1 evaluation supports 8 antenna ports with an optional configuration.

(10) Agreement

Perfect synchronization as the baseline
Non-perfect time and frequency synchronization between TRPs and UE, that is, modeling of TRP CFO error (where CFO has temporal fluctuations), UE receiver CFO, TRP timing errors may be optionally considered, in evaluation, companies providing details on how it was modeled, e.g. uniform distribution between [-ppm ppm] *fc (Hz) for each simulation point, where fc is the carrier center frequency and values of a maximum frequency error in ppm are captured as predefined standards (e.g. 3GPPTR 38.101-1/2 and TR 38.104).

(11) Agreement

It is recommended to provide results for SNR = 8, 12, 16, 20 dB.
Other SNR values are not excluded.
SRN defined relative only to the reference point closest to the TRP.

(12) Agreement

"TRP antenna configuration including number of antennas, pattern, ports, orientation, etc." in Table 10 are replaced with those in Table 18 or Table 19.

[Table 18]

| TRP antenna configuration including number of antennas, pattern, ports, orientation, etc | CDL based extension: **2 ports**: [Mg, Ng, M, N, P]=[1, 1, 8, 2, 2], antenna model in Table 5, 16-to-1 mapping is used to virtualize the 16 antenna elements in the adjacent columns with fixed weight to form an antenna **4 ports**: [Mg, Ng, M, N, P]=[1,1,8,4,2], antenna model in Table 5, virtualization, 16-to-1 mapping is used to virtualize the 16 antenna elements in the two adjacent columns with fixed weight to form an antenna **Optional 8 ports:** [Mg, Ng, M, N, P]=[1, 1, 8, 4, 2], antenna model in Table 5, 8-to-1 mapping is used to virtualize the 8 antenna elements in a column with fixed weight to form an antenna port | 2 ports: [Mg, Ng, M, N, P]= [1, 1, 4, 8, 2], Antenna model in Table 5 Note: The results for other antenna configurations can be also provided |
| --- | --- | --- |
| | 4-tap channel model: **2 ports:** omni-directional, MIMO matrix according to TS 38.101-4 (Annex B.1) **4 ports and 8 ports:** antenna model and mapping are the same as for CDL based extension Note: The results for other antenna configurations can be also provided | |

Table 19 is a table of the antenna radiation patterns for the TRP.

[Table 19]

| **Radiation power pattern of a single antenna element for TRP** | Vertical cut of the radiation power pattern (dB) | $A''_{dB}(\theta'', \phi''=0°) = -\min\left\{12\left(\frac{\theta''-90°}{\theta_{3dB}}\right)^2, SLA_V\right\}$ with $\theta_{3dB}$ = 65°, $SLA_V$ = 30dB and $\theta'' \in [0°, 180°]$ |
| --- | --- | --- |
| | Horizontal cut of the radiation power pattern (dB) | $A''_{dB}(\theta''=90°, \phi'') = -\min\left\{12\left(\frac{\phi''}{\phi_{3dB}}\right)^2, A_{max}\right\}$ with $\phi_{3dB}$ = 65°, $A_{max}$ = 30dB and $\phi'' \in [-180°, 180°]$ |
| | 3D radiation power pattern (dB) | $A''_{dB}(\theta'', \phi'') = -\min\left\{-\left(A''_{dB}(\theta'', \phi''=0°) + A''_{dB}(\theta''=90°, \phi'')\right), A_{max}\right\}$ |
| | Maximum directional gain of an antenna element $G_{E,max}$ | 8 dBi |

Necessity of implicit indication of Doppler shift of DL signal

FIG. 14 illustrates an example of Doppler shift pre-compensation. FIG. 14 illustrates the reason why an implicit indication for a Doppler shift of a downlink (DL) signal is required.

Referring to FIG. 14, in HST-SFN deployment, a method for pre-compensating for the Doppler shift at the base station (or TRP1/TRP2) may be applied to enhance DL performance. For example, when the Doppler shifts of DL signals transmitted from different TRP1/2 are different from the viewpoint of the terminal, the base station pre-compensates for this to obtain the same/similar Doppler shift or correct the Doppler shift to become a value close to 0 from the viewpoint of the terminal. To perform such pre-compensation, the base station needs to know the Doppler shift value from the viewpoint of the terminal.

To this end, an implicit indication scheme using an uplink (UL) signal may be applied. For example, when the terminal transmits the UL signal, the terminal determines a UL carrier frequency based on a specific DL signal (i.e.,

frequency tracking), and the terminal may transmit the UL signal based on a DL signal from TRP1/2. In addition, if the base station and the terminal know which TRP is used as a reference, the terminal may estimate the Doppler shift value between the specific TRP and the terminal.

**Necessity for CSI reporting related to DL Doppler shift based on TRS/SSB**

Based on the current standard, an operation for performing separate CSI reporting by the UE is not defined for a tracking reference signal (TRS). That is, the UE only performs measurement using the TRS and does not separately report a measurement result. However, since the UE may estimate the DL Doppler shift based on the TRS, CSI reporting for a specific TRS should be supported in order to report the DL Doppler shift to the BS. In addition, based on the current standard, only a BM-related (i.e., L1-RSRP/SINR) CSI reporting operation is defined for the SSB. However, since the UE may also estimate the DL Doppler shift based on the SSB, a DL Doppler shift reporting operation based on a specific SSB may be considered together.

Hereinafter, the present disclosure provides a method of reporting a Doppler shift value/information corresponding to a specific TRS/SSB (i.e., TRP) based on the above needs and problems (hereinafter, referred to as a first embodiment), a method of reporting an offset value/information between Doppler shift values for different TRS/SSBs (hereinafter, referred to as a second embodiment), a method of preventing a situation in which CSI reporting based on the first embodiment/second embodiment cannot be transmitted due to a collision (hereinafter, referred to as a third embodiment), a method of reporting for each (Rx/Tx) panel/(Rx/Tx) beam of the UE/BS for the CSI reporting based on the first/second/third embodiments (hereinafter, referred to as a fourth embodiment), and a method of defining a CSI computation time for reporting a Doppler shift value/information (hereinafter, referred to as a fifth embodiment).

Hereinafter, the embodiments described in the present disclosure are only distinguished for convenience of description, and some methods and/or some components of one embodiment may be substituted with methods and/or components of other embodiments, or may be applied in combination with each other, of course.

The TRS of the present disclosure may be a channel state information-reference signal (CSI-RS) for tracking. And/or, the TRS may mean RS/signal/channel for measuring/reporting Doppler shift.

A slot, a subframe, a frame, etc. mentioned in the embodiments described in the present disclosure may correspond to specific examples of certain time units used in the wireless communication system. That is, in applying the methods proposed in the present disclosure, the time unit may be replaced with other time units applied in another wireless communication system.

In the present disclosure, it is assumed that two TRPs (e.g., TRP1/TRP2) operate for convenience of description. However, this assumption does not limit the technical scope of the present disclosure. Accordingly, the methods are of course applicable even when three or more TRPs operate.

The TRP may be described in the present disclosure for convenience of description, and it is apparent that the TRP may also be interpreted in terms such as base station/panel/beam.

In the present disclosure, L1 signaling may mean DCI-based dynamic signaling between the BS and the UE, and L2 signaling may mean RRC/MAC CE-based higher layer signaling between the BS and the UE.

The above-described contents (3GPP system, frame structure, NR system, etc.) may be applied in combination with the methods proposed in the present disclosure to be described later, and / or supplemented to clarify the technical characteristics of the methods proposed in the present disclosure.

In the present disclosure, '()' may be interpreted as both excluding the contents in () and including the contents in parentheses.

In the present disclosure, '/' may mean including all contents separated by / (and) or including only some of the contents distinguished by / (or).

**< First Embodiment>**

In the embodiment, a method of reporting a Doppler shift value/information corresponding to a specific TRS/SSB will be described.

In the present disclosure, 'Doppler shift' may include a meaning such as a (carrier) frequency offset. Also, in the present disclosure, the TRS/SSB may mean TRP.

The methods described below are only distinguished for convenience of description, and it goes without saying that a configuration of any method may be replaced with a configuration of another method, or applied in combination with each other.

**(Method 1-1)**

For a specific TRS/SSB, there may be a configuration/instruction for the UE to report the DL Doppler shift value/information to the BS upon reception of the specific TRS/SSB. And/or, for a specific TRS/SSB, when receiving the specific TRS/SSB, the UE may report the DL Doppler shift value/information to the BS.

For example, when a single CSI resource setting (e.g., CSI-ResourceConfig) is configured in a single CSI reporting setting (e.g., CSI-ReportConfig), the reportQuantity of the CSI reporting setting may be configured to a value that means reporting on the DL Doppler shift value/information. And/or, the CSI resource setting may include information on a specific TRS/SSB (e.g., a specific NZP CSI-RS resource ID/SSB index). The UE may report the DL Doppler shift value/information measured based on the specific TRS/SSB configured in the CSI resource setting to the BS based on the above configuration.

**Method 1-2**

When the UE reports the DL Doppler shift value/information, the UE may perform reporting based on a Doppler shift/(carrier) frequency offset value normalized for a numerology (e.g., subcarrier spacing) corresponding to a 'specific TRS/SSB' configured to estimate/report the DL Doppler shift.

Hereinafter, in the present disclosure, the 'normalized Doppler shift/(carrier) frequency offset value' may be referred to as NDS.

Equation 13 shows an equation r[n] of the received signal (of the UE) when a carrier frequency offset (CFO) exists.

[Equation 13]

$$r[n] = H[n]X[n]\frac{sin(\pi\varepsilon)}{Nsin\left(\frac{\pi\varepsilon}{N}\right)}e^{\frac{j\pi\varepsilon(N-1)}{N}}$$

$$+ \sum_{m=0,m\neq n}^{N-1} H[m]X[m]\frac{sin(\pi(m-n+\varepsilon))}{Nsin\left(\frac{\pi(m-n+\varepsilon)}{N}\right)}e^{\frac{j\pi(m-n+\varepsilon)(N-1)}{N}} + w[n]$$

Here, a first term represents the received signal of the n-th subcarrier in which size distortion and phase distortion occur due to the carrier frequency offset, a second term represents an interference signal generated between adjacent subcarriers because an orthogonality is not established due to the carrier frequency offset, and a third term (w[n]) represents white noise. n represents an index of a subcarrier, m represents an index of a subcarrier other than n, and N represents the total number of subcarriers. H[n] represents a radio channel for the n-th subcarrier, X[n] represents a transmission signal for the n-th subcarrier, H[m] represents a radio channel for the m-th subcarrier, and X[m] represents a transmission signal for the m-th subcarrier.

In Equation 13 above, $\varepsilon = \frac{carrier \cdot frequency \cdot offset}{subcarrier \cdot spacing}$ (i.e., normalized CFO) is established. That is, the influence of the CFO on the received signal of the UE may be determined according to the carrier frequency offset and subcarrier spacing. The UE may compensate for the effect by estimating the normalized CFO from the received signal. Therefore, when using the proposed scheme, the UE may report the Doppler shift value/information to the BS based on the NDS value while using the conventional implementation scheme for CFO estimation/compensation.

**Method 1-3**

When the UE reports the DL Doppler shift value/information, a maximum/minimum value of the Normalized Doppler shift (NDS) value/information which the UE may report may be determined based on a carrier frequency (and/or serving cell/bandwidth part)/numerology (e.g., subcarrier spacing)/maximum velocity. And/or, the maximum/minimum value of the Normalized Doppler shift (DL) value/information which the UE may report may be determined based on the carrier frequency (and/or serving cell/bandwidth part)/numerology (e.g., subcarrier spacing)/maximum velocity.

The 'maximum/minimum value' may be defined between the BS and the UE based on a fixed rule based on (DL) carrier frequency (and/or serving cell/bandwidth part)/numerology (e.g., subcarrier spacing)/maximum velocity, etc., and/or indicated/configured to the UE based on L1/L2 signaling.

Table 20 shows a maximum Doppler shift value based on Rel-17 HST-SFN Evaluation Methodology (EVM).

[Table 20]

| | FR1 | | | FR2 |
|---|---|---|---|---|
| | FDD, 2GHz, 30kHz | FDD, 2GHz, 15kHz (optional) | TDD, 3.5GHz, 30kHz | TDD, 30GHz, 120kHz |
| 200kmph | n/a | n/a | n/a | 5539.9Hz, 0.0462 (NDS) |
| 350kmph | 644.45Hz, 0.0215 (NDS) | 644.45Hz, 0.0430(NDS) | 1127.8Hz, 0.0376 (NDS) | 9694.9Hz, 0.0808 (NDS) |
| 500kmph | 920.65Hz, 0.0307 (NDS) | 920.65Hz, 0.0614(NDS) | 1611.1Hz, 0.0537 (NDS) | n/a |

As can be seen in Table 20 above, the range of the (normalized) Doppler shift value may vary depending on the carrier frequency/numerology (e.g., subcarrier spacing)/maximum velocity. Therefore, when the UE may optimize the maximum/minimum value to be considered for reporting based on the above information, the number of bits required for reporting (payload size/feedback (reporting) overhead) when it is assumed that the same quantization level is assumed with respect to candidate values. Alternatively, the quantization level may be changed (and/or configured/indicated) along with the maximum/minimum value and defined/configured/indicated so as to report a more detailed value with the same feedback overhead.

When the set of candidates for the 'Normalized Doppler shift (NDS) value/information which may be reported by the UE' is named 'NDS table', the 'NDS table' may be defined regardless of the numerology (e.g., subcarrier spacing) (configured to the UE). Since the UE may report to the BS based on the same 'NDS table' regardless of the numerology (e.g., subcarrier spacing) of the DL signal for estimating the DL Doppler shift/(carrier) frequency offset, the UE may not define multiple NDS tables. And/or, the BS may configure/indicate, to the UE, the maximum/minimum value, the range of the candidate value, and/or the quantization level for the 'NDS table' defined regardless of the numerology (e.g., subcarrier spacing) (configured to the UE) (by considering a UE movement velocity, etc.) based on the L1/L2 signaling.

**Third Embodiment**

In the embodiment, a method of reporting the offset value/information between Doppler shift values for different TRS/SSBs will be described.

In the proposal, 'Doppler shift' may include the (carrier) frequency offset.

The BS may configure/instruct the UE to report an offset value/information between DL Doppler shift values when receiving the specific TRS/SSB for a specific TRS/SSB combination. And/or, for a specific TRS/SSB combination, when receiving the specific TRS/SSB, the UE may report the DL Doppler shift value/information to the BS. For example, an offset value/information between a DL Doppler shift value/information upon reception of the first TRS/SSB and a DL Doppler shift value/information upon reception of the second TRS/SSB may be reported. And/or, the method using the 'normalized Doppler shift/(carrier) frequency offset value' proposed in Method 1-2 may also be applied to the above offset value/information.

The methods described below are only distinguished for convenience of description, and it goes without saying that a configuration of any method may be replaced with a configuration of another method, or applied in combination with each other.

**Method 2-1**

First, a method of configuring/connecting/applying only a single CSI resource set (Resource setting) to a single CSI reporting setting (i.e., CSI-ReportConfig) will be described.

In the proposal below, 'CSI resource set' may include NZP CSI-RS resource set/CSI-SSB resource set/CSI-IM resource set.

In the above description, 'configuring/connecting/applying only a single CSI resource set' may mean the following contents. In the current standard, when the CSI reporting setting is configured to Periodic (P)/Semi-persistent (SP), only a single CSI resource set may be configured within the CSI resource setting (i.e., CSI-ResourceConfig) (for channel measurement (CM)). On the other hand, when the CSI reporting setting is configured to Aperiodic (AP), multiple CSI resource sets may be configured in the CSI resource setting, but when triggering the reporting setting, only a single resource set per the reporting setting is defined so that a single resource set may be connected/applied.

Therefore, Method 2-1-1/Method 2-1-2 below may be regarded as a method of configuring different CSI resource sets which are to calculate the offset value for the Doppler shift based on the current standard operation. That is, the single CSI reporting setting (i.e., CSI-ReportConfig) may be associated with a CSI resource setting (i.e., CSI-ResourceConfig) in which a single CSI resource set is configured/triggered, and may mean a case where one or more CSI reporting settings (i.e., CSI-ReportConfig) are configured. For example, in the proposed method of Method 2-1-1/Method 2-1-2, it may be assumed that one CSI resource set to calculate the offset is set in the CSI resource setting (for CM) is configured in the CSI reporting setting, and another CSI resource set is configured separately from the CSI resource setting (for CM) in the CSI reporting setting.

(Method 2-1-1) A correspondence/mapping relationship with another CSI resource set may be defined/configured/indicated at a set level for the CSI resource set included in the CSI resource setting of the CSI reporting setting. And/or, the UE may report an offset value/information (for Doppler shift) between resource sets that correspond/map to each other based on the correspondence/mapping relationship to the BS.

The correspondence/mapping relationship may be configured/indicated to the UE based on the L1/L2 signaling. As an example for 'establishing the correspondence/mapping relationship to another CSI resource set', a combination of a specific TRS/SSB (e.g., first CSI resource set) and another TRS/SSB (e.g., a second CSI resource set) corresponding to the specific TRS/SSB may be configured/indicated based on separate L1/L2 signaling. Table 21 shows an example of the combination configured in the UE. In this case, when the first CSI reporting setting/first CSI resource setting/first CSI resource set (e.g., NZP CSI-RS resource #1) for the purpose of Method 2-1-1 above is configured/indicated to the UE, the UE may report, to the BS, an offset value/information between a first CSI resource set (i.e., NZP CSI-RS resource # 1) and a second CSI resource set (i.e., NZP CSI-RS resource #2) based on combination information pre-configured/indicated to the UE through the separate L1/L2 signaling.

And/or, more specifically, each codepoint (i.e., relationship #1/#2/#3/#4) in Table 21 may correspond to all/some of codepoints of a transmission configuration indication (TCI) state field (i.e., TCI field) in downlink control information (DCI) for scheduling a physical downlink shared channel (PDSCH). For example, the UE may receive a value '010' of the TCI field in the DCI, and the UE may report offset values/information for SSB #3 and SSB #4 to the BS based on Relationship #2 of Table 21.

And/or, when multiple TCI states are configured/indicated together (for multi-TRP transmission) for a control resource set (CORESET), the correspondence/mapping relationship may be defined to correspond to all or some of the multiple TCI state combinations. For example, in Rel-16, an operation to indicate two (different) TCI states is introduced through a single code-point of the TCI state field for multi-TRP transmission, and for code-point(s) to which tow (different) TCI states are mapped, a combination of each code-point may correspond to a resource set combination for calculating the offset information.

And/or, in the current standard, it is defined that only a single TCI state may be corresponded/assumed per CORESET at a specific time point, but multiple TCI states may be corresponded/assumed per CORESET at a specific time point for multi-TRP transmission. To this end, a combination of possible TCI states may correspond to a resource set combination for calculating the offset information.

[Table 21]

|  | Paired resource set 1 | Paired resource set 2 |
|---|---|---|
| Relationship #1 | SSB #1 | SSB #2 |
| Relationship #2 | SSB #3 | SSB #4 |
| Relationship #3 | NZP CSI-RS resource #1 | NZP CSI-RS resource #2 |
| Relationship #4 | NZP CSI-RS resource #3 | NZP CSI-RS resource #4 |

The above 'set level' means that one or more CSI resource sets may be configured in the CSI resource setting of the CSI reporting setting, and when multiple CSI resource sets are configured, different correspondence/mapping relationships are configured for each resource set. For example, when CSI resource setting (resource set #1, resource set #2) is configured, different resource sets may be corresponded and mapped the unit of resource set #1 - resource set #10 and resource set #2 - resource set #20.

And/or, for the CSI reporting setting for the above purpose, reportQuantity may be configured to a value that means reporting on DL Doppler shift (and/or an offset between Doppler shifts for different CSI resource sets) value/information. And/or, the CSI resource setting may include a specific TRS/SSB (e.g., a specific NZP CSI-RS resource ID/SSB index).

(Method 2-1-2) The BS may configure/indicate, to the UE, specific TRS/BSS information which may become a reference when the UE intends to calculate the offset value/information between the DL Doppler shift values. And/or, the UE may report, to the BS, an offset value/information for the CSI resource set in the CSI resource setting as compared with the DL Doppler shift measured from the 'specific TRS/SSB which may become the reference' with respect to the CSI resource setting configured/connected to the CSI reporting setting for reporting the DL Doppler shift value/information.

And/or, for the CSI reporting setting for the above purpose, reportQuantity may be configured to a value that means reporting on DL Doppler shift (and/or an offset between Doppler shifts for different CSI resource sets) value/information. And/or, the CSI resource setting may include a specific TRS/SSB.

And/or, in order to help the UE estimate the operation of the second embodiment (i.e., method 2-2/method 2-2/method 2-3), the BS may configure/indicate trajectory information (e.g., BS location, etc.) to the UE.

**Method 2-2**

Next, a method of configuring/connecting/applying two CSI resource sets to a single CSI reporting setting (i.e., CSI-ReportConfig) will be described.

As described in Method 2-1 above, in the current standard, a single CSI resource set (for CM) may be configured/connected/applied to the single CSI reporting setting. Therefore, Method 2-2 may be regarded as a method of configuring different CSI resource sets which are to calculate the offset value for the Doppler shift by extending the current standard operation. For example, in method 2-2, it may be assumed that the CSI resource sets to calculate the offset are configured together in the CSI resource setting (for CM) in the CSI reporting setting. That is, method 2-2 to be described below may be a case in which it is assumed that the current standard is extended.

Two CSI resource sets (for CM) are configured/connected/applied to the single CSI reporting setting, and the UE may report an offset value/information (for Doppler shift) between the two resource sets to the BS.

And/or, for the CSI reporting setting for the above purpose, reportQuantity may be configured to a value that means reporting on DL Doppler shift (and/or an offset between Doppler shifts for different CSI resource sets) value/information. And/or, the CSI resource setting may include a specific TRS/SSB (e.g., a specific NZP CSI-RS resource ID/SSB index). For example, if reportQuantity is configured to report on DL Doppler shift value/information, and two CSI resource sets are configured/connected/applied to a single CSI reporting setting, the UE may the offset value/information (for the Doppler shift) between the two CSI resource sets to the BS. For example, the offset value/information is a differential value between a measurement value based on a specific TRS/SSB (e.g., the first CSI resource set) and a measurement value based on another TRS/SSB (e.g., the second CSI resource set).

**Method 2-3**

Next, a method of configuring/connecting/applying multiple CSI resource sets to the single CSI reporting setting (i.e., CSI-ReportConfig) will be described.

As described in Method 2-1 above, in the current standard, a single CSI resource set (for CM) may be configured/connected/applied to the single CSI reporting setting. Therefore, Method 2-3 may be regarded as a method of configuring different CSI resource sets which are to calculate the offset value for the Doppler shift by extending the current standard operation. For example, in method 2-3, it may be assumed that the CSI resource sets to calculate the offset are configured together in the CSI resource setting (for CM) in the CSI reporting setting. That is, method 2-3 to be described below may be a case in which it is assumed that the current standard is extended.

Multiple CSI resource sets (for CM) may be configured for a single CSI reporting setting, and the BS may select two specific resource sets among the multiple CSI resource sets to the UE. And/or, the UE may report the offset value/information (for Doppler shift) between the two resource sets to the BS.

The 'two specific resource sets among the multiple CSI resource sets' may be configured/indicated to the UE based on L1/L2 signaling (e.g., DCI/MAC CE). For example, two specific resource sets among multiple CSI resource sets may be configured/indicated to the UE based on DCI and/or medium access control-control element (MAC CE). The 'two specific resource sets' may be configured/indicated to, when the BS transmits PDSCH/physical downlink control channel (PDCCH) to the UE, correspond to resource sets transmitted in different TRPs which are to transmit the PDSCH/PDCCH in a single frequency network (SFN) scheme. For example, the combination of the two specific resource sets may correspond to one of a combination of multiple TCI states defined for multi-TRP transmission of PDSCH/PDCCH (e.g., TCI state #1 (NZP CSI-RS #1) - TCI state #2 (NZP CSI-RS #2), TCI state #3 (NZP CSI-RS #3) - TCI state #4 (NZP CSI-RS #4), ...).

And/or, in the second embodiment (i.e., method 2-1/method 2-2/method 2-3), the BS may configure/indicate/connect/apply one specific CSI resource set to the UE. In this case, the UE may report the DL Doppler shift value/information for the CSI resource set to the BS instead of reporting an offset value between different CSI resource sets.

Method 2-3 may have an advantage of being able to more dynamically configure/indicate the TRS/SSB combination to calculate the offset compared to method 2-2.

And/or, for the CSI reporting setting for the above purpose, reportQuantity may be configured to a value that means reporting on DL Doppler shift (and/or an offset between Doppler shifts for different CSI resource sets) value/information. And/or, the CSI resource setting may include a specific TRS/SSB (e.g., a specific NZP CSI-RS resource ID/SSB index).

Method 2-1-1/Method 2-1-2/Method 2-2/Method 2-3 may be applied independently and/or may be applied together by combining different methods. As an example of applying different methods in combination, method 2-3 is applied to AP CSI reporting, and method 2-1-1, method 2-1-2 or method 2-2 may be applied to P/SP CSI reporting (e.g., based on pre-defined rules and/or L1/L2 signaling).

And/or, in the first/second embodiments, together with the Doppler shift value/information, a value/information on a movement velocity of the UE may be reported to the BS together. In this case, the value/information on the movement velocity of the UE may mean an absolute velocity of the UE or a relative velocity between the UE and the BS.

And/or, when the UE reports the Doppler shift value/information to the BS according to the first/second embodiments, a method may be applied in which the reported information (e.g., Doppler shift value/information) is reported to the BS faster than normal CSI. To this end, reporting through message3 (MSG3) may be applied from the random access channel (RACH) stage. And/or, for this purpose, a CSI computation time shorter than the CSI computation time defined in the current standard may be defined.

### Third Embodiment

In the embodiment, a method of preventing a situation in which CSI reporting based on the first/second embodiment cannot be transmitted due to a collision will be described. In the present disclosure, collision may also be expressed as overlapping.

For different CSI reporting, CSI reporting for the proposed method of the first embodiment/second embodiment may be transmitted with priority.

For example, the following priorities may be configured/indicated/defined/promised/assumed.

PUCCH carrying (high) HARQ-ACK and/or SR > PUCCH carrying Doppler shift report (e.g., CSI reporting based on the first embodiment/second embodiment) > PUCCH carrying only (low) CSI report(s) or only L1-RSRP report(s)

For example, the PUCCH carrying only CSI report(s) may mean a PUCCH constituted by at least one of a channel quality indicator (CQI), a precoding matrix indicator (PMI), a CSI-RS resource indicator (CRI), an SS/PBCH block resource indicator (SSBRI), a layer indicator (LI), and/or a rank indicator (RI).

In the case of the above method, a PUCCH for DL Doppler shift pre-compensation may be transmitted first instead of a physical uplink control channel (PUCCH) for DL channel estimation, so out-dating may occur in DL scheduling, but there is an advantage of being able to enhance DL performance through pre-compensation for Doppler shift.

.And/or, more specifically, the CSI report for the proposed method of the first embodiment/second embodiment has the same priority as L1-RSRP/L1-SINR, and/or L1-RSRP/L1-SINR may have a higher priority in terms of the CSI parameter.

In this case, the CSI report for the proposed method of the first embodiment/second embodiment may have a higher priority than the general CSI.

For example, the following priorities may be configured/indicated/defined/promised/assumed.

PUCCH carrying Doppler shift report (e.g., proposed methods of the first and second embodiments) = PUCCH carrying only (low) L1-RSRP/L1-SINR report(s) > PUCCH carrying only (low) CSI report(s) and/or PUCCH carrying Doppler shift report (e.g., the proposed methods of the first and second embodiments) > PUCCH carrying only (low) L1-RSRP/L1-SINR report(s) > PUCCH carrying only (low) CSI report(s)

### Fourth Embodiment

In the embodiment, a method of reporting for each (Rx/Tx) panel/(Rx/Tx) beam of the UE/BS for the CSI reporting based on the first/second/third embodiment will be described.

According to the first/second/third embodiment, when reporting the Doppler shift value/information corresponding to the specific TRS/SSB (i.e., TRP) based on the CSI reporting, and/or reporting the offset value/information between the Doppler shift values for different TRSs/SSBs (i.e., TRPs), the UE may report the Doppler shift value/information and/or the offset value/information between the Doppler shift values to the BS for each receiving panel/beam. For example, the UE may quantize different values/information for each receiving panel/beam and report each of the different values/information to the BS.

When the UE has multiple receiving panels/beams, different Doppler shifts (and/or frequency offsets) may be observed for each panel/beam for the same DL Rs/channel/signal. In this case, a method of reporting the observed Doppler shift (and/or frequency offset) value for each panel/beam to the BS may be applied in order to report an accurate value to the BS. However, in this case, there may be a disadvantage that the CSI reporting overhead of the UE may increase, and in order to supplement this, a method of reporting a single reporting value obtained by a scheme such as a weighted sum for a plurality of reporting values corresponding to different panels/beams may be applied. In this case, the value of the weight may be defined as a fixed rule, or a corresponding value may be separately configured in the UE.

In the proposed method, the receiving panel/beam of the UE is mainly described, but in order to apply the proposed method, both Rx/Tx panels/beams of the UE/BS may be considered.

Although the panel/beam is mainly with respect to the unit capable of reporting the Doppler shift-related value/information in the proposed method, the operation may also be applied by the unit of the panel/beam and a specific resource/resource group. For example, when reporting the value/information related to the Doppler shift, panel ID/beam ID/resource ID/resource group ID related to the reported value may be reported together. Alternatively, when the IDs are not explicitly reported together, a plurality of Doppler shift values may be reported for the same DL RS. And/or, a weighted sum of report values corresponding to the ID may be reported. In this case, the value of the weight may be defined as a fixed rule, or a corresponding value may be separately configured in the UE.

**Fifth Embodiment**

In the embodiment, a method of defining the CSI computation time for reporting the DL Doppler shift value/information will be described.

Based on the current standard, an operation for performing separate CSI reporting by the UE is not defined for the TRS. That is, the UE only performs measurement using the TRS and does not separately report a measurement result. However, since the UE may estimate the DL Doppler shift based on the TRS, CSI reporting for a specific TRS should be supported in order to report the DL Doppler shift to the BS. In addition, based on the current standard, only a BM-related (i.e., L1-RSRP/SINR) CSI reporting operation is defined for the SSB. However, since the UE may also estimate the DL Doppler shift based on the SSB, a DL Doppler shift reporting operation based on a specific SSB may be considered together.

The embodiment proposes a method of defining the CSI computation time (for CSI reporting) for reporting the DL Doppler shift value/information based on the necessities and problems.

The methods described below are only distinguished for convenience of description, and it goes without saying that a configuration of any method may be replaced with a configuration of another method, or applied in combination with each other.

**(Method 5-1)** A (Z, Z') value of CSI reporting for reporting DL Doppler shift value/information may adopt (Z1, Z1') of CSI computation delay requirement 1 (e.g., Table 9) corresponding to very fast feedback. At this time, only one CPU may still be used.

**(Method 5-2)** A (Z, Z') value of CSI reporting for reporting DL Doppler shift value/information may adopt (Z1, Z1') of CSI computation delay requirement 2 (e.g., Table 10) corresponding to fast feedback.

**(Method 5-3)** A (Z, Z') value of CSI reporting for reporting DL Doppler shift value/information may adopt (Z2, Z2') of CSI computation delay requirement 2 (e.g., Table 10).

**(Method 5-4)** For the (Z, Z') value of CSI reporting for reporting the DL Doppler shift value/information, the BS may configure/indicate, to the UE, (Z1, Z1') requirement 1/2 or (Z2, Z2') requirement 2 the L1/L2 signaling. For example, the BS may configure/indicate, to the UE, whether to use (Z1, Z1') requirement 1/2 or (Z2, Z2') requirement 2 as the (Z, Z') value of CSI reporting for reporting the DL Doppler shift value/information through the L1/L2 signaling. And/or, a UE capability of the UE for this may be defined. That is, the UE may report information on (Z, Z') values of CSI reporting that may be supported thereby to the BS through the UE capability.

Hereinafter, in UE/BS operations to be described with reference to FIGS. 15 to 16, the BS may be a general term for an object that transmits and receives data to and from the UE. For example, the BS may be a concept including one or more transmission points (TPs), one or more transmission and reception points (TRPs), and the like. Further, the TP and/or the TRP may include a panel, a transmission and reception unit, and the like of the BS. In addition, "TRP" may be replaced and applied as an expression such as a panel, an antenna array, a cell (e.g., macro cell/small cell/pico cell, etc.), a TP (transmission point), a base station (base station, gNB, etc.), etc.

As described above, the TRPs may be distinguished according to information (e.g., index, ID) on the CORESET group (or CORESET pool). As an example, when one UE is configured to transmit/receive with multiple TRPs (or cells), this may mean that multiple CORESET groups (or CORESET pools) are configured for one UE. The configuration of such a CORESET group (or CORESET pool) may be performed through higher layer signaling (e.g., RRC signaling, etc.).

FIG. 15 is a flowchart for describing an operation method of a UE proposed in the present disclosure.

Referring to FIG. 15, first, the UE (100/200 of FIGS. 17 to 21) may receive CSI-related configuration information from the BS in step S1501. And/or, the CSI-related configuration information may include CSI report configuration-related information (e.g., CSI-ReportConfig of Table 6) and/or CSI resource configuration-related information (e.g., CSI-ResourceConfig). And/or, the CSI report configuration-related information may include usage information for a Doppler shift. And/or, the CSI resource configuration-related information may include information about at least one CSI resource set corresponding to at least one downlink signal.

For example, the reportQuantity parameter (e.g., usage information) of CSI report configuration related information (e.g., CSI-ReportConfig in Table 6) may be configured to a value indicating a report on a Doppler shift-related value.

For example, the CSI resource setting-related information may be CSI resource setting-related information associated with the CSI report configuration-related information. That is, the resourcesForChannelMeasurement, nzp-CSI-RS-ResourcesForInterference, or nzp-CSI-RS-ResourcesForInterference parameter of the CSI reporting setting-related information (e.g., CSI-ReportConfig in Table 6) may be configured as an identifier (e.g., CSI-ResourceConfigId) of the CSI resource setting-related information.

For example, the BS may include one or more BSs or one or more TRPs. As an example, the BS may include at least one of the first BS 11a and/or the second BS 11b of FIG. 11. As another example, the BS may include at least one of TRP1 and/or TRP2 of FIG. 10 or FIG. 14. For example, when the BS includes multiple BSs or multiple TRPs, the CSI-related configuration information may be received from one BS among the multiple BSs or one TRP among the multiple TRPs.

And/or, the CSI related operation/TRS/CSI computation time described with reference to FIGS. 8 to 9 may be referred to regarding the proposed method of FIG. 15.

For example, the operation of the UE which receives the CSI-related configuration information in step S 1501 may be implemented by the devices of FIGS. 17 to 21. For example, referring to FIG. 18 , one or more processors 102/202 may control one or more memories 104/204 and/or one or more transceivers 106/206 to receive the CSI-related configuration information.

And/or, the UE (100/200 of FIGS. 17 to 21) may receive a downlink signal from the BS based on the CSI-related configuration information in step S1502.

For example, the downlink signal may be a tracking reference signal (TRS) or a synchronization block (SSB). For example, at least one downlink signal may be received in the at least one CSI resource set/at least one CSI resource included in the at least one CSI resource set.

For example, the TRS may be received in at least one CSI resource included in a CSI resource set configured as trs-Info = 'ON'/a CSI resource set configured as trs-Info = 'ON'. The description of the TRS of FIG. 9 may be referred to regarding the TRS of FIG. 15.

For example, the downlink signal may be received from one or more BSs or one or more TRPs. As an example, the UE may receive the downlink signal from each of the first BS 11a and the second BS 11b of FIG. 11. As another example, the UE may receive the downlink signal from each of TRP1 and TRP2 of FIG. 10 or FIG. 14.

For example, the operation of the UE which receives the downlink signal in step S 1502 may be implemented by the devices of FIGS. 17 to 21. For example, referring to FIG. 18 , one or more processors 102/202 may control one or more memories 104/204 and/or one or more transceivers 106/206 to receive at least one downlink signal.

And/or, the UE (100/200 of FIGS. 17 to 21) may determine at least one Doppler shift-related value based on at least one downlink signal in step S 1503. Here, the Doppler shift-related value may be a Doppler shift value, a normalized Doppler shift value, an offset value of the Doppler shift values, and/or an offset value of the normalized Doppler shift values (see Methods 1-1 to 1-3).

For example, the UE may receive the downlink signal from TRP1/TRP2 of FIG. 10 or FIG. 14 and determine a Doppler shift-related value based on at least one downlink signal received from TRP1/TRP2.

For example, the operation of the UE which receives at least one Doppler shift-related value in step S1503 may be implemented by the devices of FIGS. 17 to 21. For example, referring to FIG. 18 , one or more processors 102/202 may control one or more memories 104/204 and/or one or more transceivers 106/206 to determine transmit at least one Doppler shift-related value.

And/or, the UE (100/200 of FIGS. 17 to 21) may transmit, to the BS, CSI including at least one Doppler shift-related value in step S1504.

For example, at least one Doppler shift-related value may be a Doppler shift value of at least one downlink signal (see Method 1-1).

For example, at least one Doppler shift-related value may include a Doppler shift value normalized based on a subcarrier spacing corresponding to a downlink signal (e.g., TRS/SSB) (see Method 1-2). And/or, a range of the normalized Doppler shift value may be determined based on at least one of a carrier frequency, a numerology, and/or a maximum velocity (see Method 1-3).

And/or, CSI resource setting related information may include one CSI resource set. And/or, the UE may receive, from the BS, information on a correspondence relationship between CSI resource sets (e.g., Table 21). And/or, another CSI resource set (e.g., a CSI resource set mapped to/corresponding to one CSI resource set) may be determined based on the correspondence relationship, and at least one Doppler shift-related value may be an offset value between a Doppler shift value of the downlink signal corresponding to one CSI resource set and a Doppler shift value of the downlink signal corresponding to another CSI resource set (see Method 2-1-1).

And/or, CSI resource setting related information may include one CSI resource set. And/or, the UE may receive information on a reference downlink signal from the BS. And/or, at least one Doppler shift-related value may be an offset value between the Doppler shift value of the downlink signal corresponding to one CSI resource set and the Doppler shift value of the reference downlink signal (see Method 2-1-2).

And/or, the CSI resource configuration related information may include two CSI resource sets. And/or, the at least one Doppler shift-related value may be the offset value between the Doppler shift value of the downlink signal corresponding to one of the two CSI resource sets and the Doppler shift value of the downlink signal corresponding to the other one of the two CSI resource sets (see Method 2-2).

And/or, the CSI resource configuration related information may include a plurality of CSI resource sets. And/or, the UE may receive, from the BS, information for two CSI resource sets among the plurality of CSI resource sets. And/or, the at least one Doppler shift-related value may be the offset value between the Doppler shift value of the downlink signal corresponding to one of the two CSI resource sets and the Doppler shift value of the downlink signal corresponding to the other one of the two CSI resource sets.

And/or, the CSI including the at least one Doppler shift-related value may have a higher priority than CSI constituted by at least one of a channel quality indicator (CQI), a precoding matrix indicator (PMI), a channel state information-reference signal (CSI-RS) resource indicator (CRI), a synchronization signal/physical broadcast channel block (SS/PBCH block) resource indicator (SSBRI), a layer indicator (LI), a rank indicator (RI), and/or a layer 1-reference signal received power (L1-RSRP). For example, when CSI including the Doppler shift value overlaps with CSI including only L1-RSRP on a time/frequency resource, the CSI including the Doppler shift value may be transmitted.

In addition, the third embodiment may be referred to for a more specific operation of the priority of the CSI including at least one Doppler shift value and/or an operation capable of replacing/combining the operation.

the at least one Doppler shift-related value includes a Doppler shift value or an offset value of Doppler shift values for each receiving panel or each receiving beam. In addition, the fourth embodiment may be referred to for a more specific operation of reporting for each receiving panel/receiving beam and/or an operation capable of replacing/combining the operation.

For example, after receiving at least one downlink signal from TRP1/TRP2 of FIG. 10 or FIG. 14 and determining at least one Doppler shift-related value based on the downlink signal received from TRP1/TRP2, the CSI including at least one Doppler shift-related value may be transmitted to TRP1/TRP2. At least one Doppler shift-related value transmitted to TRP1 and TRP2 may be the same or different.

For example, the operation of the UE which transmits the CSI in step S1504 may be implemented by the devices of FIGS. 17 to 21. For example, referring to FIG. 18 , one or more processors 102/202 may control one or more memories 104/204 and/or one or more transceivers 106/206 to transmit the CSI.

Since the operation of the UE described with reference to FIG. 15 is the same as the operation of the UE described with reference to FIGS. 1 to 14 (e.g., the first to fifth embodiments), other detailed descriptions are omitted.

The signaling and operation may be implemented by the devices (e.g., FIGS. 17 to 21) to be described below. For example, the signaling and operation may be processed by one or more processors of FIGS. 17 to 21, and the signaling and operation may be stored in the memory in the form of an instruction/program (e.g., instruction or executable code) for driving at least one processor of FIGS. 17 to 21.

For example, a processing apparatus configured to control a UE to transmit channel state information (CSI) in a wireless communication system may include: at least one processor; and at least one memory operatively connected to the at least one processor and storing instructions for performing operations based on being executed by the at least one processor, and the operations may include receiving Channel State Information (CSI)-related configuration information from a BS, in which the CSI-related configuration information includes CSI report configuration-related information and/or CSI resource configuration-related information, the CSI report configuration-related information includes usage information for a Doppler shift, and the CSI resource configuration-related information includes information about at least one CSI resource set corresponding to at least one downlink signal; receiving, from the BS, the at least one downlink signal based on the CSI-related configuration information; determining at least one Doppler shift-related value based on the at least one downlink signal; and transmitting CSI including at least one Doppler shift-related value to the BS.

As another example, in a computer-readable storage medium storing at least one instruction which, when executed by at least one processor, causes the at least one processor to control operations, the operations may include: receiving Channel State Information (CSI)-related configuration information from a base station, wherein the CSI-related configuration information includes CSI report configuration-related information and/or CSI resource configuration-related information, the CSI report configuration-related information includes usage information for a Doppler shift, and the CSI resource configuration-related information includes information about at least one CSI resource set corresponding to at least one downlink signal; receiving, from the base station, the at least one downlink signal based on the CSI-related configuration information; determining at least one Doppler shift-related value based on the at least one downlink signal; and transmitting CSI including at least one Doppler shift-related value to the base station.

FIG. 16 is a flowchart for describing an operation method of a BS proposed in the present disclosure.

Referring to FIG. 16, first, the BS (100/200 of FIGS. 17 to 21) may transmit the CSI-related configuration information to the UE in step S 1601. And/or, the CSI-related configuration information may include CSI report configuration-related information (e.g., CSI-ReportConfig of Table 6) and/or CSI resource configuration-related information (e.g., CSI-ResourceConfig). And/or, the CSI report configuration-related information may include usage information for a Doppler shift. And/or, the CSI resource configuration-related information may include information about at least one CSI resource set corresponding to at least one downlink signal.

For example, the reportQuantity parameter (e.g., usage information) of CSI report configuration related information (e.g., CSI-ReportConfig in Table 6) may be configured to a value indicating a report on a Doppler shift-related value.

For example, the CSI resource setting-related information may be CSI resource setting-related information associated with the CSI report configuration-related information. That is, the resourcesForChannelMeasurement, nzp-CSI-RS-ResourcesForInterference, or nzp-CSI-RS-ResourcesForInterference parameter of the CSI reporting setting-related information (e.g., CSI-ReportConfig in Table 6) may be configured as an identifier (e.g., CSI-ResourceConfigId) of the CSI resource setting-related information.

For example, the BS may include one or more BSs or one or more TRPs. As an example, the BS may include at least one of the first BS 11a and/or the second BS 11b of FIG. 11. As another example, the BS may include at least one of TRP1 and/or TRP2 of FIG. 10 or FIG. 14. For example, when the BS includes multiple BSs or multiple TRPs, the CSI-related configuration information may be received from one BS among the multiple BSs or one TRP among the multiple TRPs.

And/or, the CSI related operation/TRS/CSI computation time described with reference to FIGS. 8 to 9 may be referred to regarding the proposed method of FIG. 15.

For example, the operation of the BS which transmits the CSI-related configuration information in step S 1601 may be implemented by the devices of FIGS. 17 to 21. For example, referring to FIG. 18 , one or more processors 102/202 may control one or more memories 104/204 and/or one or more transceivers 106/206 to transmit the CSI-related configuration information.

And/or, the BS (100/200 of FIGS. 17 to 21) may transmit at least one downlink signal to the UE based on the CSI-related configuration information in step S 1602.

For example, the downlink signal may be a tracking reference signal (TRS) or a synchronization block (SSB). For example, at least one downlink signal may be transmitted in the at least one CSI resource set/at least one CSI resource included in the at least one CSI resource set.

For example, the TRS may be received in at least one CSI resource included in a CSI resource set configured as trs-Info = 'ON'/a CSI resource set configured as trs-Info = 'ON'. The description of the TRS of FIG. 9 may be referred to regarding the TRS of FIG. 15.

For example, the downlink signal may be received from one or more BSs or one or more TRPs. As an example, the UE may receive the downlink signal from each of the first BS 11a and the second BS 11b of FIG. 11. As another example, the UE may receive the downlink signal from each of TRP1 and TRP2 of FIG. 10 or FIG. 14.

And/or, the UE may determine at least one Doppler shift-related value based on the at least one downlink signal. Here, the Doppler shift-related value may be a Doppler shift value, a normalized Doppler shift value, an offset value of the Doppler shift values, and/or an offset value of the normalized Doppler shift values (see Methods 1-1 to 1-3).

For example, the UE may receive the downlink signal from TRP1/TRP2 of FIG. 10 or FIG. 14 and determine a Doppler shift-related value based on at least one downlink signal received from TRP1/TRP2.

For example, the operation of the BS which transmits at least one downlink signal in step S1602 may be implemented by the devices of FIGS. 17 to 21. For example, referring to FIG. 18 , one or more processors 102/202 may control one or more memories 104/204 and/or one or more transceivers 106/206 to transmit at least one downlink signal.

And/or, the BS (100/200 of FIGS. 17 to 21) may receive, from the UE, CSI including at least one Doppler shift-related value in step S 1603.

For example, at least one Doppler shift-related value may be a Doppler shift value of at least one downlink signal (see Method 1-1).

For example, at least one Doppler shift-related value may include a Doppler shift value normalized based on a subcarrier spacing corresponding to a downlink signal (e.g., TRS/SSB) (see Method 1-2). And/or, a range of the normalized Doppler shift value may be determined based on at least one of a carrier frequency, a numerology, and/or a maximum velocity (see Method 1-3).

And/or, CSI resource configuration-related information may include one CSI resource set. And/or, the UE may receive, from the BS, information on a correspondence relationship between CSI resource sets (e.g., Table 21). And/or, another CSI resource set (e.g., a CSI resource set mapped to/corresponding to one CSI resource set) may be determined based on the correspondence relationship, and at least one Doppler shift-related value may be an offset value between a Doppler shift value of the downlink signal corresponding to one CSI resource set and a Doppler shift value of the donwlink signal corresponding to another CSI resource set (see Method 2-1-1).

And/or, CSI resource configuration-related information may include one CSI resource set. And/or, the UE may receive, from the BS, information on a reference downlink signal. And/or, at least one Doppler shift-related value may be an offset value between the Doppler shift value of the downlink signal corresponding to the one CSI resource set and the Doppler shift value of the reference downlink signal (see Method 2-1-2).

And/or, the CSI resource configuration-related information may include two CSI resource sets. And/or, the at least one Doppler shift-related value may be the offset value between the Doppler shift value of the downlink signal corresponding to one of the two CSI resource sets and the Doppler shift value of the downlink signal corresponding to the other one of the two CSI resource sets (see Method 2-2).

And/or, the CSI resource configuration-related information may include a plurality of CSI resource sets. And/or, the UE may receive, from the BS, information for two CSI resource sets among the plurality of CSI resource sets. And/or, the at least one Doppler shift-related value may be the offset value between the Doppler shift value of the downlink signal corresponding to one of the two CSI resource sets and the Doppler shift value of the downlink signal corresponding to the other one of the two CSI resource sets (see Method 2-3).

And/or, the CSI including the at least one Doppler shift-related value may have a higher priority than CSI constituted by at least one of a channel quality indicator (CQI), a precoding matrix indicator (PMI), a channel state information-reference signal (CSI-RS) resource indicator (CRI), a synchronization signal/physical broadcast channel block (SS/PBCH block) resource indicator (SSBRI), a layer indicator (LI), a rank indicator (RI), and/or a layer 1-reference signal received power (L1-RSRP). For example, when CSI including the Doppler shift value overlaps with CSI including only L1-RSRP on a time/frequency resource, the CSI including the Doppler shift value may be transmitted.

In addition, the third embodiment may be referred to for a more specific operation of the priority of the CSI including at least one Doppler shift value and/or an operation capable of replacing/combining the operation.

And/or, the at least one Doppler shift-related value may include a Doppler shift value or an offset value of Doppler shift values for each receiving panel or each receiving beam. In addition, the fourth embodiment may be referred to for a more specific operation of reporting for each receiving panel/receiving beam and/or an operation capable of replacing/combining the operation.

For example, after receiving at least one downlink signal from TRP1/TRP2 of FIG. 10 or FIG. 14 and determining at least one Doppler shift-related value based on the downlink signal received from TRP1/TRP2, the CSI including at least one Doppler shift-related value may be transmitted to TRP1/TRP2. At least one Doppler shift-related value transmitted to TRP1 and TRP2 may be the same or different.

For example, the operation of the base station which receives the CSI in step S1603 may be implemented by the devices of FIGS. 17 to 21. For example, referring to FIG. 18 , one or more processors 102/202 may control one or more memories 104/204 and/or one or more transceivers 106/206 to receive the CSI.

Since the operation of the BS described with reference to FIG. 16 is the same as the operation of the UE described with reference to FIGS. 1 to 15 (e.g., the first to fifth embodiments), other detailed descriptions are omitted.

The signaling and operation may be implemented by the devices (e.g., FIGS. 17 to 21) to be described below. For example, the signaling and operation may be processed by one or more processors of FIGS. 17 to 21, and the signaling and operation may be stored in the memory in the form of an instruction/program (e.g., instruction or executable code) for driving at least one processor of FIGS. 17 to 21.

For example, a processing apparatus configured to control a BS to receive channel state information (CSI) in a wireless communication system may include: at least one processor; and at least one memory operatively connected to the at least one processor and storing instructions for performing operations based on being executed by the at least one processor, and the operations may include transmitting Channel State Information (CSI)-related configuration information to a UE, in which the CSI-related configuration information includes CSI report configuration-related information and/or CSI resource configuration-related information, the CSI report configuration-related information includes usage information for a Doppler shift, and the CSI resource configuration-related information includes information about at least one CSI resource set corresponding to at least one downlink signal; transmitting, to the UE, the at least one downlink signal based on the CSI-related configuration information; determining at least one Doppler shift-related value based on the at least one downlink signal; and receiving CSI including at least one Doppler shift-related value from the UE.

As another example, in a computer-readable storage medium storing at least one instruction which, when executed by at least one processor, causes the at least one processor to control operations, the operations may include: transmitting Channel State Information (CSI)-related configuration information to a UE, in which the CSI-related configuration information includes CSI report configuration-related information and/or CSI resource configuration-related information, the CSI report configuration-related information includes usage information for a Doppler shift, and the CSI resource configuration-related information includes information about at least one CSI resource set corresponding to at least one downlink signal; transmitting, to the LTE, the at least one downlink signal based on the CSI-related configuration information; determining at least one Doppler shift-related value based on the at least one downlink signal; and receiving CSI including at least one Doppler shift-related value from the UE.

## Communication system applied to the present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

FIG. 17 illustrates a communication system applied to the present disclosure.

Referring to FIG. 17, a communication system applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. Relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Devices applicable to the present disclosure

FIG. 18 illustrates wireless devices applicable to the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 1010x and the BS 200} and/or {the wireless device 1010x and the wireless device 1010x} of FIG. 18:

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include at least one processor 202 and at least one memory 204 and additionally further include at least one transceiver 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 206 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. From RF band signals into baseband signals in order to process received user data, control information, radio signals/channels, etc. Using the one or more processors 102 and 202. The one or more transceivers 106 and 206 may convert the user data, control information, radio signals/channels, etc. Processed using the one or more processors 102 and 202 from the base band signals into the RF band signals. To this end, the one or more transceivers 106 and 206 may include (analog) oscillators and/or filters.

## Example of a wireless device applied to the present disclosure

FIG. 19 illustrates another example of a wireless device applied to the present disclosure. The wireless device may be implemented in various forms according to a usecase/service.

Referring to FIG. 19, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 104 of FIG. 16: For example, the transceiver(s) 114 may include the one or more transceivers 106 and 106 and/or the one or more antennas 108 and 108 of FIG. 18: The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110).

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 15), the handheld device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 100, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 100 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

EP 4 213 404 A1

**Portable Device Example to Which Disclosure is Applied**

FIG. 20 illustrates a portable device applied to the present disclosure. The portable device may include a smart phone, a smart pad, a wearable device (e.g., a smart watch, a smart glass), and a portable computer (e.g., a notebook, etc.). The portable device may be referred to as a Mobile Station (MS), a user terminal (UT), a Mobile Subscriber Station (MSS), a Subscriber Station (SS), an Advanced Mobile Station (AMS), or a Wireless terminal (WT).

Referring to FIG. 20, a portable device 1010 may include an antenna unit 108, a communication unit 110, a control unit 120, a memory unit 130, a power supply unit 140a, an interface unit 140b, and an input/output unit 140c. The antenna unit 108 may be configured as a part of the communication unit 110. The blocks 110 to 130/140a to 140c correspond to the blocks 110 to 130/140 of FIG. 19, respectively.

The communication unit 110 may transmit/receive a signal (e.g., data, a control signal, etc.) to/from another wireless device and eNBs. The control unit 120 may perform various operations by controlling components of the portable device 1010. The control unit 120 may include an Application Processor (AP). The memory unit 130 may store data/parameters/programs/codes/instructions required for driving the portable device 1010. Further, the memory unit 130 may store input/output data/information, etc. The power supply unit 140a may supply power to the portable device 1010 and include a wired/wireless charging circuit, a battery, and the like. The interface unit 140b may support a connection between the portable device 1010 and another external device. The interface unit 140b may include various ports (e.g., an audio input/output port, a video input/output port) for the connection with the external device. The input/output unit 140c may receive or output a video information/signal, an audio information/signal, data, and/or information input from a user. The input/output unit 140c may include a camera, a microphone, a user input unit, a display unit 140d, a speaker, and/or a haptic module.

As one example, in the case of data communication, the input/output unit 140c may acquire information/signal (e.g., touch, text, voice, image, and video) input from the user and the acquired information/signal may be stored in the memory unit 130. The communication unit 110 may transform the information/signal stored in the memory into the radio signal and directly transmit the radio signal to another wireless device or transmit the radio signal to the eNB. Further, the communication unit 110 may receive the radio signal from another wireless device or eNB and then reconstruct the received radio signal into original information/signal. The reconstructed information/signal may be stored in the memory unit 130 and then output in various forms (e.g., text, voice, image, video, haptic) through the input/output unit 140c.

FIG. 21 exemplifies a vehicle or an autonomous driving vehicle to which the present disclosure is applied. The vehicle or autonomous driving vehicle may be implemented as a mobile robot, vehicle, train, manned/unmanned aerial vehicle (AV), ship, or the like.

Referring to FIG. 21, the vehicle or autonomous driving vehicle 100 may include an antenna unit 108, a communication unit 110, a control unit 120, a driving unit 140a, a power supply unit 140b, and a sensor unit 140c, and an autonomous driving unit 140d. The antenna unit 108 may be configured as a part of the communication unit 110. Blocks 110/130/140a-140d correspond to blocks 110/130/140 of FIG. 20, respectively.

The communication unit 110 may transmit and receive signals (e.g. data, control signals, etc.) with external devices such as other vehicles, base stations (e.g. base stations, road side units, etc.), servers, and the like. The control unit 120 may control elements of the vehicle or the autonomous driving vehicle 100 to perform various operations. The control unit 120 may include an Electronic Control Unit (ECU). The driving unit 140a may cause the vehicle or the autonomous driving vehicle 100 to run on the ground. The driving unit 140a may include an engine, a motor, a power train, a wheel, a brake, a steering device, and the like. The power supply unit 140b may supply power to the vehicle or the autonomous driving vehicle 100, and may include a wired/wireless charging circuit, a battery, and the like. The sensor unit 140c may obtain a vehicle state, surrounding environment information, user information, and the like. The sensor unit 140c may include an inertial measurement unit (IMU) sensor, a collision sensor, a wheel sensor, a speed sensor, an inclination sensor, a weight sensor, a heading sensor, a position module, and a vehicle forward/reverse sensor, a battery sensor, a fuel sensor, a tire sensor, a steering sensor, a temperature sensor, a humidity sensor, an ultrasonic sensor, an illuminance sensor, a pedal position sensor, and the like. The autonomous driving unit 140d may implement a technology for maintaining a driving lane, a technology for automatically adjusting speed such as adaptive cruise control, a technology for automatically driving along a predetermined route, and a technology for automatically setting a route and driving when a destination is set.

As an example, the communication unit 110 may receive map data, traffic information data, and the like from an external server. The autonomous driving unit 140d may generate an autonomous driving route and a driving plan based on the acquired data. The control unit 120 may control the driving unit 140a so that the vehicle or the autonomous driving vehicle 100 moves along the autonomous driving route according to the driving plan (e.g. speed/direction control). During the autonomous driving, the communication unit 110 may non/periodically acquire the latest traffic information data from the external server, and may acquire surrounding traffic information data from surrounding vehicles. Also, during the autonomous driving, the sensor unit 140c may acquire a vehicle state and surrounding environment information. The autonomous driving unit 140d may update the autonomous driving route and driving plan based on the newly acquired data/information. The communication unit 110 may transmit information about a vehicle location, an autonomous driving route, a driving plan, and the like to the external server. The external server may predict traffic information data in advance using AI technology or the like based on information collected from the vehicle or autonomous driving vehicles, and may provide the predicted traffic information data to the vehicle or autonomous driving vehicles.

The wireless communication technology implemented in the wireless devices 100 and 200 of the present disclosure may include Narrowband Internet of Things for low power communication as well as LTE, NR, and 6G. At this time, for example, NB-IoT technology may be an example of LPWAN (Low Power Wide Area Network) technology, and may be implemented in standards such as LTE Cat NB 1 and / or LTE Cat Nb2, and is not limited the name. Additionally or alternatively, the wireless communication technology implemented in the wireless devices 100 and 200 of the present specification may perform communication based on LTE-M technology. At this time, as an example, LTE-M technology may be an example of LPWAN technology, and may be called various names such as eMTC (enhanced machine type communication). For example, the LTE-M technology may be implemented as at least any one of various standards such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the name. Additionally or alternatively, the wireless communication technology implemented in the wireless device (XXX, YYY) of the present disclosure may include at least one of ZigBee, Bluetooth, and Low Power Wide Area Network (LPWAN) considering low power communication, and is not limited to the name. As an example, ZigBee technology may generate personal area networks (PANs) related to small/lowpower digital communication based on various standards such as IEEE 802.15.4, and may be called various names.

The embodiments described above are implemented by combinations of components and features of the present disclosure in predetermined forms. Each component or feature should be considered selectively unless specified separately. Each component or feature may be carried out without being combined with another component or feature. Moreover, some components and/or features are combined with each other and may implement embodiments of the present disclosure. The order of operations described in embodiments of the present disclosure may be changed. Some components or features of one embodiment may be included in another embodiment, or may be replaced by corresponding components or features of another embodiment. It is apparent to constitute an embodiment by combining claims that are not explicitly cited in the claims or to be included as a new claim by amendment after filing.

Embodiments of the present disclosure may be implemented by various means, for example, hardware, firmware, software, or combinations thereof. When embodiments are implemented by hardware, one embodiment of the present disclosure may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like.

When embodiments are implemented by firmware or software, one embodiment of the present disclosure may be implemented by modules, procedures, functions, etc. performing functions or operations described above. Software code may be stored in a memory and may be driven by a processor. The memory is provided inside or outside the processor and may exchange data with the processor by various well-known means.

It is apparent to those skilled in the art that the present disclosure may be embodied in other specific forms without departing from essential features of the present disclosure. Accordingly, the aforementioned detailed description should not be construed as limiting in all aspects and should be considered as illustrative. The scope of the present disclosure should be determined by rational construing of the appended claims, and all modifications within an equivalent scope of the present disclosure are included in the scope of the present disclosure.

[Industrial Applicability]

Although a scheme of transmitting and receiving power information in the wireless communication system of the present disclosure has been described with reference to an example applied to a 3GPP LTE/LTE-A system or a 5G system (New RAT system), the scheme may be applied to various wireless communication systems including Beyond 5G, 6G, Beyond 6G, etc., in addition to the 3GPP LTE/LTE-A system or 5G system.

**Claims**

1.  A method of transmitting channel state information (CSI) in a wireless communication system, which is performed by a user equipment (UE), the method comprising:

    receiving Channel State Information (CSI)-related configuration information from a base station (BS), wherein the CSI-related configuration information includes CSI report configuration-related information and/or CSI resource configuration-related information, the CSI report configuration-related information includes usage information for a Doppler shift, and the CSI resource configuration-related information includes information about at least one CSI resource set corresponding to at least one downlink signal;

receiving, from the BS, the at least one downlink signal based on the CSI-related configuration information;

determining at least one Doppler shift related value based on the at least one downlink signal; and

transmitting CSI including at least one Doppler shift-related value to the BS.

**2.** The method of claim 1, wherein the downlink signal is a tracking reference signal (TRS) or a synchronization block (SSB).

**3.** The method of claim 2, wherein the at least one Doppler shift related value includes a Doppler shift value normalized based on a subcarrier spacing corresponding to the TRS or the SSB.

**4.** The method of claim 3, wherein a range of the normalized Doppler shift value is determined based on at least one of a carrier frequency, a numerology, and/or a maximum velocity.

**5.** The method of claim 1, wherein the CSI resource configuration related information includes one CSI resource set.

**6.** The method of claim 5, further comprising:

receiving information on a correspondence relationship between CSI resource sets from the BS,

wherein the other CSI resource set is determined based on the correspondence relationship, and

wherein the at least one Doppler shift related value is an offset value between a Doppler shift value of a downlink signal corresponding to the one CSI resource set and a Doppler shift value of a downlink signal corresponding to the other CSI resource set.

**7.** The method of claim 5, further comprising:

receiving information on a reference downlink signal from the BS,

wherein the at least one Doppler shift related value is an offset value between the Doppler shift value of the downlink signal corresponding to the one CSI resource set and the Doppler shift value of the reference downlink signal.

**8.** The method of claim 1, wherein the CSI resource configuration related information includes two CSI resource sets, and

wherein the at least one Doppler shift related value is an offset value between a Doppler shift value of a downlink signal corresponding to one of the two CSI resource sets and a Doppler shift value of a downlink signal corresponding to the other one of the two CSI resource sets.

**9.** The method of claim 1, further comprising:

wherein the CSI resource configuration related information includes a plurality of CSI resource sets,

receiving, from the BS, information for two CSI resource sets among the plurality of CSI resource sets,

wherein the at least one Doppler shift related value is the offset value between the Doppler shift value of the downlink signal corresponding to one of the two CSI resource sets and the Doppler shift value of the downlink signal corresponding to the other one of the two CSI resource sets.

**10.** The method of claim 1, wherein the CSI including the at least one Doppler shift related value has a higher priority than CSI constituted by at least one of a channel quality indicator (CQI), a precoding matrix indicator (PMI), a channel state information-reference signal (CSI-RS) resource indicator (CRI), a synchronization signal/physical broadcast channel block (SS/PBCH block) resource indicator (SSBRI), a layer indicator (LI), a rank indicator (RI), and/or a layer 1-reference signal received power (L1-RSRP).

**11.** The method of claim 1, wherein the at least one Doppler shift related value includes a Doppler shift value or an offset value of Doppler shift values for each receiving panel or each receiving beam.

**12.** A UE configured to transmit channel state information (CSI) in a wireless communication system, the UE comprising:

at least one transceiver;

at least one processor; and
at least one memory operatively connected to the at least one processor and storing instructions for performing operations based on being executed by the at least one processor,
wherein the operations include
receiving Channel State Information (CSI)-related configuration information from a BS, wherein the CSI-related configuration information includes CSI report configuration-related information and/or CSI resource configuration-related information, the CSI report configuration-related information includes usage information for a Doppler shift, and the CSI resource configuration-related information includes information about at least one CSI resource set corresponding to at least one downlink signal;
receiving, from the BS, the at least one downlink signal based on the CSI-related configuration information;
determining at least one doppler shift related value based on the at least one downlink signal; and
transmitting CSI including at least one Doppler shift-related value to the BS.

13. The UE of claim 12, wherein the downlink signal is a tracking reference signal (TRS) or a synchronization block (SSB).

14. The UE of claim 13, wherein the at least one Doppler shift related value includes a Doppler shift value normalized based on a subcarrier spacing corresponding to the TRS or the SSB.

15. The UE of claim 14, wherein a range of the normalized Doppler shift value is determined based on at least one of a carrier frequency, a numerology, and/or a maximum velocity.

16. The UE of claim 12, wherein the CSI resource configuration related information includes two CSI resource sets, and wherein the at least one Doppler shift related value is the offset value between the Doppler shift value of the downlink signal corresponding to one of the two CSI resource sets and the Doppler shift value of the downlink signal corresponding to the other one of the two CSI resource sets.

17. A method of receiving channel state information (CSI) in a wireless communication system, which is performed by a BS, the method comprising:

transmitting Channel State Information (CSI)-related configuration information to a UE, wherein the CSI-related configuration information includes CSI report configuration-related information and/or CSI resource configuration-related information, the CSI report configuration-related information includes usage information for a Doppler shift, and the CSI resource configuration-related information includes information about at least one CSI resource set corresponding to at least one downlink signal;
transmitting, to the UE, the at least one downlink signal based on the CSI-related configuration information, wherein at least one Doppler shift related value is determined based on the at least one downlink signal; and
receiving, from the UE, CSI including the at least one Doppler shift related value.

18. A BS configured to receive channel state information (CSI) in a wireless communication system, the BS comprising:

at least one transceiver;
at least one processor; and
at least one memory operatively connected to the at least one processor and storing instructions for performing operations based on being executed by the at least one processor,
wherein the operations include
transmitting Channel State Information (CSI)-related configuration information to a UE, wherein the CSI-related configuration information includes CSI report configuration-related information and/or CSI resource configuration-related information, the CSI report configuration-related information includes usage information for a Doppler shift, and the CSI resource configuration-related information includes information about at least one CSI resource set corresponding to at least one downlink signal;
transmitting, to the UE, the at least one downlink signal based on the CSI-related configuration information, wherein at least one Doppler shift related value is determined based on the at least one downlink signal; and
receiving, from the UE, CSI including the at least one Doppler shift related value.

19. A processing apparatus configured to control a UE to transmit channel state information (CSI) in a wireless communication system, the processing apparatus comprising:

at least one processor; and

at least one memory operatively connected to the at least one processor and storing instructions for performing operations based on being executed by the at least one processor,

wherein the operations include

receiving Channel State Information (CSI)-related configuration information from a BS, wherein the CSI-related configuration information includes CSI report configuration-related information and/or CSI resource configuration-related information, the CSI report configuration-related information includes usage information for a Doppler shift, and the CSI resource configuration-related information includes information about at least one CSI resource set corresponding to at least one downlink signal;

receiving, from the BS, the at least one downlink signal based on the CSI-related configuration information;

determining at least one doppler shift related value based on the at least one downlink signal; and

transmitting CSI including at least one Doppler shift-related value to the BS.

20. A computer-readable storage medium storing at least one instruction which, when executed by at least one processor, causes the at least one processor to control operations,

wherein the operations include

receiving Channel State Information (CSI)-related configuration information from a BS, wherein the CSI-related configuration information includes CSI report configuration-related information and/or CSI resource configuration-related information, the CSI report configuration-related information includes usage information for a Doppler shift, and the CSI resource configuration-related information includes information about at least one CSI resource set corresponding to at least one downlink signal;

transmitting Channel State Information (CSI)-related configuration information to a UE, wherein the CSI-related configuration information includes CSI report configuration-related information and/or CSI resource configuration-related information, the CSI report configuration-related information includes usage information for a Doppler shift, and the CSI resource configuration-related information includes information about at least one CSI resource set corresponding to at least one downlink signal;

receiving, from the BS, the at least one downlink signal based on the CSI-related configuration information;

determining at least one Doppler shift related value based on the at least one downlink signal; and

transmitting CSI including at least one Doppler shift-related value to the BS.

【FIG. 1】

【FIG. 2】

[FIG. 3]

EP 4 213 404 A1

Radio Frame 10ms

Fixed Size

Subframe 1ms

| 0 | 1 | 2 | 3 | 4 | 5 | 6 | 7 | 8 | 9 |

Subframe ={1, 2, 4} Slots

Slot

| 0 | 1 | 2 | 3 |

Slot={7, 14} Symbols

Size depends on subcarrier spacing

Symbol

| 0 | 1 | 2 | 3 | 4 | 5 | 6 | 7 | 8 | 9 | 10 | 11 | 12 | 13 |

Mini-Slot
(URLLC)

Mini-Slot={2, 4, 7} Symbols - ffs

【FIG. 4】

One subframe

$14 \cdot 2^{\mu}$ OFDM symbols

$k = N_{RB}^{\mu} N_{SC}^{RB} - 1$

Resource block

Resource element
-In case of resource grid, $(k, \bar{l})$
-In case of resource block, $(k, l)$

$N_{RB}^{\mu} N_{SC}^{RB} - 1$ Subcarriers

$N_{SC}^{RB}$ Subcarriers

$k = 0$

$l = 0$

$l = 14 \cdot 2^{\mu} - 1$

【FIG. 5】

【FIG. 6】

Antenna port A⎫
Antenna port B⎭ Numerology X

Antenna port A⎫
Antenna port B⎭ Numerology Y

【FIG. 7】

【FIG. 8】

【FIG. 9】

【FIG. 10】

TRP 1

Layer group #1
for CW #1

TRP 2

Layer group #2
for CW #1

UE1

(a)

TRP 1

Layer group #1
for CW #1

TRP 2

Layer group #2
for CW #2

UE1

(b)

【FIG. 11】

$D_s$

$D_{min}$     11a     eNB

11b     eNB     $D_{min}$

Train     Travelling with speed v

Minimum Doppler shift     Maximum Doppler shift

【FIG. 12】

Cluster   Slot   Leaky cable

Intersection Field distribution

Received Power level

Position

Propagation delay

Position

【FIG. 13】

[FIG. 14]

EP 4 213 404 A1

TRP1

TRP2

TRS1 — Doppler shift $= f_1$
TRS2 — Doppler shift $= f_2$

TRS1 reception @UE: $f_c + f_1$
TRS2 reception @UE: $f_c + f_2$

←Implicit indication, or explicit reporting→

1) Explicit reporting of per-TRP Doppler shift
Alt.1:Separated CSI reportings
  – CSI reportings for TRP1:Doppler shift $f_1$
  – CSI reportings for TRP2:Doppler shift $f_2$
Alt.2:Joint reporting, or single reporting
  – CSI reportings for both TRPs:Doppler shift $f_1$, $f_2$
  – or, Single reporting with gNB/UE assumption:$f_1$ and $f_2 = -f_1$

Pre-compensation @TRP1:
$\Delta f_{pre,1} = -f_1$

PDSCH1 ——→ ←—— PDSCH2

Pre-compensation @TRP2:
$\Delta f_{pre,2} = -f_2$

PDSCH from TRPs is transmitted in SFN manner
PDSCH1 reception @UE: $f_c + f_1 + \Delta f_{pre,1} = f_c$
PDSCH2 reception @UE: $f_c + f_2 + \Delta f_{pre,2} = f_c$

【FIG. 15】

```
                          ( Start )
                              │
                              ▼
┌─────────────────────────────────────────────────────────┐
│  Receive CSI-related configuration information from BS    │──── S1501
└─────────────────────────────────────────────────────────┘
                              │
                              ▼
┌─────────────────────────────────────────────────────────┐
│      Receive at least one downlink signal from BS         │
│      based on CSI-related configuration information        │──── S1502
└─────────────────────────────────────────────────────────┘
                              │
                              ▼
┌─────────────────────────────────────────────────────────┐
│         Select at least one Doppler shift-related          │
│        value based on at least one downlink signal         │──── S1503
└─────────────────────────────────────────────────────────┘
                              │
                              ▼
┌─────────────────────────────────────────────────────────┐
│        Transmit CSI including at least one Doppler         │
│              shift-related value to BS                      │──── S1504
└─────────────────────────────────────────────────────────┘
                              │
                              ▼
                          ( End )
```

【FIG. 16】

```
                          ( Start )
                              │
                              ▼
┌─────────────────────────────────────────────────────────┐
│  Transmit CSI-related configuration information to UE     │──── S1601
└─────────────────────────────────────────────────────────┘
                              │
                              ▼
┌─────────────────────────────────────────────────────────┐
│       Transmit at least one downlink signal to UE         │
│      based on CSI-related configuration information        │──── S1602
└─────────────────────────────────────────────────────────┘
                              │
                              ▼
┌─────────────────────────────────────────────────────────┐
│            Receive CSI including at least one              │
│         Doppler shift related value from UE               │──── S1603
└─────────────────────────────────────────────────────────┘
                              │
                              ▼
                          ( End )
```

【FIG. 17】

【FIG. 18】

【FIG. 19】

Device(100, 200)

| Communication unit(110)<br>(e.g., 5G communication unit) | Control unit(120)<br>(e.g., processor(s)) |
|---|---|
| Communication circuit(112)<br>(e.g., processor(s),memory(s)) | Memory unit(130)<br>(e.g., RAM, storage) |
| Transceiver(s)(114)<br>(e.g., RF unit(s),antenna(s)) | Additional components(140)<br>(e.g., power unit/battery,<br>I/O unit,driving unit,<br>computing unit) |

【FIG. 20】

【FIG. 21】

| Vehicle or autonomous driving Vehicle(100) | | Device (100, 200) |
|---|---|---|
| Communication unit(110) | | Communication unit(210) |
| Control unit(120) | 108  208 | Control unit(220) |
| Memory unit(130) | | Memory unit(230) |
| Driving unit(140a) | | Driving unit(140a) |
| Power supply unit(140b) | | Power supply unit(140b) |
| Sensor unit(140c) | | Sensor unit(140c) |
| Autonomous driving unit (140d) | | Autonomous driving unit (140d) |

<div align="center">

**INTERNATIONAL SEARCH REPORT**

</div>

| International application No. |
|---|
| **PCT/KR2021/013609** |

| **A.** | **CLASSIFICATION OF SUBJECT MATTER** |
|---|---|

**H04B 7/06**(2006.01)i; **H04B 7/0417**(2017.01)i; **H04B 17/318**(2014.01)i; **H04B 17/391**(2014.01)i; **H04W 48/10**(2009.01)i; **H04W 4/42**(2018.01)i; **H04W 16/22**(2009.01)i; **H04J 11/00**(2006.01)i; **H04L 5/00**(2006.01)i; **H04L 27/26**(2006.01)i

According to International Patent Classification (IPC) or to both national classification and IPC

| **B.** | **FIELDS SEARCHED** |
|---|---|

Minimum documentation searched (classification system followed by classification symbols)

H04B 7/06(2006.01); H04L 12/24(2006.01); H04L 27/26(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 채널 상태 정보(channel state information), 도플러 시프트(doppler shift), 보고 (report), 자원(resource), 설정(configuration)

| **C.** | **DOCUMENTS CONSIDERED TO BE RELEVANT** | | |
|---|---|---|---|

| Category* | Citation of document, with indication, where appropriate, of the relevant passages | Relevant to claim No. |
|---|---|---|
| Y | QUALCOMM INCORPORATED. Enhancements on HST-SFN deployment. R1-2006794, 3GPP TSG RAN WG1 #102-e. e-Meeting. 08 August 2020.<br>See sections 3.4-4.2; and figure 4-3. | 1-20 |
| Y | LENOVO et al. Enhancements for HST-SFN deployment. R1-2005925, 3GPP TSG RAN WG1 #102-e. e-Meeting. 08 August 2020.<br>See sections 2 and 4; table 1; and figure 4. | 1-20 |
| A | INTERDIGITAL, INC. Enhanced M-TRP for HST-SFN. R1-2005486, 3GPP TSG RAN WG1 #102-e. e-Meeting. 07 August 2020.<br>See sections 2-3. | 1-20 |
| A | VIVO. Evaluation and discussion on HST-SFN schemes. R1-2005367, 3GPP TSG RAN WG1 #102-e. e-Meeting. 08 August 2020.<br>See sections 2.1-2.4. | 1-20 |
| A | US 2018-0091373 A1 (QUALCOMM INCORPORATED) 29 March 2018 (2018-03-29)<br>See paragraphs [0072]-[0079]; and figure 10. | 1-20 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 January 2022** | **19 January 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/013609**

| Patent document cited in search report | | | Publication date (day/month/year) | Patent family member(s) | | | Publication date (day/month/year) |
|---|---|---|---|---|---|---|---|
| US | 2018-0091373 | A1 | 29 March 2018 | CN | 109792424 | A | 21 May 2019 |
| | | | | CN | 109792424 | B | 24 August 2021 |
| | | | | CN | 113613328 | A | 05 November 2021 |
| | | | | EP | 3520343 | A1 | 07 August 2019 |
| | | | | TW | 201815182 | A | 16 April 2018 |
| | | | | TW | I720242 | B | 01 March 2021 |
| | | | | US | 10715392 | B2 | 14 July 2020 |
| | | | | US | 2020-0322222 | A1 | 08 October 2020 |
| | | | | WO | 2018-063590 | A1 | 05 April 2018 |

Form PCT/ISA/210 (patent family annex) (July 2019)